(19) Europäisches Patentamt
European Patent Office
Office européen des brevets

(11) EP 1 572 764 B1

(12) # FASCICULE DE BREVET EUROPEEN

(45) Date de publication et mention de la délivrance du brevet:
**19.01.2011 Bulletin 2011/03**

(21) Numéro de dépôt: **03769775.2**

(22) Date de dépôt: **06.11.2003**

(51) Int Cl.:
***C08F 220/32*** *(2006.01)*

(86) Numéro de dépôt international:
**PCT/IB2003/005063**

(87) Numéro de publication internationale:
**WO 2004/041882 (21.05.2004 Gazette 2004/21)**

(54) **SUSPENSIONS AQUEUSES DE MATIERES MINERALES BROYEES,FAIBLEMENT CHARGEES IONIQUEMENT ET LEURS UTILISATIONS**

WÄSSRIGE LÖSUNGEN AUS BODENMINERALMATERIALIEN MIT GERINGER IONENBELASTUNG UND DEREN VERWENDUNGEN

AQUEOUS SUSPENSIONS OF GROUND MINERAL MATERIALS, WITH LOW ION LOAD AND THEIR USES

(84) Etats contractants désignés:
**AT BE BG CH CY CZ DE DK EE ES FI FR GB GR HU IE IT LI LU MC NL PT RO SE SI SK TR**

(30) Priorité: **08.11.2002 FR 0214001**

(43) Date de publication de la demande:
**14.09.2005 Bulletin 2005/37**

(73) Titulaire: **OMYA DEVELOPMENT AG**
**4665 Oftringen (CH)**

(72) Inventeurs:
- **GANE, Patrick, A., C.**
  **CH-4852 Rothrist (CH)**
- **BURI, Matthias**
  **CH-4852 Rothrist (CH)**
- **KARTH, Beat**
  **CH-3363 Oberoenz (CH)**

(74) Mandataire: **Richebourg, Michel François**
**Cabinet Michel Richebourg**
**"Le Clos du Golf"**
**69 Rue Saint-Simon**
**42000 Saint Etienne (FR)**

(56) Documents cités:
**FR-A- 2 766 107 FR-A- 2 810 261**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 572 764 B1

## Description

La présente invention concerne le secteur technique des suspensions de matières minérales et leurs applications dans les domaines du papier, de la peinture et des matières plastiques et plus particulièrement leurs applications papetières dans le but d'améliorer soit le procédé de fabrication de la feuille de papier, soit le procédé de traitement de la feuille, soit les propriétés de la feuille.

L'invention concerne en premier lieu les suspensions aqueuses ou « slurries » de matières minérales affinées, de concentration en matière sèche pouvant être élevée, faiblement chargées ioniquement et de viscosité Brookfield™ faible et stable dans le temps, c'est-à-dire concerne les suspensions aqueuses de matières minérales affinées, de concentration en matière sèche pouvant être élevée, de viscosité Brookfield™ faible et stable dans le temps et ayant une surface pigmentaire dont la charge ionique, déterminée par titration ionique, est faible.

Ces suspensions aqueuses sont destinées à des applications pigmentaires dans le domaine du papier, de la peinture et des matières plastiques et sont destinées plus particulièrement à des applications papetières telles que le couchage du papier et/ou le traitement de surface du papier ou bien encore telle que la charge de masse lors de la fabrication des feuilles de papier, carton ou analogue.

Cette utilisation en charge de masse peut être directe comme composition de charge de masse lors de la fabrication des feuilles de papier, carton ou analogue ou peut être indirecte comme composition de recyclage de cassés de couchés lorsque des compositions de recyclage de cassés de couchés sont mis en oeuvre lors de la fabrication des feuilles de papier, carton ou analogue.

L'invention concerne également l'utilisation d'un copolymère faiblement ionique et hydrosoluble comme agent d'aide au broyage de matières minérales en suspension aqueuse permettant d'obtenir les suspensions aqueuses ou « slurries » de ces dites matières affinées, de concentration en matière sèche pouvant être élevée, de viscosité Brookfield™ faible et stable dans le temps ayant la propriété de présenter une surface pigmentaire dont la charge ionique, déterminée par titration ionique, est faible.

L'invention concerne également l'utilisation de ce même copolymère comme agent dispersant du gâteau de filtration obtenu dans une étape intermédiaire de la fabrication de suspensions matières minérales affinées, de concentration en matière sèche pouvant être élevée, de viscosité Brookfield™ faible et stable dans le temps et ayant une surface pigmentaire dont la charge ionique, déterminée par titration ionique, est faible, cette étape intermédiaire ayant lieu après le broyage et avant la reconcentration thermique.

L'invention concerne également ledit agent d'aide au broyage permettant l'obtention de suspensions aqueuses de ces dites matières minérales affinées, de concentration en matière sèche pouvant être élevée, de viscosité Brookfield™ faible et stable dans le temps et ayant une surface pigmentaire dont la charge ionique, déterminée par titration ionique, est faible.

La présente invention concerne en outre le procédé de broyage mettant en oeuvre ledit agent d'aide au broyage.

De plus, l'invention concerne l'utilisation de ces suspensions aqueuses de matières minérales avant ou après séchage ou re-dispersion après séchage dans le domaine du papier, de la peinture et après séchage dans le domaine des matières plastiques et plus particulièrement dans le domaine du papier pour des applications papetières telles que notamment le couchage du papier et/ou le traitement de surface du papier ou bien encore telle que la charge de masse, que celle ci mette en oeuvre une composition directe de charge de masse ou une composition de recyclage de cassés de couchés.

Elle concerne également l'utilisation de ces suspensions aqueuses de matières minérales dans un procédé de séchage après broyage.

Elle concerne enfin les papiers, cartons ou analogues fabriqués et/ou couchés selon l'invention.

Dans le procédé de fabrication d'une feuille de papier, carton ou analogue, l'homme de l'art remplace de plus en plus usuellement une partie des fibres de cellulose onéreuses par des matières minérales meilleur marché afin de réduire le coût du papier tout en améliorant ses propriétés.

Ces matières minérales bien connues de l'homme du métier sont par exemple le carbonate de calcium et diverses charges analogues comme la dolomie, le gypse, l'hydroxyde de calcium, le blanc satin, le dioxide de titane ou encore les charges mixtes à base de carbonates de divers métaux comme notamment le calcium associé au magnésium et analogues, diverses matières comme le talc ou analogues, et les mélanges de ces charges entre elles, comme par exemple les mélanges talc-carbonate de calcium, carbonate de calcium-kaolin, ou encore les mélanges carbonate de calcium naturel avec l'hydroxyde d'aluminium, le mica ou encore avec des fibres synthétiques ou naturelles ou encore les co-structures des minéraux comme les co-structures talc-carbonate de calcium ou talc-dioxyde de titane.

Depuis longtemps déjà, il est bien connu d'utiliser comme agent d'aide au broyage des polymères hydrosolubles à base d'acide polyacrylique ou de ses dérivés (FR 2 488 814, FR 2 603 042, EP 0 100 947, EP 0 100 948, EP 0 129 329, EP 0 542 643, EP 0 542 644) pour fournir des suspensions minérales aqueuses répondant aux critères de finesse et de viscosité précités, mais ces agents d'aide au broyage sont des polymères et/ou copolymères de type anionique qui présentent l'inconvénient de nécessiter l'ajout de composés cationiques pendant le processus de fabrication de la

feuille de papier lorsque les suspensions minérales aqueuses les contenant sont mises en oeuvre dans ces opérations de fabrication de la feuille.

L'utilisateur final cherche donc à minimiser la demande en agent polymère cationique lors de la fabrication du papier, et ce pour tout diamètre médian et/ou pour tout point de la courbe granulométrique des particules de matières minérales mises en oeuvres.

Pour résoudre ce problème, l'homme du métier connaît à ce jour la solution préconisée dans la demande de brevet FR 2 810 261 qui a l'inconvénient de ne pas convenir totalement à l'utilisateur final car bien que permettant d'obtenir des suspensions aqueuses de matières minérales faiblement chargées ioniquement, cette solution connue ne permet pas d'avoir des suspensions à charge ionique suffisamment faible pour correspondre au besoin de l'utilisateur final.

De plus, le papetier utilisateur final rencontre le problème de mise en oeuvre de sauces de couchage pas suffisamment stables lors des opérations de couchage du papier.

L'homme du métier, connaissant ce problème recherche également à mettre au point des suspensions aqueuses de matières minérales permettant l'obtention de sauces de couchage ayant une très bonne stabilité même à faible anionicité et ce pour tout diamètre médian et/ou pour tout point de la courbe granulométrique des particules de matières minérales mises en oeuvres.

Confrontée aux problèmes précités, la Demanderesse a alors, de manière surprenante, mis au point des suspensions aqueuses de substances minérales affinées de concentration en matière sèche pouvant être élevée, de viscosité Brookfield ™ faible et stable dans le temps, et ayant une surface pigmentaire dont la charge ionique, déterminée par titration ionique, est très faible, suspensions dont la mise en oeuvre, dans des procédés de fabrication du papier comme la charge de masse ou dans des procédés de traitement de la feuille de papier comme le couchage, permet de résoudre les problèmes précités.

Ces suspensions aqueuses de matières minérales affinées de concentration en matière sèche pouvant être élevée, de viscosité Brookfield™ faible et stable dans le temps, et ayant une surface pigmentaire dont la charge ionique, déterminée par titration ionique, est faible, sont obtenues par l'utilisation d'un copolymère faiblement chargé, comme agent d'aide au broyage de matière minérale en suspension aqueuse, ou par l'utilisation de ce même copolymère comme agent dispersant du gâteau de filtration obtenu dans une étape intermédiaire de la fabrication de la suspension, cette étape intermédiaire ayant lieu après le broyage et éventuellement avant un procédé de concentration physique tel que thermique.

Les dites suspensions aqueuses de substances minérales affinées de concentration en matière sèche pouvant être élevée, de viscosité Brookfield™ faible et stable dans le temps, et ayant une surface pigmentaire dont la charge ionique, déterminée par titration ionique, est faible sont caractérisées en Ce qu'elles contiennent, comme agent d'aide au broyage, un copolymère composé :

a) d'au moins un monomère anionique à insaturation éthylénique et à fonction monocarboxylique choisi parmi les monomères à insaturation éthylénique et à fonction monocarboxylique tels que l'acide acrylique ou méthacrylique ou encore les hémiesters de diacides tels que les monoesters en $C_1$ à $C_4$ des acides maléique ou itaconique, ou leurs mélanges, ou à fonction dicarboxylique choisi parmi les monomères à insaturation éthylénique et fonction dicarboxylique tels que l'acide crotonique, isocrotonique, cinnamique, itaconique, maléique, ou encore les anhydrides d'acides carboxyliques, tels que l'anhydride maléique ou à fonction sulfonique choisi parmi les monomères à insaturation éthylénique et à fonction sulfonique tels que l'acide acrylamido-méthyl-propane-sulfonique, le méthallylsulfonate de sodium, l'acide vinyl sulfonique et l'acide styrène sulfonique ou bien encore à fonction phosphorique choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore à fonction phosphonique choisi parmi les monomères à insaturation éthylénique et à fonction phosphonique tels que l'acide vinyl phosphonique, ou leurs mélanges,

b) d'au moins un monomère à insaturation éthylénique non ionique de formule (I) :

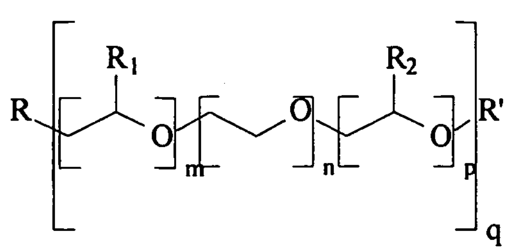

Dans laquelle :

- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que $5 \leq (m+n+p)q \leq 150$, et représente préférentiellement un nombre entier tel que $15 \leq (m+n+p)q \leq 120$,
- $R_1$ représente l'hydrogène ou le radical méthyle ou éthyle,
- $R_2$ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente l'hydrogène ou un radical hydrocarboné ayant 1 à 40 atomes de carbone, et représente préférentiellement un radical hydrocarboné ayant 1 à 12 atomes de carbone et très préférentiellement un radical hydrocarboné ayant 1 à 4 atomes de carbone,

ou du mélange de plusieurs monomères de formule (I),

c) d'au moins un monomère organosililé, choisi de manière préférentielle parmi les molécules de formules (IIa) ou (IIb) ou (IIc) ou leurs mélanges :
avec formule (IIa)

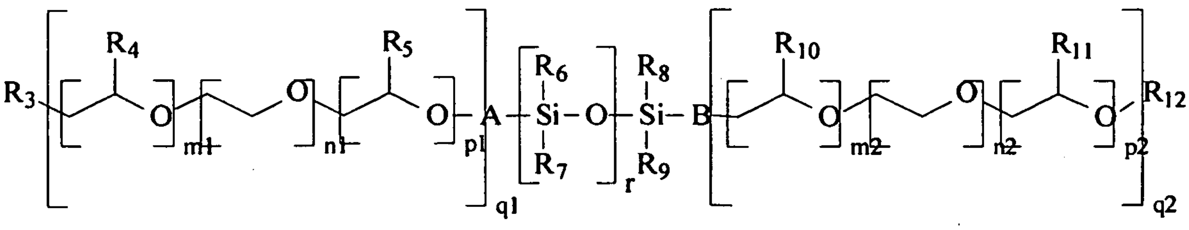

dans laquelle:

- m1, p1, m2 et p2 représentent un nombre de motifs d'oxyde d'alkylène inférieur ou égal à 150,
- n1 et n2 représentent un nombre de motifs d'oxyde d'éthylène inférieur ou égal à 150,
- q 1 et q2 représentent un nombre entier au moins égal à 1 et tel que $0 \leq (m1+n1+p1)q1 \leq 150$ et $0 \leq (m2+n2+p2) q2 \leq 150$,
- r représente un nombre tel que $1 \leq r \leq 200$,
- $R_3$ représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- $R_4$, $R_5$, $R_{10}$ et $R_{11}$, représentent l'hydrogène ou le radical méthyle ou éthyle,
- $R_6$, $R_7$, $R_8$ et $R_9$, représentent des groupements linéaires ou ramifiés alkyle, ou aryle, ou alkylaryle, ou arylalkyle ayant 1 à 20 atomes de carbone, ou leur mélange,
- $R_{12}$ représente un radical hydrocarboné ayant 1 à 40 atomes de carbone,
- A et B sont des groupements éventuellement présents, qui représentent alors un radical hydrocarboné ayant 1 à 4 atomes de carbone,
  avec formule (IIb)

$$R - A - Si\ (OB)_3$$

dans laquelle :

- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- A est un groupement éventuellement présent, qui représente alors un radical hydrocarboné ayant 1 à 4 atomes de carbone,
- B représente un radical hydrocarboné ayant 1 à 4 atomes de carbone, avec formule (IIc) :

dans laquelle :

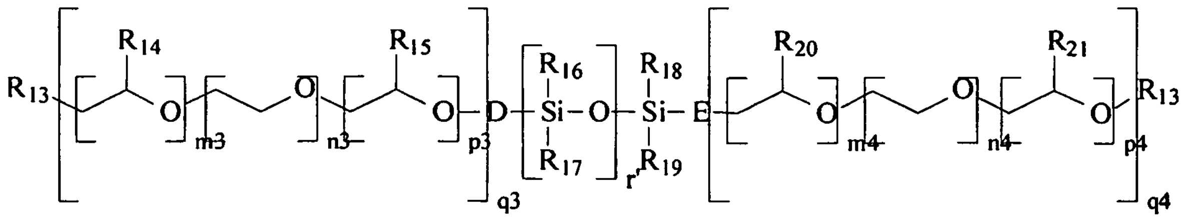

- m3, p3, m4 et p4 représentent un nombre de motifs d'oxyde d'alkylène inférieur ou égal à 150,
- n3 et n4 représentent un nombre de motifs d'oxyde d'éthylène inférieur ou égal à 150,
- q3 et q4 représentent un nombre entier au moins égal à 1 et tel que $0 \leq (m3+n3+p3)q3 \leq 150$ et $0 \leq (m4+n4+p4)q4 \leq 150$,
- r' représente un nombre tel que $1 \leq r' \leq 200$,
- $R_{13}$ représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- $R_{14}$, $R_{15}$, $R_{20}$ et $R_{21}$, représentent l'hydrogène ou le radical méthyle ou éthyle,
- $R_{16}$, $R_{17}$, $R_{18}$ et $R_{19}$, représentent des groupements linéaires ou ramifiés alkyle, ou aryle, ou alkylaryle, ou arylalkyle ayant 1 à 20 atomes de carbone, ou leur mélange,
- D et E sont des groupements éventuellement présents, qui représentent alors un radical hydrocarboné ayant 1 à 4 atomes de carbone,

d) éventuellement d'au moins un monomère du type acrylamide ou méthacrylamide ou leurs dérivés et leurs mélanges tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle ou leurs mélanges, les esters insaturés tels que le méthacrylate de N-[2-(diméthylamino) éthyl], ou l'acrylate de N-[2-(diméthylamino) éthyl] ou leurs mélanges, les vinyliques tels que l'acétate de vinyle, la vinylpyrrolidone, le styrène, l'alphaméthylstyrène et leurs dérivés ou leurs mélanges, ou d'au moins un monomère cationique ou ammonium quaternaire tels que le chlorure ou sulfate de [2-(méthacryloyloxy) éthyl] triméthyl ammonium, le chlorure ou sulfate de [2-(acryloyloxy) éthyl] triméthyl ammonium, le chlorure ou sulfate de [3-(acrylamido) propyl] triméthyl ammonium, le chlorure ou sulfate de diméthyl diallyl ammonium, le chlorure ou sulfate de [3-(méthacrylamido) propyl] triméthyl ammonium, ou leurs mélanges,

e) éventuellement d'au moins un monomère réticulant choisi d'une manière non limitative dans le groupe constitué par le diméthacrylate d'éthylène glycol, le triméthylolpropanetriacrylate, l'acrylate d'allyle, les maléates d'allyle, le méthylène-bis-acrylamide, le méthylène-bis-méthacrylamide, le tétrallyloxyéthane, les triallylcyanurates, les éthers allyliques obtenus à partir de polyols tels que le pentaérythritol, le sorbitol, le sucrose ou autres,

le total des constituants a), b), c), d) et e) étant égal à 100%.
et ayant une viscosité intrinsèque inférieure ou égale à 100 ml/g déterminée selon la méthode décrite dans la publication Vollmert « Outlines of macromolecular chemistry » volume III, Vollmert Verlag, Karlsruhe 1985 et par mise en oeuvre

d'une solution d'eau bipermutée et d'un tube capillaire défini par la norme DIN 53101/0a, de constante 0,005 et de diamètre égal à 0,53 mm. Cette méthode sera appelée dans la présente demande « méthode de visco. Intrinsèque ».

Une deuxième méthode de détermination de la viscosité intrinsèque pouvant être utilisée met en oeuvre une solution de NaCl à 6 % et le même matériel que celui précédemment décrit.

Dans les exemples où cette deuxième méthode est utilisée en plus de la première, les valeurs de viscosité intrinsèque obtenues par cette seconde méthode correspondent à la seconde valeur indiquée.

Ainsi, afin de minimiser la demande en agent cationique lors de la fabrication du papier, et ce pour tout diamètre médian et/ou pour tout point de la courbe granulométrique des particules de matières minérales mises en oeuvres ainsi qu'afin de fournir, lors du couchage du papier, des sauces de couchage ayant une très bonne stabilité et ce pour tout diamètre médian et/ou pour tout point de la courbe granulométrique des particules de matières minérales mises en oeuvres, le premier but de l'invention est de fournir les dites suspensions aqueuses de substances minérales affinées contenant les copolymères précités.

Un autre but de l'invention est l'utilisation, comme agent d'aide au broyage de substances minérales en suspension aqueuse ou comme agent dispersant du gâteau de filtration obtenu dans une étape intermédiaire de la fabrication de la suspension, cette étape intermédiaire ayant lieu après le broyage et éventuellement avant un procédé de concentration thermique, d'un copolymère composé :

a) d'au moins un monomère anionique à insaturation éthylénique et à fonction monocarboxylique choisi parmi les monomères à insaturation éthylénique et à fonction monocarboxylique tels que l'acide acrylique ou méthacrylique ou encore les hémiesters de diacides tels que les monoesters en $C_1$ à $C_4$ des acides maléique ou itaconique, ou leurs mélanges, ou à fonction dicarboxylique choisi parmi les monomères à insaturation éthylénique et fonction dicarboxylique tels que l'acide crotonique, isocrotonique, cinnamique, itaconique, maléique, ou encore les anhydrides d'acides carboxyliques, tels que l'anhydride maléique ou à fonction sulfonique choisi parmi les monomères à insaturation éthylénique et à fonction sulfonique tels que l'acide acrylamido-méthyl-propane-sulfonique, le méthallylsulfonate de sodium, l'acide vinyl sulfonique et l'acide styrène sulfonique ou bien encore à fonction phosphorique choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore à fonction phosphonique choisi parmi les monomères à insaturation éthylénique et à fonction phosphonique tels que l'acide vinyl phosphonique, ou leurs mélanges,

b) d'au moins un monomère à insaturation éthylénique non ionique de formule (I) :

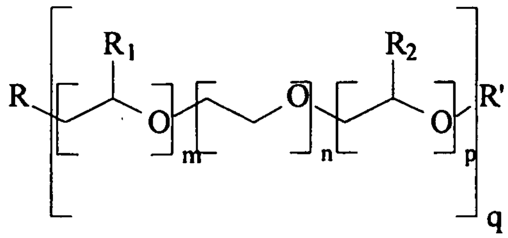

dans laquelle :

- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que $5 \leq (m+n+p)q$ $\leq 150$, et représente préférentiellement un nombre entier tel que $15 \leq (m+n+p)q \leq 120$,
- $R_1$ représente l'hydrogène ou le radical méthyle ou éthyle,
- $R_2$ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente l'hydrogène ou un radical hydrocarboné ayant 1 à 40 atomes de carbone, et représente préférentiellement un radical hydrocarboné ayant 1 à 12 atomes de carbone et très préférentiellement un radical hydrocarboné ayant 1 à 4 atomes de carbone,

ou du mélange de plusieurs monomères de formule (I),

c) d'au moins un monomère organosililé, choisi de manière préférentielle parmi les molécules de formules (IIa) ou (IIb) ou (IIc) ou leurs mélanges :

avec formule (IIa)

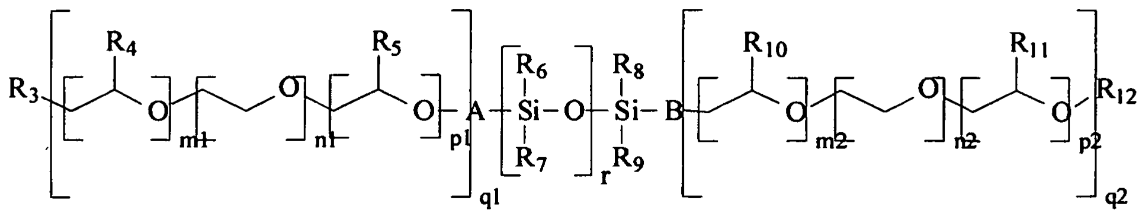

dans laquelle :

- m1, p1, m2 et p2 représentent un nombre de motifs d'oxyde d'alkylène inférieur ou égal à 150,
- n1 et n2 représentent un nombre de motifs d'oxyde d'éthylène inférieur ou égal à 150,
- q1 et q2 représentent un nombre entier au moins égal à 1 et tel que $0 \leq (m1+n1+p1)q1 \leq 150$ et $0 \leq (m2+n2+p2)q2 \leq 150$,
- r représente un nombre tel que $1 \leq r \leq 200$,
- $R_3$ représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, $\alpha$-$\alpha$' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- $R_4$, $R_5$, $R_{10}$ et $R_{11}$, représentent l'hydrogène ou le radical méthyle ou éthyle,
- $R_6$, $R_7$, $R_8$ et $R_9$, représentent des groupements linéaires ou ramifiés alkyle, ou aryle, ou alkylaryle, ou arylalkyle ayant 1 à 20 atomes de carbone, ou leur mélange,
- $R_{12}$ représente un radical hydrocarboné ayant 1 à 40 atomes de carbone,
- A et B sont des groupements éventuellement présents, qui représentent alors un radical hydrocarboné ayant 1 à 4 atomes de carbone,

avec formule (IIb)

$$R - A - Si\ (OB)_3$$

dans laquelle :

- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, $\alpha$-$\alpha$' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- A est un groupement éventuellement présent, qui représente alors un radical hydrocarboné ayant 1 à 4 atomes de carbone,
- B représente un radical hydrocarboné ayant 1 à 4 atomes de carbone,

avec formule (IIc) :

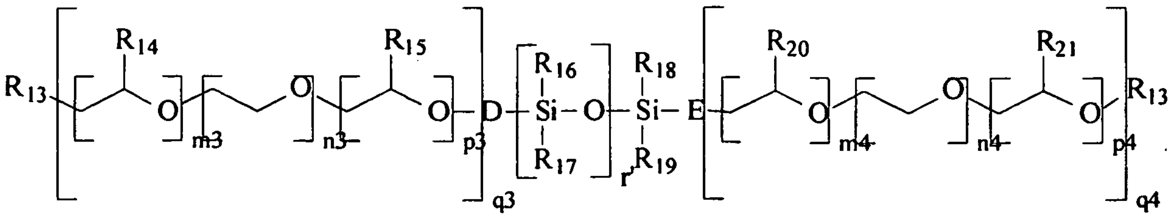

dans laquelle :

- m3, p3, m4 et p4 représentent un nombre de motifs d'oxyde d'alkylène inférieur ou égal à 150,
- n3 et n4 représentent un nombre de motifs d'oxyde d'éthylène inférieur ou égal à 150,
- q3 et q4 représentent un nombre entier au moins égal à 1 et tel que $0 \leq (m3+n3+p3)q3 \leq 150$ et $0 \leq (m4+n4+p4) q4 \leq 150$,
- r' représente un nombre tel que $1 \leq r' \leq 200$,
- $R_{13}$ représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- $R_{14}$, $R_{15}$, $R_{20}$ et $R_{21}$, représentent l'hydrogène ou le radical méthyle ou éthyle,
- $R_{16}$, $R_{17}$, $R_{18}$ et $R_{19}$, représentent des groupements linéaires ou ramifiés alkyle, ou aryle, ou alkylaryle, ou arylalkyle ayant 1 à 20 atomes de carbone, ou leur mélange,
- D et E sont des groupements éventuellement présents, qui représentent alors un radical hydrocarboné ayant 1 à 4 atomes de carbone,

d) éventuellement d'au moins un monomère du type acrylamide ou méthacrylamide ou leurs dérivés et leurs mélanges tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle ou leurs mélanges, les esters insaturés tels que le méthacrylate de N-[2-(diméthylamino) éthyl], ou l'acrylate de N-[2-(diméthylamino) éthyl] ou leurs mélanges, les vinyliques tels que l'acétate de vinyle, la vinylpyrrolidone, le styrène, l'alphaméthylstyrène et leurs dérivés ou leurs mélanges, ou d'au moins un monomère cationique ou ammonium quaternaire tels que le chlorure ou sulfate de [2-(méthacryloyloxy) éthyl] triméthyl ammonium, le chlorure ou sulfate de [2-(acryloyloxy) éthyl] triméthyl ammonium, le chlorure ou sulfate de [3-(acrylamido) propyl] triméthyl ammonium, le chlorure ou sulfate de diméthyl diallyl ammonium, le chlorure ou sulfate de [3-(méthacrylamido) propyl] triméthyl ammonium, ou leurs mélanges,
e) éventuellement d'au moins un monomère réticulant choisi d'une manière non limitative dans le groupe constitué par le diméthacrylate d'éthylène glycol, le triméthylolpropanetriacrylate, l'acrylate d'allyle, les maléates d'allyle, le méthylène-bis-acrylamide, le méthylène-bis-méthacrylamide, le tétrallyloxyéthane, les triallylcyanurates, les éthers allyliques obtenus à partir de polyols tels que le pentaérythritol, le sorbitol, le sucrose ou autres,
le total des constituants a), b), c), d) et e) étant égal à 100%,
et ayant une viscosité intrinsèque inférieure ou égale à 100 ml/g mesurée selon la méthode précitée.

Un but supplémentaire de l'invention est de fournir un procédé de broyage en suspension aqueuse de particules minérales mettant en oeuvre lesdits copolymères sélectionnés comme agent d'aide au broyage.
Lesdits copolymères mis en oeuvre selon l'invention présentent en outre l'avantage de diminuer la formation de mousse au cours de l'opération physique telle que le broyage et/ou le pompage et/ou l'agitation des matières minérales.
De plus, un autre but de l'invention est l'utilisation de ces suspensions aqueuses minérales affinées telles quelles ou après séchage dans le domaine du papier, de la peinture et des matières plastiques.
De manière plus particulière, un autre but de l'invention réside en l'utilisation de ces suspensions aqueuses minérales affinées dans le domaine de la charge de masse du papier, et plus particulièrement dans les applications dénommées « wet-end » c'est-à-dire dans les procédés de fabrication de la feuille de papier, carton ou analogues où elles sont utilisées comme charge de masse, de manière directe ou indirecte.
Un autre but réside aussi en l'utilisation de ces suspensions aqueuses minérales affinées dans le traitement de la feuille de papier, carton ou analogues où elles sont utilisées comme charge de sauce de couchage.

Un autre but réside aussi en l'utilisation de ces suspensions aqueuses minérales affinées dans le domaine des matières plastiques tel que les polyoléfines comme les basses densités (LLDPE) et haute densité (HMW-HDPE), ou les membranes respirables, ou encore tel que les chlorures de polyvinyle (PVC) et plus particulièrement dans le domaine des PVC comme PVC rigides ou flexibles.

Ces buts sont atteints grâce à l'utilisation, comme agent d'aide au broyage d'un copolymère constitué :

a) d'au moins un monomère anionique à insaturation éthylénique et à fonction monocarboxylique choisi parmi les monomères à insaturation éthylénique et à fonction monocarboxylique tels que l'acide acrylique ou méthacrylique ou encore les hémiesters de diacides tels que les monoesters en $C_1$ à $C_4$ des acides maléique ou itaconique, ou leurs mélanges, ou à fonction dicarboxylique choisi parmi les monomères à insaturation éthylénique et fonction dicarboxylique tels que l'acide crotonique, isocrotonique, cinnamique, itaconique, maléique, ou encore les anhydrides d'acides carboxyliques, tels que l'anhydride maléique ou à fonction sulfonique choisi parmi les monomères à insaturation éthylénique et à fonction sulfonique tels que l'acide acrylamido-méthyl-propane-sulfonique, le méthallylsulfonate de sodium, l'acide vinyl sulfonique et l'acide styrène sulfonique ou bien encore à fonction phosphorique choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore à fonction phosphonique choisi parmi les monomères à insaturation éthylénique et à fonction phosphonique tels que l'acide vinyl phosphonique, ou leurs mélanges,

b) d'au moins un monomère à insaturation éthylénique non ionique de formule (I) :

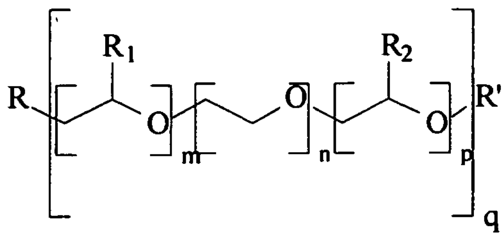

dans laquelle :

- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que $5 \leq (m+n+p)q \leq 150$, et représente préférentiellement un nombre entier tel que $15 \leq (m+n+p)q \leq 120$,
- $R_1$ représente l'hydrogène ou le radical méthyle ou éthyle,
- $R_2$ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, $\alpha$-$\alpha$' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente l'hydrogène ou un radical hydrocarboné ayant 1 à 40 atomes de carbone, et représente préférentiellement un radical hydrocarboné ayant 1 à 12 atomes de carbone et très préférentiellement un radical hydrocarbonée ayant 1 à 4 atomes de carbone,

ou du mélange de plusieurs monomères de formule (I),

c) d'au moins un monomère organosililé, choisi de manière préférentielle parmi les molécules de formules (IIa) ou (IIb) ou (IIc) ou leurs mélanges :
avec formule (IIa)

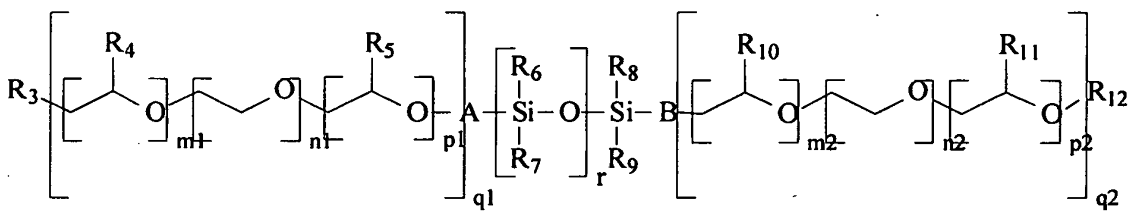

dans laquelle :

- m1, p1, m2 et p2 représentent un nombre de motifs d'oxyde d'alkylène inférieur ou égal à 150,
- n1 et n2 représentent un nombre de motifs d'oxyde d'éthylène inférieur ou égal à 150,
- q1 et q2 représentent un nombre entier au moins égal à 1 et tel que $0 \leq (m1+n1+p1)q1 \leq 150$ et $0 \leq (m2+n2+p2)q2 \leq 150$,
- r représente un nombre tel que $1 \leq r \leq 200$,
- $R_3$ représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- $R_4$, $R_5$, $R_{10}$ et $R_{11}$, représentent l'hydrogène ou le radical méthyle ou éthyle,
- $R_6$, $R_7$, $R_8$ et $R_9$, représentent des groupements linéaires ou ramifiés alkyle, ou aryle, ou alkylaryle, ou arylalkyle ayant 1 à 20 atomes de carbone, ou leur mélange,
- $R_{12}$ représente un radical hydrocarboné ayant 1 à 40 atomes de carbone,
- A et B sont des groupements éventuellement présents, qui représentent alors un radical hydrocarboné ayant 1 à 4 atomes de carbone,

avec formule (IIb)

$$R - A - Si\ (OB)_3$$

dans laquelle :

- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- A est un groupement éventuellement présent, qui représente alors un radical hydrocarboné ayant 1 à 4 atomes de carbone,
- B représente un radical hydrocarboné ayant 1 à 4 atomes de carbone, avec formule (IIc) :

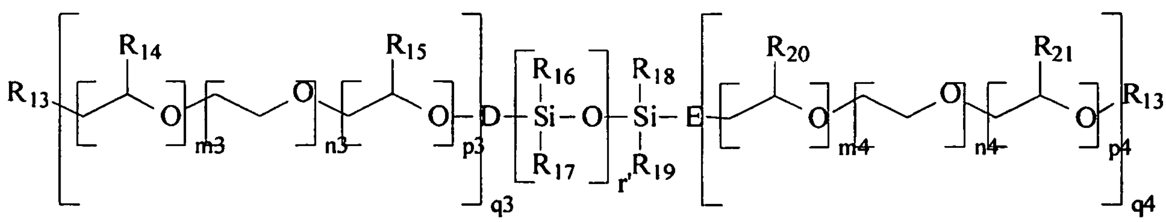

dans laquelle :

- m3, p3, m4 et p4 représentent un nombre de motifs d'oxyde d'alkylène inférieur ou égal à 150,

- n3 et n4 représentent un nombre de motifs d'oxyde d'éthylène inférieur ou égal à 150,
- q3 et q4 représentent un nombre entier au moins égal à 1 et tel que $0 \leq (m3+n3+p3)q3 \leq 150$ et $0 \leq (m4+n4+p4)q4 \leq 150$,
- r' représente un nombre tel que $1 \leq r' \leq 200$,
- $R_{13}$ représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, $\alpha$-$\alpha$' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- $R_{14}$, $R_{15}$, $R_{20}$ et $R_{21}$, représentent l'hydrogène ou le radical méthyle ou éthyle,
- $R_{16}$, $R_{17}$, $R_{18}$ et $R_{19}$, représentent des groupements linéaires ou ramifiés alkyle, ou aryle, ou alkylaryle, ou arylalkyle ayant 1 à 20 atomes de carbone, ou leur mélange,
- D et E sont des groupements éventuellement présents, qui représentent alors un radical hydrocarboné ayant 1 à 4 atomes de carbone,

d) éventuellement d'au moins un monomère du type acrylamide ou méthacrylamide ou leurs dérivés et leurs mélanges tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle ou leurs mélanges, les esters insaturés tels que le méthacrylate de N-[2-(diméthylamino) éthyl], ou l'acrylate de N-[2-(diméthylamino) éthyl] ou leurs mélanges, les vinyliques tels que l'acétate de vinyle, la vinylpyrrolidone, le styrène, l'alphaméthylstyrène et leurs dérivés ou leurs mélanges, ou d'au moins un monomère cationique ou ammonium quaternaire tels que le chlorure ou sulfate de [2-(méthacryloyloxy) éthyl] triméthyl ammonium, le chlorure ou sulfate de [2-(acryloyloxy) éthyl] triméthyl ammonium, le chlorure ou sulfate de [3-(acrylamido) propyl] triméthyl ammonium, le chlorure ou sulfate de diméthyl diallyl ammonium, le chlorure ou sulfate de [3-(méthacrylamido) propyl] triméthyl ammonium, ou leurs mélanges,

e) éventuellement d'au moins un monomère réticulant choisi d'une manière non limitative dans le groupe constitué par le diméthacrylate d'éthylène glycol, le triméthylolpropanetriacrylate, l'acrylate d'allyle, les maléates d'allyle, le méthylène-bis-acrylamide, le méthylène-bis-méthacrylamide, le tétrallyloxyéthane, les triallylcyanurates, les éthers allyliques obtenus à partir de polyols tels que le pentaérythritol, le sorbitol, le sucrose ou autres,
le total des constituants a), b), c), d) et e) étant égal à 100 %,
et ayant une viscosité intrinsèque inférieure ou égale à 100 ml/g mesurée selon la méthode précitée.

Plus particulièrement, les suspensions aqueuses de substances minérales affinées selon l'invention se caractérisent en ce que ledit copolymère est constitué, exprimé en poids :

a) de 2 % à 95 %, préférentiellement de 3 % à 25 % et très préférentiellement de 4 % à 15 % d'au moins un monomère anionique à insaturation éthylénique et à fonction monocarboxylique choisi parmi les monomères à insaturation éthylénique et à fonction monocarboxylique tels que l'acide acrylique ou méthacrylique ou encore les hémiesters de diacides tels que les monoesters en $C_1$ à $C_4$ des acides maléique ou itaconique, ou leurs mélanges, ou à fonction dicarboxylique choisi parmi les monomères à insaturation éthylénique et fonction dicarboxylique tels que l'acide crotonique, isocrotonique, cinnamique, itaconique, maléique, ou encore les anhydrides d'acides carboxyliques, tels que l'anhydride maléique ou à fonction sulfonique choisi parmi les monomères à insaturation éthylénique et à fonction sulfonique tels que l'acide acrylamido-méthyl-propane-sulfonique, le méthallylsulfonate de sodium, l'acide vinyl sulfonique et l'acide styrène sulfonique ou bien encore à fonction phosphorique choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore à fonction phosphonique choisi parmi les monomères à insaturation éthylénique et à fonction phosphonique tels que l'acide vinyl phosphonique, ou leurs mélanges,

b) de 97,9 % à 4,9 %, préférentiellement de 95 % à 65 % et très préférentiellement de 92 % à 78 % d'au moins un monomère à insaturation éthylénique non ionique de formule (I) :

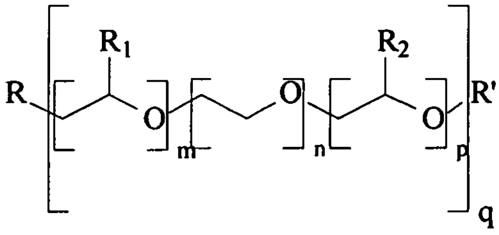

dans laquelle :

- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que $5 \leq (m+n+p)q \leq 150$, et représente préférentiellement un nombre entier tel que $15 \leq (m+n+p)q \leq 120$,
- $R_1$ représente l'hydrogène ou le radical méthyle ou éthyle,
- $R_2$ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente l'hydrogène ou un radical hydrocarboné ayant 1 à 40 atomes de carbone, et représente préférentiellement un radical hydrocarboné ayant 1 à 12 atomes de carbone et très préférentiellement un radical hydrocarboné ayant 1 à 4 atomes de carbone,

ou du mélange de plusieurs monomères de formule (I),

c) de 0,1 % à 50 %, préférentiellement de 0,2 % à 10 % et très préférentiellement de 0,3 % à 5 % d'au moins un monomère organosililé, choisi de manière préférentielle parmi les molécules de formules (IIa) ou (IIb) ou (IIc) ou leurs mélanges :
avec formule (IIa)

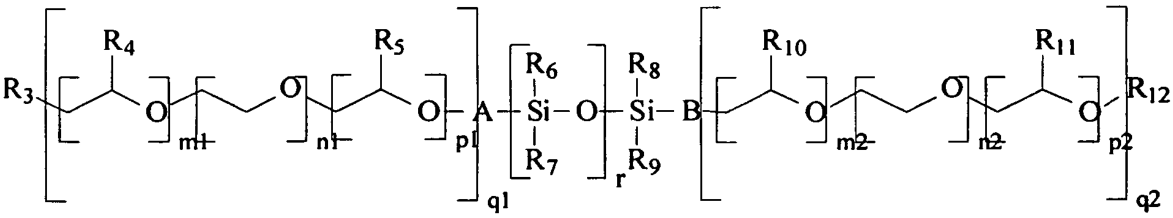

dans laquelle :

- m1, p1, m2 et p2 représentent un nombre de motifs d'oxyde d'alkylène inférieur ou égal à 150,
- n1 et n2 représentent un nombre de motifs d'oxyde d'éthylène inférieur ou égal à 150,
- q1 et q2 représentent un nombre entier au moins égal à 1 et tel que $0 \leq (m1+n1+p1)q1 \leq 150$ et $0 \leq (m2+n2+p2)q2 \leq 150$,
- r représente un nombre tel que $1 \leq r \leq 200$,
- $R_3$ représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- $R_4$, $R_5$, $R_{10}$ et $R_{11}$, représentent l'hydrogène ou le radical méthyle ou éthyle,

- $R_6$, $R_7$, $R_8$ et $R_9$, représentent des groupements linéaires ou ramifiés alkyle, ou aryle, ou alkylaryle, ou arylalkyle ayant 1 à 20 atomes de carbone, ou leur mélange,
- $R_{12}$ représente un radical hydrocarboné ayant 1 à 40 atomes de carbone,
- A et B sont des groupements éventuellement présents, qui représentent alors un radical hydrocarboné ayant 1 à 4 atomes de carbone,

avec formule (IIb)

$$R - A - Si\ (OB)_3$$

dans laquelle :

- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- A est un groupement éventuellement présent, qui représente alors un radical hydrocarboné ayant 1 à 4 atomes de carbone,
- B représente un radical hydrocarboné ayant 1 à 4 atomes de carbone,

avec formule (IIc) :

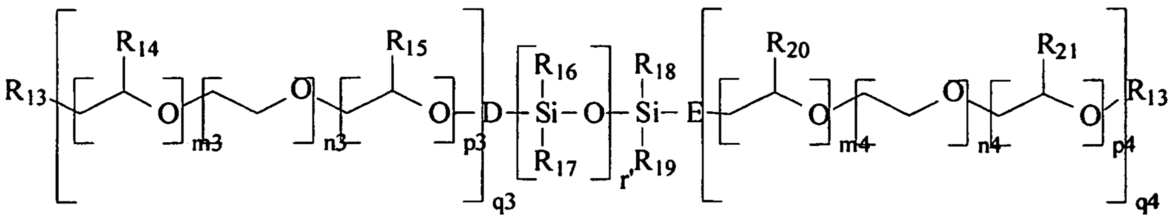

dans laquelle:

- m3, p3, m4 et p4 représentent un nombre de motifs d'oxyde d'alkylène inférieur ou égal à 150,
- n3 et n4 représentent un nombre de motifs d'oxyde d'éthylène inférieur ou égal à 150,
- q3 et q4 représentent un nombre entier au moins égal à 1 et tel que $0 \leq (m3+n3+p3)q3 \leq 150$ et $0 \leq (m4+n4+p4)q4 \leq 150$,
- r' représente un nombre tel que $1 \leq r' \leq 200$,
- $R_{13}$ représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- $R_{14}$, $R_{15}$, $R_{20}$ et $R_{21}$, représentent l'hydrogène ou le radical méthyle ou éthyle,
- $R_{16}$, $R_{17}$, $R_{18}$ et $R_{19}$, représentent des groupements linéaires ou ramifiés alkyle, ou aryle, ou alkylaryle, ou arylalkyle ayant 1 à 20 atomes de carbone, ou leur mélange,
- D et E sont des groupements éventuellement présents, qui représentent alors un radical hydrocarboné ayant 1 à 4 atomes de carbone,

d) de 0 % à 50 %, préférentiellement de 0 % à 10 % et très préférentiellement de 0 % à 5 % d'au moins un monomère du type acrylamide ou méthacrylamide ou leurs dérivés et leurs mélanges tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle ou leurs mélanges, les esters insaturés tels que le méthacrylate de N-[2-(diméthylamino) éthyl], ou l'acrylate de N-[2-(diméthylamino) éthyl] ou leurs mélanges, les vinyliques tels que l'acétate de vinyle, la vinylpyrrolidone, le styrène, l'alphaméthylstyrène et leurs dérivés

ou leurs mélanges, ou d'au moins un monomère cationique ou ammonium quaternaire tels que le chlorure ou sulfate de [2-(méthacryloyloxy) éthyl] triméthyl ammonium, le chlorure ou sulfate de [2-(acryloyloxy) éthyl] triméthyl ammonium, le chlorure ou sulfate de [3-(acrylamido) propyl] triméthyl ammonium, le chlorure ou sulfate de diméthyl diallyl ammonium, le chlorure ou sulfate de [3-(méthacrylamido) propyl] triméthyl ammonium, ou leurs mélanges,

e) de 0 % à 5 %, préférentiellement de 0 % à 3 % d'au moins un monomère réticulant choisi d'une manière non limitative dans le groupe constitué par le diméthacrylate d'éthylène glycol, le triméthylolpropanetriacrylate, l'acrylate d'allyle, les maléates d'allyle, le méthylène-bis-acrylamide, le méthylène-bis-méthacrylamide, le tétrallyloxyéthane, les triallylcyanurates, les éthers allyliques obtenus à partir de polyols tels que le pentaérythritol, le sorbitol, le sucrose ou autres,
le total des constituants a), b), c), d) et e) étant égal à 100%,
et ayant une viscosité intrinsèque inférieure ou égale à 100 ml/g déterminée selon la méthode précitée.

De manière encore plus particulière, les suspensions aqueuses de matières minérales selon l'invention, se caractérisent en ce qu'elles contiennent de 0,05 % à 10 % dudit copolymère en poids sec par rapport au poids sec de substances minérales.

D'une manière tout aussi particulière, les suspensions aqueuses de matières minérales selon l'invention, se caractérisent en ce que ledit copolymère est sous sa forme acide, ou partiellement ou totalement neutralisée par un ou plusieurs agents de neutralisation.

Ces agents de neutralisation sont ceux disposant d'une fonction neutralisante monovalente ou d'une fonction neutralisante polyvalente tels que par exemple pour la fonction monovalente ceux choisis dans le groupe constitué par les cations alcalins, en particulier le sodium, le potassium, le lithium, l'ammonium ou les amines primaires, secondaires ou tertiaires aliphatiques et/ou cycliques telles que par exemple la stéarylamine, les éthanolamines (mono-, di-, triéthanolamine), la mono et diéthylamine, la cyclohexylamine, la méthylcyclohexylamine, l'amino méthyl propanol, la morpholine, ou bien encore pour la fonction polyvalente ceux choisis dans le groupe constitué par les cations divalents alcalino-terreux, en particulier le magnésium et le calcium, ou encore le zinc, de même que par les cations trivalents, dont en particulier l'aluminium, ou encore par certains cations de valence plus élevée.

Une autre variante de l'invention consiste en ce que les suspensions aqueuses de matières minérales selon l'invention, contiennent de 0,05 % à 10 % dudit copolymère en poids sec par rapport au poids sec de substances minérales et au moins un autre dispersant ou agent d'aide au broyage.

Cet autre dispersant ou agent d'aide au broyage est alors choisi parmi les dispersants ou agents d'aide au broyage bien connus de l'homme du métier tels que notamment les homopolymères ou copolymères de l'acide acrylique sous leurs formes acides, ou partiellement ou totalement neutralisées par un ou plusieurs agents de neutralisation, les agents de neutralisations étant choisis parmi la même liste que celle précédemment citée, ou est choisi parmi les dispersants ou agents d'aide au broyage tels que notamment les donneurs d'ions $H_3O^+$ parmi lesquels on peut citer préférablement l'acide phosphorique et/ou ses sels avec des bases mono et/ou divalentes telles que la soude ou la chaux.

De manière particulière, les suspensions aqueuses de matières minérales selon l'invention contiennent de 0,05 % à 1,0 %, en poids sec par rapport au poids sec de substances minérales, desdits autres dispersants ou agents d'aide au broyage.

De manière également particulière, les suspensions aqueuses de matières minérales selon l'invention se caractérisent en ce qu'elles ont une teneur en matière sèche comprise entre 15 % et 85 % en poids, et de préférence entre 40% et 80%, et plus préférentiellement entre 50 % et 78 %.

En outre, les suspensions aqueuses de matières minérales selon l'invention se caractérisent en ce que les matières minérales sont choisies parmi le carbonate de calcium, et diverses charges analogues comme la dolomie, le gypse, l'hydroxyde de calcium, le blanc satin, le dioxide de titane, le trihydroxyde d'aluminium ou encore les charges mixtes à base de carbonates de divers métaux comme notamment le calcium associé au magnésium et analogues, diverses matières comme le talc ou analogues, et les mélanges de ces charges entre elles, comme par exemple les mélanges talc-carbonate de calcium, carbonate de calcium-kaolin, ou encore les mélanges carbonate de calcium avec le trihydroxyde d'aluminium, les kaolins, les kaolins calcinés, le mica ou encore avec des fibres synthétiques ou naturelles ou encore les co-structures des minéraux comme les co-structures talc-carbonate de calcium ou talc-dioxyde de titane.

De manière préférentielle les suspensions aqueuses de matières minérales selon l'invention se caractérisent en ce que la matière minérale est du carbonate de calcium tel que du carbonate de calcium naturel choisi parmi le marbre, la calcite, la craie ou leurs mélanges.

Ces suspensions aqueuses de matières minérales selon l'invention sont également **caractérisées en ce que** la matière minérale présente un diamètre médian de grain, mesuré par Sédigraph™ 5100, compris entre 50 μm et 0,1 μm, préférentiellement entre 5 μm et 0,2 μm et très préférentiellement entre 2 μm et 0,5 μm.

Ces suspensions aqueuses de matières minérales selon l'invention sont également **caractérisées en ce qu**'elles ont un pH compris entre 7,5 et 13, préférentiellement entre 8 et 12, et très préférentiellement entre 8,5 et 10.

L'utilisation, selon l'invention, comme agent d'aide au broyage de matières minérales en suspension aqueuse, d'un copolymère se **caractérise en ce que** ledit copolymère est composé

a) d'au moins un monomère anionique à insaturation éthylénique et à fonction monocarboxylique choisi parmi les monomères à insaturation éthylénique et à fonction mono carboxylique tels que l'acide acrylique ou méthacrylique ou encore les hémiesters de diacides tels que les monoesters en $C_1$ à $C_4$ des acides maléique ou itaconique, ou leurs mélanges, ou à fonction dicarboxylique choisi parmi les monomères à insaturation éthylénique et fonction dicarboxylique tels que l'acide crotonique, isocrotonique, cinnamique, itaconique, maléique, ou encore les anhydrides d'acides carboxyliques, tels que l'anhydride maléique ou à fonction sulfonique choisi parmi les monomères à insaturation éthylénique et à fonction sulfonique tels que l'acide acrylamido-méthyl-propane-sulfonique, le méthallylsulfonate de sodium, l'acide vinyl sulfonique et l'acide styrène sulfonique ou bien encore à fonction phosphorique choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore à fonction phosphonique choisi parmi les monomères à insaturation éthylénique et à fonction phosphonique tels que l'acide vinyl phosphonique, ou leurs mélanges,

b) d'au moins un monomère à insaturation éthylénique non ionique de formule (I) :

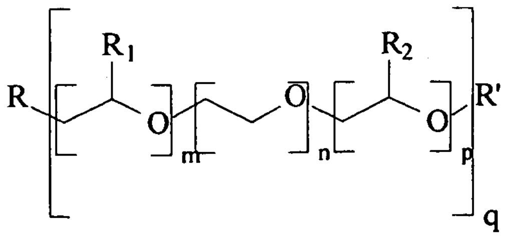

dans laquelle :

- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que $5 \leq (m+n+p)q \leq 150$, et représente préférentiellement un nombre entier tel que $15 \leq (m+n+p)q \leq 120$,
- $R_1$ représente l'hydrogène ou le radical méthyle ou éthyle,
- $R_2$ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, $\alpha$-$\alpha$' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente l'hydrogène ou un radical hydrocarboné ayant 1 à 40 atomes de carbone, et représente préférentiellement un radical hydrocarboné ayant 1 à 12 atomes de carbone et très préférentiellement un radical hydrocarboné ayant 1 à 4 atomes de carbone,

ou du mélange de plusieurs monomères de formule (I),

c) d'au moins un monomère organosililé, choisi de manière préférentielle parmi les molécules de formules (IIa) ou (IIb) ou (IIc) ou leurs mélanges :

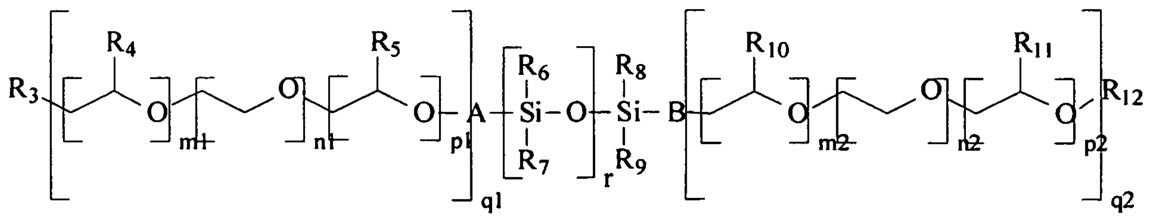

avec formule (IIa)
dans laquelle :

- m1, p1, m2 et p2 représentent un nombre de motifs d'oxyde d'alkylène inférieur ou égal à 150,
- n1 et n2 représentent un nombre de motifs d'oxyde d'éthylène inférieur ou égal à 150,
- q1 et q2 représentent un nombre entier au moins égal à 1 et tel que $0 \leq (m1+n1+p1)q1 \leq 150$ et $0 \leq (m2+n2+p2)q2 \leq 150$,
- r représente un nombre tel que $1 \leq r \leq 200$,
- $R_3$ représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- $R_4$, $R_5$, $R_{10}$ et $R_{11}$, représentent l'hydrogène ou le radical méthyle ou éthyle,
- $R_6$, $R_7$, $R_8$ et $R_9$, représentent des groupements linéaires ou ramifiés alkyle, ou aryle, ou alkylaryle, ou arylalkyle ayant 1 à 20 atomes de carbone, ou leur mélange,
- $R_{12}$ représente un radical hydrocarboné ayant 1 à 40 atomes de carbone,
- A et B sont des groupements éventuellement présents, qui représentent alors un radical hydrocarboné ayant 1 à 4 atomes de carbone,

avec formule (IIb)

$$R\text{-}A\text{-}Si(OB)_3$$

dans laquelle :

- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- A est un groupement éventuellement présent, qui représente alors un radical hydrocarboné ayant 1 à 4 atomes de carbone,
- B représente un radical hydrocarboné ayant 1 à 4 atomes de carbone,

avec formule (IIc) :

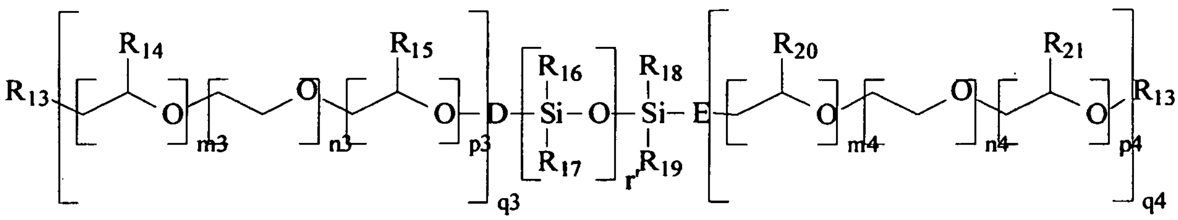

dans laquelle :

- m3, p3, m4 et p4 représentent un nombre de motifs d'oxyde d'alkylène inférieur ou égal à 150,
- n3 et n4 représentent un nombre de motifs d'oxyde d'éthylène inférieur ou égal à 150,
- q3 et q4 représentent un nombre entier au moins égal à 1 et tel que $0 \leq (m3+n3+p3)q3 \leq 150$ et $0 \leq (m4+n4+p4)q4 \leq 150$,
- r' représente un nombre tel que $1 \leq r' \leq 200$,
- $R_{13}$ représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- $R_{14}$, $R_{15}$, $R_{20}$ et $R_{21}$, représentent l'hydrogène ou le radical méthyle ou éthyle,
- $R_{16}$, $R_{17}$, $R_{18}$ et $R_{19}$, représentent des groupements linéaires ou ramifiés alkyle, ou aryle, ou alkylaryle, ou arylalkyle ayant 1 à 20 atomes de carbone, ou leur mélange,
- D et E sont des groupements éventuellement présents, qui représentent alors un radical hydrocarboné ayant 1 à 4 atomes de carbone,

d) éventuellement d'au moins un monomère du type acrylamide ou méthacrylamide ou leurs dérivés et leurs mélanges tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle ou leurs mélanges, les esters insaturés tels que le méthacrylate de N-[2-(diméthylamino) éthyl], ou l'acrylate de N-[2-(diméthylamino) éthyl] ou leurs mélanges, les vinyliques tels que l'acétate de vinyle, la vinylpyrrolidone, le styrène, l'alphaméthylstyrène et leurs dérivés ou leurs mélanges, ou d'au moins un monomère cationique ou ammonium quaternaire tels que le chlorure ou sulfate de [2-(méthacryloyloxy) éthyl] triméthyl ammonium, le chlorure ou sulfate de [2-(acryloyloxy) éthyl] triméthyl ammonium, le chlorure ou sulfate de [3-(acrylamido) propyl] triméthyl ammonium, le chlorure ou sulfate de diméthyl diallyl ammonium, le chlorure ou sulfate de [3-(méthacrylamido) propyl] triméthyl ammonium, ou leurs mélanges,

e) éventuellement d'au moins un monomère réticulant choisi d'une manière non limitative dans le groupe constitué par le diméthacrylate d'éthylène glycol, le triméthylolpropanetriacrylate, l'acrylate d'allyle, les maléates d'allyle, le méthylène-bis-acrylamide, le méthylène-bis-méthacrylamide, le tétrallyloxyéthane, les triallylcyanurates, les éthers allyliques obtenus à partir de polyols tels que le pentaérythritol, le sorbitol, le sucrose ou autres,
le total des constituants a), b), c), d) et e) étant égal à 100 %,
et ayant une viscosité intrinsèque inférieure ou égale à 100 ml/g déterminée selon la méthode précitée.

Plus particulièrement, l'utilisation du copolymère précité est **caractérisée en ce que** ledit copolymère est constitué, exprimé en poids :

a) de 2 % à 95 %, préférentiellement de 3 % à 25 % et très préférentiellement de 4 % à 15 % d'au moins un monomère anionique à insaturation éthylénique et à fonction monocarboxylique choisi parmi les monomères à insaturation éthylénique et à fonction monocarboxylique tels que l'acide acrylique ou méthacrylique ou encore les hémiesters de diacides tels que les monoesters en $C_1$ à $C_4$ des acides maléique ou itaconique, ou leurs mélanges, ou à fonction dicarboxylique choisi parmi les monomères à insaturation éthylénique et fonction dicarboxylique tels que l'acide crotonique, isocrotonique, cinnamique, itaconique, maléique, ou encore les anhydrides d'acides carboxyliques, tels que l'anhydride maléique ou à fonction sulfonique choisi parmi les monomères à insaturation éthylénique et à fonction sulfonique tels que l'acide acrylamido-méthyl-propane-sulfonique, le méthallylsulfonate de sodium, l'acide vinyl sulfonique et l'acide styrène sulfonique ou bien encore à fonction phosphorique choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore à fonction phosphonique choisi parmi les monomères à insaturation éthylénique et à fonction phosphonique tels que l'acide vinyl phosphonique, ou leurs mélanges,

b) de 97,9 % à 4,9 %, préférentiellement de 95 % à 65 % et très préférentiellement de 92 % à 78 % d'au moins un monomère à insaturation éthylénique non ionique de formule (I) :

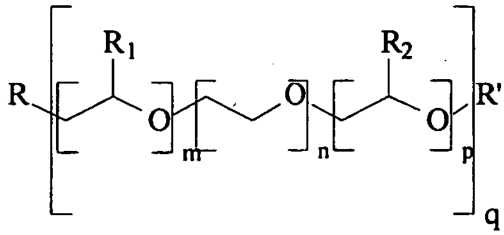

dans laquelle :

- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que 5 ≤ (m+n+p)q ≤ 150, et représente préférentiellement un nombre entier tel que 15 ≤ (m+n+p)q ≤ 120,
- $R_1$ représente l'hydrogène ou le radical méthyle ou éthyle,
- $R_2$ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente l'hydrogène ou un radical hydrocarboné ayant 1 à 40 atomes de carbone, et représente préférentiellement un radical hydrocarboné ayant 1 à 12 atomes de carbone et très préférentiellement un radical hydrocarboné ayant 1 à 4 atomes de carbone,

ou du mélange de plusieurs monomères de formule (I),

c) de 0,1 % à 50 %, préférentiellement de 0,2 % à 10 % et très préférentiellement de 0,3 % à 5 % d'au moins un monomère organosililé, choisi de manière préférentielle parmi les molécules de formules (IIa) ou (IIb) ou (IIc) ou leurs mélanges :
avec formule (IIa)

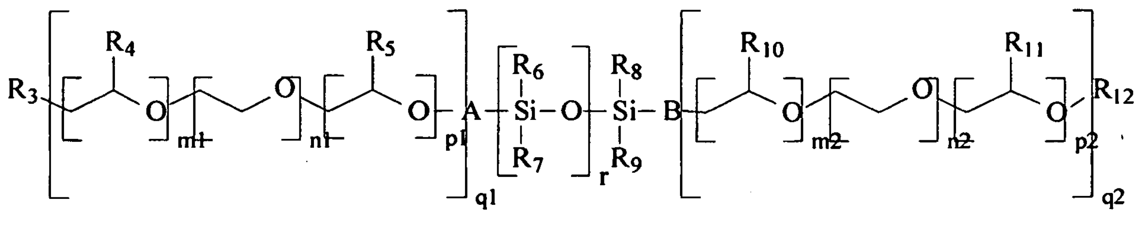

dans laquelle :

- m1, p1, m2 et p2 représentent un nombre de motifs d'oxyde d'alkylène inférieur ou égal à 150,
- n1 et n2 représentent un nombre de motifs d'oxyde d'éthylène inférieur ou égal à 150,
- q1 et q2 représentent un nombre entier au moins égal à 1 et tel que 0 ≤ (m1+n1+p1)q1 ≤ 150 et 0 ≤ (m2+n2+p2) q2 ≤ 150,
- r représente un nombre tel que 1 ≤ r ≤ 200,
- $R_3$ représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- $R_4$, $R_5$, $R_{10}$ et $R_{11}$, représentent l'hydrogène ou le radical méthyle ou éthyle,

- $R_6$, $R_7$, $R_8$ et $R_9$, représentent des groupements linéaires ou ramifiés alkyle, ou aryle, ou alkylaryle, ou arylalkyle ayant 1 à 20 atomes de carbone, ou leur mélange,
- $R_{12}$ représente un radical hydrocarboné ayant 1 à 40 atomes de carbone,
- A et B sont des groupements éventuellement présents, qui représentent alors un radical hydrocarboné ayant 1 à 4 atomes de carbone,

avec formule (IIb)

$$R\text{-}A\text{-}Si(OB)_3$$

dans laquelle :

- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- A est un groupement éventuellement présent, qui représente alors un radical hydrocarboné ayant 1 à 4 atomes de carbone,
- B représente un radical hydrocarboné ayant 1 à 4 atomes de carbone,

avec formule (IIc) :

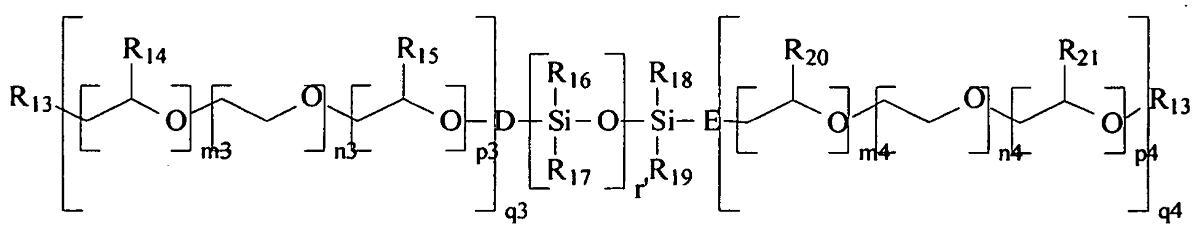

dans laquelle :

- m3, p3, m4 et p4 représentent un nombre de motifs d'oxyde d'alkylène inférieur ou égal à 150,
- n3 et n4 représentent un nombre de motifs d'oxyde d'éthylène inférieur ou égal à 150,
- q3 et q4 représentent un nombre entier au moins égal à 1 et tel que $0 \leq (m3+n3+p3)q3 \leq 150$ et $0 \leq (m4+n4+p4)q4 \leq 150$,
- r' représente un nombre tel que $1 \leq r' \leq 200$,
- $R_{13}$ représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- $R_{14}$, $R_{15}$, $R_{20}$ et $R_{21}$, représentent l'hydrogène ou le radical méthyle ou éthyle,
- $R_{16}$, $R_{17}$, $R_{18}$ et $R_{19}$, représentent des groupements linéaires ou ramifiés alkyle, ou aryle, ou alkylaryle, ou arylalkyle ayant 1 à 20 atomes de carbone, ou leur mélange,
- D et E sont des groupements éventuellement présents, qui représentent alors un radical hydrocarboné ayant 1 à 4 atomes de carbone,

d) de 0 % à 50 %, préférentiellement de 0 % à 10 % et très préférentiellement de 0 % à 5 % d'au moins un monomère du type acrylamide ou méthacrylamide ou leurs dérivés et leurs mélanges tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle ou leurs mélanges, les esters insaturés tels que le méthacrylate de N-[2-(diméthylamino) éthyl], ou l'acrylate de N-[2-(diméthylamino) éthyl] ou leurs mélanges, les vinyliques tels que l'acétate de vinyle, la vinylpyrrolidone, le styrène, l'alphaméthylstyrène et leurs dérivés

ou leurs mélanges, ou d'au moins un monomère cationique ou ammonium quaternaire tels que le chlorure ou sulfate de [2-(méthacryloyloxy) éthyl] triméthyl ammonium, le chlorure ou sulfate de [2-(acryloyloxy) éthyl] triméthyl ammonium, le chlorure ou sulfate de [3-(acrylamido) propyl] triméthyl ammonium, le chlorure ou sulfate de diméthyl diallyl ammonium, le chlorure ou sulfate de [3-(méthacrylamido) propyl] triméthyl ammonium, ou leurs mélanges,

e) de 0 % à 5 %, préférentiellement de 0 % à 3 % d'au moins un monomère réticulant choisi d'une manière non limitative dans le groupe constitué par le diméthacrylate d'éthylène glycol, le triméthylolpropanetriacrylate, l'acrylate d'allyle, les maléates d'allyle, le méthylène-bis-acrylamide, le méthylène-bis-méthacrylamide, le tétrallyloxyéthane, les triallylcyanurates, les éthers allyliques obtenus à partir de polyols tels que le pentaérythritol, le sorbitol, le sucrose ou autres,
le total des constituants a), b), c), d) et e) étant égal à 100 %,
et ayant une viscosité intrinsèque inférieure ou égale à 100 ml/g déterminée selon la méthode précitée.

Le copolymère utilisé selon l'invention est obtenu par des procédés connus de copolymérisation radicalaire en solution, en émulsion directe ou inverse, en suspension ou précipitation dans des solvants appropriés, en présence de systèmes catalytiques et d'agents de transfert connus ou encore par des procédés de polymérisation radicalaire contrôlée tels que la méthode dénommée Reversible Addition Fragmentation Transfer (RAFT), la méthode dénommée Atom Transfer Radical Polymerization (ATRP), la méthode dénommée Nitroxide Mediated Polymerization (NMP) ou encore la méthode dénommée Cobaloxime Mediated Free Radical Polymerization.

Ce copolymère obtenu sous forme acide et éventuellement distillé, peut être également partiellement ou totalement neutralisé par un ou plusieurs agents de neutralisation disposant d'une fonction neutralisante monovalente ou d'une fonction neutralisante polyvalente tels que par exemple pour la fonction monovalente ceux choisis dans le groupe constitué par les cations alcalins, en particulier le sodium, le potassium, le lithium, l'ammonium ou les amines primaires, secondaires ou tertiaires aliphatiques et/ou cycliques telles que par exemple la stéarylamine, les éthanolamines (mono-, di-, triéthanolamine), la mono et diéthylamine, la cyclohexylamine, la méthylcyclohexylamine, l'amino méthyl propanol, la morpholine, ou bien encore pour la fonction polyvalente ceux choisis dans le groupe constitué par les cations divalents alcalino-terreux, en particulier le magnésium et le calcium, ou encore le zinc, de même que par les cations trivalents, dont en particulier l'aluminium, ou encore par certains cations de valence plus élevée.

Chaque agent de neutralisation intervient alors selon des taux de neutralisation propres à chaque fonction de valence.

Selon une autre variante, le copolymère issu de la réaction de copolymérisation peut éventuellement avant ou après la réaction de neutralisation totale ou partielle, être traité et séparé en plusieurs phases, selon des procédés statiques ou dynamiques connus de l'homme de l'art, par un ou plusieurs solvants polaires appartenant notamment au groupe constitué par l'eau, le méthanol, l'éthanol, le propanol, l'isopropanol, les butanols, l'acétone, le tétrahydrofurane ou leurs mélanges.

L'une des phases correspond alors au copolymère utilisé selon l'invention comme agent dispersant et/ou d'aide au broyage de matières minérales en suspension aqueuse.

L'invention concerne aussi ledit agent faiblement ionique et hydrosoluble, d'aide au broyage de substances minérales en suspension aqueuse ayant la propriété d'être faiblement chargée. Ce dit agent se **caractérise en ce qu**'il est le copolymère précédemment décrit.

L'invention concerne également le procédé de broyage mettant en oeuvre ledit agent d'aide au broyage de matières minérales en suspension aqueuse.

En pratique, selon l'invention, l'opération de broyage de la substance minérale consiste à affiner en particules très fines ladite substance avec un corps broyant dans un milieu aqueux à l'aide du copolymère utilisé comme agent d'aide au broyage. Une variante consiste à former, par introduction de la quantité totale du copolymère, une suspension aqueuse de la substance minérale à broyer, dont les particules ont une dimension initiale au plus égale à 50 micromètres.

A la suspension de la substance minérale à broyer ainsi formée, on ajoute le corps broyant de granulométrie avantageusement comprise entre 0,20 millimètre et 4 millimètres.

Le corps broyant se présente en général sous la forme de particules de matériaux aussi divers que l'oxyde de silicium, l'oxyde d'aluminium, l'oxyde de zirconium ou de leurs mélanges ainsi que les résines synthétiques de haute dureté, les aciers, ou autres.

Le corps broyant est de préférence ajouté à la suspension en une quantité telle que le rapport en poids entre ce matériau de broyage et la substance minérale à broyer soit d'au moins 2/1, ce rapport étant de préférence compris entre les limites 3/1 et 5/1.

Le mélange de la suspension et du corps broyant est alors soumis à l'action mécanique de brassage, telle que celle qui se produit dans un broyeur classique à microéléments.

La quantité d'agent d'aide au broyage introduit varie de 0,05 % à 10 % en poids sec desdits copolymères par rapport à la masse sèche de la substance minérale à affiner.

Le temps nécessaire pour obtenir une excellente finesse de la substance minérale après broyage varie selon la nature et la quantité des substances minérales à affiner et selon le mode d'agitation utilisé et la température du milieu pendant l'opération de broyage.

Une autre variante consiste à utiliser une partie de l'agent d'aide au broyage avant l'étape de broyage et à mettre en oeuvre le reste de la quantité de l'agent d'aide au broyage pendant l'opération de broyage.

Enfin, une autre variante consiste à ne pas mettre en oeuvre le copolymère avant l'étape de broyage et à utiliser toute la quantité nécessaire pendant l'opération de broyage, qui se déroule en une ou plusieurs étapes.

Ainsi, selon l'invention, le procédé de broyage en suspension aqueuse destinés à des applications pigmentaires consistant à affiner en particules très fines une suspension aqueuse de ces matériaux minéraux se **caractérise en ce que** l'on utilise comme agent d'aide au broyage 0,05 % à 10 % en poids sec des polymères précités par rapport au poids sec de matières minérales avant et/ou pendant l'étape de broyage.

Un autre mode de réalisation de l'invention consiste aussi à mettre en oeuvre, en plus dudit copolymère utilisé comme agent d'aide au broyage, au moins un autre agent d'aide au broyage avant et/ou pendant l'étape de broyage.

Ainsi, selon une variante, le procédé de broyage selon l'invention se **caractérise en ce que** l'on utilise comme agent d'aide au broyage 0,05 % à 10 % en poids sec des polymères précités par rapport au poids sec de matières minérales et au moins un autre dispersant ou agent d'aide au broyage avant et/ou pendant l'étape de broyage.

Cet autre dispersant ou agent d'aide au broyage est alors choisi parmi les dispersants ou agents d'aide au broyage bien connus de l'homme du métier tels que notamment les homopolymères ou copolymères de l'acide acrylique sous leurs formes acides, ou partiellement ou totalement neutralisées par un ou plusieurs agents de neutralisation, les agents de neutralisations étant choisis parmi la même liste que celle précédemment citée, ou est choisi parmi les dispersants ou agents d'aide au broyage tels que notamment les donneurs d'ions $H_3O^+$ parmi lesquels on peut citer l'acide phosphorique et/ou ses sels avec des bases mono et/ou divalentes telles que la soude ou la chaux.

De manière particulière, le procédé de broyage selon l'invention se **caractérise en ce que** l'on utilise de 0,05 % à 1,0 %, en poids sec par rapport au poids sec de substances minérales, dudit autre dispersant ou agent d'aide au broyage.

La température au cours de l'étape de broyage et pour toutes les variantes du procédé de broyage selon l'invention est comprise entre 15°C et 150°C, préférentiellement entre 50°C et 105°C et très préférentiellement entre 60°C et 98°C.

Pour des matières minérales contenant du carbonate, le pH au cours de l'étape de broyage et pour toutes les variantes du procédé de broyage selon l'invention est compris entre 6 et 13, préférentiellement entre 7,5 et 12 et très préférentiellement entre 8 et 10.

Pour des matières minérales ne contenant pas de carbonate, le pH au cours de l'étape de broyage et pour toutes les variantes du procédé de broyage selon l'invention est compris entre 2 et 13, préférentiellement entre 7,5 et 12 et très préférentiellement entre 8 et 10.

Lors de la mise en oeuvre de ces diverses variantes de broyage, outre le problème qu'elle résout, l'invention possède l'avantage qu'il se forme, pendant le broyage, moins de mousse lors de l'utilisation des copolymères que lors de l'utilisation des polymères de l'art antérieur.

Un autre avantage de l'invention consiste en ce que les suspensions aqueuses de matières minérales affinées selon l'invention ont toujours des grains de matières minérales ayant, à granulométrie équivalente, une surface spécifique inférieure aux grains de matières minérales des suspensions aqueuses de matières minérales affinées selon l'art antérieur par mise en oeuvre de polyacrylate. Cet avantage est perceptible lorsque l'utilisateur final utilise des latex dans ses formulations de couchage.

Ainsi les suspensions aqueuses de matières minérales selon l'invention sont **caractérisées en ce que** les grains de matières minérales ont, à granulométrie équivalente, une surface spécifique BET inférieure aux grains de matières minérales des suspensions aqueuses de matières minérales affinées à l'aide d'agents d'aide au broyage tels que les polyacrylates homopolymères ou copolymères bien connus de l'homme de l'art.

Les substances minérales à affiner selon le procédé de l'invention peuvent être d'origines très diverses tel que le carbonate de calcium, les dolomies, les kaolins, les kaolins calcinés, le talc, le gypse, l'oxyde de titane, ou encore le trihydroxyde d'aluminium ou toute autre charge et/ou pigment qui doivent être broyées pour être utilisables dans des applications telles que la fabrication des papiers, cartons ou analogues et sont préférentiellement du carbonate de calcium tel que le carbonate de calcium naturel choisi parmi le marbre, la calcite, la craie ou leurs mélanges.

Les papiers fabriqués selon l'invention se caractérisent en ce qu'ils contiennent les dites suspensions aqueuses de charges et/ou pigments selon l'invention.

La portée et l'intérêt de l'invention seront mieux perçus grâce aux exemples suivants qui ne sauraient être limitatifs.

EXEMPLE 1

Cet exemple illustre, par la comparaison à granulométrie identique, la réduction de la demande en polymère cationique dans la masse par la mise en oeuvre de suspension aqueuse de carbonate de calcium contenant le copolymère utilisé, selon l'invention, comme agent d'aide au broyage.

Essai n° 1

Cet essai illustre l'art antérieur et met en oeuvre 0,27 % en poids sec, par rapport au poids sec de carbonate de calcium, d'un polyacrylate de sodium et de magnésium de viscosité intrinsèque égale à 7,8 ml/g selon la méthode dite méthode de visco. intrinsèque précitée pour obtenir, à partir d'un carbonate de calcium d'un diamètre médian de 15 µm, une suspension aqueuse de carbonate de calcium broyé ayant une concentration en matière sèche égale à 65,5 % en poids et ayant une granulométrie telle que 61 % en poids des particules ont un diamètre inférieur à 2 µm, 30 % en poids des particules ont un diamètre inférieur à 1 µm mesurée au Sédigraph™ 5100 correspondant à un diamètre médian égal à 1,63 µm.
Pour ce faire, on utilise un broyeur du type Dyno-Mill™ à cylindre fixe et impulseur tournant, dont le corps broyant est constitué par des billes à base de zirconium de diamètre compris dans l'intervalle 0,6 millimètre à 1 millimètre.
Le volume total occupé par le corps broyant est de 1000 centimètres cubes tandis que sa masse est de 2700 g.
La chambre de broyage a un volume de 1400 centimètres cubes.
La vitesse circonférentielle du broyeur est de 10 mètres par seconde.
La suspension de pigment est recyclée à raison de 40 litres par heure.
La sortie du Dyno-Mill est munie d'un séparateur de mailles 200 microns permettant de séparer la suspension résultant du broyage et le corps broyant.
La température lors de chaque essai de broyage est maintenue à environ 60°C.
Une heure après la fin du broyage, on récupère dans un flacon un échantillon de la suspension pigmentaire dont la granulométrie de cette suspension (% des particules inférieures à 2 micromètres) est mesurée à l'aide d'un granulomètre Sédigraph™ 5100.
La viscosité Brookfield™ de la suspension est mesurée à l'aide d'un viscosimètre Brookfield™ type RVT, à une température de 23°C et une vitesse de rotation de 100 tours par minute avec le mobile 3 adéquat.
Après un temps de repos de 7 jours dans le flacon, la viscosité Brookfield™ de la suspension est mesurée par introduction, dans le flacon non agité, du mobile adéquat du viscosimètre Brookfield™ type RVT, à une température de 23°C et une vitesse de rotation de 100 tours par minute (viscosité AVAG = avant agitation).
Les mêmes mesures de viscosité Brookfield™ sont également effectuées une fois le flacon agité pendant 5 minutes et constituent les résultats de viscosité APAG (après agitation).
Les résultats de concentration en matière sèche (E.S.) et de viscosité Brookfield™ obtenus sont les suivants :

E.S. = 65,5 %
Viscosité (To) = 115 mPa.s
Viscosité AVAG ($T_{7\ jours}$) = 620 mPa.s
Viscosité APAG ($T_{7\ jours}$) = 155 mPa.s

Ces mesures de viscosité Brookfield™ ayant été effectuées, on procède à la détermination de la surface spécifique et de la demande cationique du carbonate de calcium.
La surface spécifique BET déterminée selon la norme ISO 9277 est égale à 7,2 $m^2$/g. La demande en polymère cationique PDDPC mesurée, à l'aide du titrateur Mettler DL77 et du détecteur Mütec PCD 02 par la méthode de titration cationique mettant en oeuvre 0,005 mole d'une solution de 20 % de chlorure de poly(N,N-dimethyl-3,5-dimethylene-piperidinium (PDDPC) vendu par Acros Organics est égale à 12100 µ Val/kg, cette valeur étant la valeur correspondante à la charge zéro du détecteur utilisé.

Essai n° 2

Cet essai illustre l'art antérieur et met en oeuvre 0,47 % en poids sec, par rapport au poids sec de carbonate de calcium, d'un polyacrylate de sodium et de magnésium de viscosité intrinsèque égale à 7,8 ml/g selon la méthode dite méthode de visco. intrinsèque précitée pour obtenir, à partir d'un carbonate de calcium d'un diamètre médian de 15 µm et dans les mêmes conditions opératoires et avec le même matériel que dans l'essai n° 1, une suspension aqueuse de carbonate de calcium broyé ayant une concentration en matière sèche égale à 75 % en poids et ayant une granulométrie telle que 90 % en poids des particules ont un diamètre inférieur à 2 µm mesurée au Sédigraph™ 5100.
Les résultats de concentration en matière sèche (E.S.) et de viscosité Brookfield™ obtenus avec la même

méthode de mesure que l'essai n° 1 sont les suivants :

E.S. = 75,8 %
Viscosité ($T_0$) = 265 mPa.s
Viscosité AVAG ($T_{7\ jours}$) = 726 mPa.s
Viscosité APAG ($T_{7\ jours}$) = 278 mPa.s

Ces mesures de viscosité Brookfield™ ayant été effectuées, on procède à la détermination de la surface spécifique et de la demande cationique du carbonate de calcium avec la même méthode que dans l'essai n°1.
On obtient une surface spécifique BET égale à 12,0 $m^2/g$ et une demande en polymère cationique PDDPC égale à 20220 μ Val/kg.

Essai n° 3

Cet essai illustre l'art antérieur et met en oeuvre 0,79 % en poids sec, par rapport au poids sec de carbonate de calcium, d'un polyacrylate de sodium et de magnésium de viscosité intrinsèque égale à 7,8 ml/g selon la méthode dite méthode de visco. intrinsèque précitée pour obtenir, à partir d'un carbonate de calcium d'un diamètre médian de 15 μm et dans les mêmes conditions opératoires et avec le même matériel que dans l'essai n° 1, une suspension aqueuse de carbonate de calcium broyé ayant une concentration en matière sèche égale à 76,5 % en poids et ayant une granulométrie telle que 78 % en poids des particules ont un diamètre inférieur à 1 μm mesurée au Sédigraph™ 5100.
Les résultats de concentration en matière sèche (E.S.) et de viscosité Brookfield™ obtenus avec la même méthode de mesure que l'essai n° 1 sont les suivants :

E.S. = 77,1 %
Viscosité (To) = 371 mPa.s
Viscosité AVAG ($T_{7\ jours}$) = 886 mPa.s
Viscosité APAG ($T_{7\ jours}$) = 412 mPa.s

Ces mesures de viscosité Brookfield™ ayant été effectuées, on procède à la détermination de la surface spécifique et de la demande cationique du carbonate de calcium avec la même méthode que dans l'essai n°1.
On obtient une surface spécifique BET égale à 16,2 $m^2/g$ et une demande en polymère cationique PDDPC égale à 33990 μ Val/kg.

Essai n° 4

Cet essai illustre l'art antérieur et met en oeuvre 0,40 % en poids sec, par rapport au poids sec de carbonate de calcium, d'un copolymère composé, exprimé en poids, de

- 14 % d'acide acrylique
- 3 % d'acide méthacrylique
- 83 % de méthacrylate de polyéthylène glycol de poids moléculaire 2000

de viscosité intrinsèque égale à 20,0 ml/g selon la méthode dite méthode de visco. intrinsèque précitée, pour obtenir, à partir d'un carbonate de calcium d'un diamètre médian de 15 μm et dans les mêmes conditions opératoires et avec le même matériel que dans l'essai n° 1, une suspension aqueuse carbonate de calcium broyé ayant une concentration en matière sèche égale à 75 % en poids et ayant une granulométrie telle que 57 % en poids des particules ont un diamètre inférieur à 2 μm mesurée au Sédigraph™ 5100.
Les résultats de concentration en matière sèche (E.S.) et de viscosité Brookfield™ obtenus avec la même méthode de mesure que l'essai n° 1 sont les suivants :

E.S. = 71,3 %
Viscosité ($T_0$) = 158 mPa.s
Viscosité AVAG ($T_{7\ jours}$) = 677 mPa.s
Viscosité APAG ($T_{7\ jours}$) = 254 mPa.s

Ces mesures de viscosité Brookfield™ ayant été effectuées, on procède à la détermination de la surface spécifique et de la demande cationique du carbonate de calcium avec la même méthode que dans l'essai n°1.
On obtient une surface spécifique BET égale à 4,9 $m^2/g$ et une demande en polymère cationique PDDPC

égale à 3100 μ Val/kg.

Essai n° 5

Cet essai illustre l'art antérieur et met en oeuvre 1,17 % en poids sec, par rapport au poids sec de carbonate de calcium, du copolymère mis en oeuvre dans l'essai n° 4 pour obtenir, à partir d'un carbonate de calcium d'un diamètre médian de 15 μm et dans les mêmes conditions opératoires et avec le même matériel que dans l'essai n° 1, une suspension aqueuse de carbonate de calcium broyé ayant une concentration en matière sèche égale à 75 % en poids et ayant une granulométrie telle que 87 % en poids des particules ont un diamètre inférieur à 2 μm mesurée au Sédigraph™ 5100.

Les résultats de concentration en matière sèche (E.S.) et de viscosité Brookfield™ obtenus avec la même méthode de mesure que l'essai n° 1 sont les suivants :

E.S. = 72,0 %
Viscosité ($T_0$) = 224 mPa.s
Viscosité AVAG ($T_{7\ jours}$) = 987 mPa.s
Viscosité APAG ($T_{7\ jours}$) = 248 mPa.s

Ces mesures de viscosité Brookfield™ ayant été effectuées, on procède à la détermination de la surface spécifique et de la demande cationique du carbonate de calcium avec la même méthode que dans l'essai n°1.

On obtient une surface spécifique BET égale à 9,6 $m^2$/g et une demande en polymère cationique PDDPC égale à 10000 μ Val/kg.

Dans cet essai, une mesure de mousse a été effectuée en mesurant le temps que met pour se former une certaine hauteur de mousse (hauteur h en cm) et le temps qu'il faut pour faire disparaître cette mousse ($t_{disp}$). Dans cet essai, t = 90 secondes pour h = 23 cm et $t_{disp}$ = 5 minutes.

Essai n° 6

Cet essai illustre l'invention et met en oeuvre 0,40 % en poids sec, par rapport au poids sec de carbonate de calcium, d'un copolymère composé, exprimé en poids, de :

a) 3,0 % d'acide acrylique et 2,0 % d'acide maléique
b) 94,0 % d'un monomère de formule (I) dans laquelle :

$R_1$ représente l'hydrogène
$R_2$ représente l'hydrogène
R représente le groupe vinyle
R' représente le radical méthyle
avec m = p = 0 ; n = 114 ; q= 1 et (m+n+p)q = 114

c) 1,0 % d'un monomère de formule (IIb) dans laquelle

R représente le groupe méthacrylate
A représente le radical propyle
B représente le radical méthyle

de viscosité intrinsèque égale à 39,5 ml/g selon la méthode dite méthode de visco. intrinsèque précitée (et égale à 30,3 ml/g selon la deuxième méthode) pour obtenir, à partir d'un carbonate de calcium d'un diamètre médian de 15 μm et dans les mêmes conditions opératoires et avec le même matériel que dans l'essai n ° 1, une suspension aqueuse de carbonate de calcium broyé ayant une concentration en matière sèche égale à 75 % en poids et ayant une granulométrie telle que 59 % en poids des particules ont un diamètre inférieur à 2 μm mesurée au Sédigraph™ 5100 correspondant à un diamètre médian égal à 1,41 μm.

Les résultats de concentration en matière sèche (E.S.) et de viscosité Brookfield™ obtenus avec la même méthode de mesure que l'essai n° 1 sont les suivants :

E.S. = 75,2 %
Viscosité ($T_0$) = 125 mPa.s

Viscosité AVAG ($T_{7\ jours}$) = 338 mPa.s
Viscosité APAG ($T_{7\ jours}$) = 127 mPa.s

Ces mesures de viscosité Brookfield™ ayant été effectuées, on procède à la détermination de la surface spécifique et de la demande cationique du carbonate de calcium avec la même méthode que dans l'essai n°1.
On obtient une surface spécifique BET égale à 4,8 $m^2/g$ et une demande en polymère cationique PDDPC égale à 590 μ Val/kg.
On voit ainsi que la demande en polymère cationique est plus faible que celle de l'art antérieur à granulométrie équivalente.
Dans cet essai, une mesure de mousse a été effectuée avec le même mode opératoire que dans l'essai n° 5 et on obtient :

t = 600 secondes pour h = 6cm et $t_{disp}$ = immédiat.

Ces résultats montrent qu'il se crée beaucoup moins de mousse que dans l'essai de l'art antérieur.

<u>Essai n° 7</u>

Cet essai illustre l'invention et met en oeuvre 1,07 % en poids sec, par rapport au poids sec de carbonate de calcium, du copolymère mis en oeuvre dans l'essai n° 6 pour obtenir, à partir d'un carbonate de calcium d'un diamètre médian de 15 μm et dans les mêmes conditions opératoires et avec le même matériel que dans l'essai n ° 1, une suspension aqueuse de carbonate de calcium broyé ayant une concentration en matière sèche égale à 75 % en poids et ayant une granulométrie telle que 90 % en poids des particules ont un diamètre inférieur à 2 μm mesurée au Sédigraph™ 5100 correspondant à un diamètre médian égal à 0,83 μm.
Les résultats de concentration en matière sèche (E.S.) et de viscosité Brookfield™ obtenus avec la même méthode de mesure que l'essai n° 1 sont les suivants :

E.S. = 75,4 %
Viscosité ($T_0$) = 241 mPa.s
Viscosité AVAG ($T_{7\ jours}$) = 359 mPa.s
Viscosité APAG ($T_{7\ jours}$) = 241 mPa.s

Ces mesures de viscosité Brookfield™ ayant été effectuées, on procède à la détermination de la surface spécifique et de la demande cationique du carbonate de calcium avec la même méthode que dans l'essai n°1.
On obtient une surface spécifique BET égale à 6,8 $m^2/g$ et une demande en polymère cationique PDDPC égale à 2340 μ Val/kg.
On voit ainsi que la demande en polymère cationique est plus faible que celle de l'art antérieur à granulométrie équivalente.
Dans cet essai, une mesure de mousse a été effectuée avec le même mode opératoire que dans l'essai n° 5 et on obtient :

t = 600 secondes pour h = 6cm et $t_{disp}$ = immédiat.

Ces résultats montrent qu'il se crée beaucoup moins de mousse que dans l'essai de l'art antérieur.

<u>Essai n° 8</u>

Cet essai illustre l'invention et met en oeuvre 2,10 % en poids sec, par rapport au poids sec de carbonate de calcium, du copolymère mis en oeuvre dans l'essai n° 6 pour obtenir, à partir d'un carbonate de calcium d'un diamètre médian de 15 μm et dans les mêmes conditions opératoires et avec le même matériel que dans l'essai n ° 1, une suspension aqueuse de carbonate de calcium broyé ayant une concentration en matière sèche égale à 75 % en poids et ayant une granulométrie telle que 80 % en poids des particules ont un diamètre inférieur à 1 μm mesurée au Sédigraph™ 5100 correspondant à un diamètre médian égal à 0,55 μm.
Les résultats de concentration en matière sèche (E.S.) et de viscosité Brookfield™ obtenus avec la même méthode de mesure que l'essai n° 1 sont les suivants :

E.S. = 75,0 %
Viscosité (To) = 717 mPa.s

Viscosité AVAG ($T_{7\ jours}$) = 1570 mPa.s
Viscosité APAG ($T_{7\ jours}$) = 697 mPa.s

Ces mesures de viscosité Brookfield™ ayant été effectuées, on procède à la détermination de la surface spécifique et de la demande cationique du carbonate de calcium avec la même méthode que dans l'essai n°1.
On obtient une surface spécifique BET égale à 8,4 $m^2/g$ et une demande en polymère cationique PDDPC égale à 4590 μ Val/kg.
On voit ainsi que la demande en polymère cationique est plus faible que celle de l'art antérieur à granulométrie équivalente.
Dans cet essai, une mesure de mousse a été effectuée avec le même mode opératoire que dans l'essai n° 5 et on obtient :

t = 600 secondes pour h = 6cm et $t_{disp}$ = immédiat.

Ces résultats montrent qu'il se crée beaucoup moins de mousse que dans l'essai de l'art antérieur.

Essai n° 9

Cet essai illustre l'invention et met en oeuvre 0,40 % en poids sec, par rapport au poids sec de carbonate de calcium, d'un copolymère composé, exprimé en poids, de :

a) 8,7 % d'acide acrylique et 1,5 % d'acide méthacrylique
b) 89,4 % d'un monomère de formule (I) dans laquelle :

$R_1$ représente l'hydrogène
$R_2$ représente l'hydrogène
R représente le groupe méthacrylate
R' représente le radical méthyle avec m = p = 0 ; n = 114 ; q= 1 et (m+n+p)q = 114

c) 0,4 % d'un monomère de formule (IIb) dans laquelle

R représente le groupe méthacrylate
A représente le radical propyle
B représente le radical méthyle

de viscosité intrinsèque égale à 20,7 ml/g selon la méthode dite méthode de visco. intrinsèque précitée, pour obtenir, à partir d'un carbonate de calcium d'un diamètre médian de 15 μm et dans les mêmes conditions opératoires et avec le même matériel que dans l'essai n° 1, une suspension aqueuse de carbonate de calcium broyé ayant une concentration en matière sèche égale à 75 % en poids et ayant une granulométrie telle que 58 % en poids des particules ont un diamètre inférieur à 2 μm mesurée au Sédigraph™ 5100.

Les résultats de concentration en matière sèche (E.S.) et de viscosité Brookfield™ obtenus avec la même méthode de mesure que l'essai n° 1 sont les suivants :

E.S. = 71,9 %
Viscosité (To) = 138 mPa.s
Viscosité AVAG ($T_{7\ jours}$) = 486 mPa.s
Viscosité APAG ($T_{7\ jours}$) = 159 mPa.s

Ces mesures de viscosité Brookfield™ ayant été effectuées, on procède à la détermination de la surface spécifique et de la demande cationique du carbonate de calcium avec la même méthode que dans l'essai n°1.
On obtient une surface spécifique BET égale à 4,8 $m^2/g$ et une demande en polymère cationique PDDPC égale à 340 μ Val/kg.
On voit ainsi que la demande en polymère cationique est plus faible que celle de l'art antérieur à granulométrie équivalente.
Dans cet essai, une mesure de mousse a été effectuée avec le même mode opératoire que dans l'essai n° 5 et on obtient :

t = 510 secondes pour h = 23 cm
$t_{disp}$ = 2 minutes.

Ces résultats montrent qu'il se crée beaucoup moins de mousse que dans l'essai de l'art antérieur.

Essai n° 10

Cet essai illustre l'invention et met en oeuvre 1,10 % en poids sec, par rapport au poids sec de carbonate de calcium, du copolymère mis en oeuvre dans l'essai n° 9 pour obtenir, à partir d'un carbonate de calcium d'un diamètre médian de 15 µm et dans les mêmes conditions opératoires et avec le même matériel que dans l'essai n° 1, une suspension aqueuse de carbonate de calcium broyé ayant une concentration en matière sèche égale à 75 % en poids et ayant une granulométrie telle que 89 % en poids des particules ont un diamètre inférieur à 2 µm mesurée au Sédigraph™ 5100.

Les résultats de concentration en matière sèche (E.S.) et de viscosité Brookfield™ obtenus avec la même méthode de mesure que l'essai n° 1 sont les suivants :

E.S. = 73,5 %
Viscosité (To) = 164 mPa.s
Viscosité AVAG ($T_{7\ jours}$) = 593 mPa.s
Viscosité APAG ($T_{7\ jours}$) = 175 mPa.s

Ces mesures de viscosité Brookfield™ ayant été effectuées, on procède à la détermination de la surface spécifique et de la demande cationique du carbonate de calcium avec la même méthode que dans l'essai n°1.

On obtient une surface spécifique BET égale à 7,8 $m^2$/g et une demande en polymère cationique PDDPC égale à 2770 µ Val/kg.

On voit ainsi que la demande en polymère cationique est plus faible que celle de l'art antérieur à granulométrie équivalente.

Dans cet essai, une mesure de mousse a été effectuée avec le même mode opératoire que dans l'essai n° 5 et on obtient :

t = 510 secondes pour h = 23 cm et $t_{disp}$ = 2 minutes.

Ces résultats montrent qu'il se crée beaucoup moins de mousse que dans l'essai de l'art antérieur.

Essai n° 11

Cet essai illustre l'invention et met en oeuvre 2,08 % en poids sec, par rapport au poids sec de carbonate de calcium, du copolymère mis en oeuvre dans l'essai n° 9 pour obtenir, à partir d'un carbonate de calcium d'un diamètre médian de 15 µm et dans les mêmes conditions opératoires et avec le même matériel que dans l'essai n° 1, une suspension aqueuse de carbonate de calcium broyé ayant une concentration en matière sèche égale à 75 % en poids et ayant une granulométrie telle que 81 % en poids des particules ont un diamètre inférieur à 1 µm mesurée au Sédigraph™ 5100.

Les résultats de concentration en matière sèche (E.S.) et de viscosité Brookfield™ obtenus avec la même méthode de mesure que l'essai n° 1 sont les suivants :

E.S. = 74,7 %
Viscosité (To) = 712 mPa.s
Viscosité AVAG ($T_{7\ jours}$) = 2240 mPa.s
Viscosité APAG ($T_{7\ jours}$) = 686 mPa.s

Ces mesures de viscosité Brookfield™ ayant été effectuées, on procède à la détermination de la surface spécifique et de la demande cationique du carbonate de calcium avec la même méthode que dans l'essai n°1.

On obtient une surface spécifique BET égale à 4,8 $m^2$/g et une demande en polymère cationique PDDPC égale à 7050 µ Val/kg.

On voit ainsi que la demande en polymère cationique est plus faible que celle de l'art antérieur à granulométrie équivalente.

Dans cet essai, une mesure de mousse a été effectuée avec le même mode opératoire que dans l'essai n° 5 et on obtient :

t = 510 secondes pour h = 23 cm et $t_{disp}$ = 2 minutes.

Ces résultats montrent qu'il se crée beaucoup moins de mousse que dans l'essai de l'art antérieur.

Essai n° 12

Cet essai illustre l'invention et met en oeuvre 0,40 % en poids sec, par rapport au poids sec de carbonate de calcium, d'un copolymère composé, exprimé en poids, de :

a) 8,7 % d'acide acrylique et 1,5 % d'acide méthacrylique
b) 89,5 % d'un monomère de formule (I) dans laquelle :

$R_1$ représente l'hydrogène
$R_2$ représente l'hydrogène
R représente le groupe méthacrylate
R' représente le radical méthyle
avec m = p = 0 ; n = 114 ; q= 1 et (m+n+p)q = 114

c) 0,3 % d'un monomère de formule (IIb) dans laquelle

R représente le groupe vinyle
A est absent
B représente le radical méthyle

de viscosité intrinsèque égale à 20,4 ml/g selon la méthode dite méthode de visco. intrinsèque précitée, pour obtenir, à partir d'un carbonate de calcium d'un diamètre médian de 15 μm et dans les mêmes conditions opératoires et avec le même matériel que dans l'essai n° 1, une suspension aqueuse de carbonate de calcium broyé ayant une concentration en matière sèche égale à 75 % en poids et ayant une granulométrie telle que 58 % en poids des particules ont un diamètre inférieur à 2 μm mesurée au Sédigraph™ 5100.

Les résultats de concentration en matière sèche (E.S.) et de viscosité Brookfield™ obtenus avec la même méthode de mesure que l'essai n° 1 sont les suivants :

E.S. = 73,0 %
Viscosité ($T_0$) = 144 mPa.s
Viscosité AVAG ($T_{7\ jours}$) = 628 mPa.s
Viscosité APAG ($T_{7\ jours}$) = 171 mPa.s

Ces mesures de viscosité Brookfield™ ayant été effectuées, on procède à la détermination de la surface spécifique et de la demande cationique du carbonate de calcium avec la même méthode que dans l'essai n°1.

On obtient une surface spécifique BET égale à 4,8 $m^2$/g et une demande en polymère cationique PDDPC égale à 880 μ Val/kg.

On voit ainsi que la demande en polymère cationique est plus faible que celle de l'art antérieur à granulométrie équivalente.

Dans cet essai, une mesure de mousse a été effectuée avec le même mode opératoire que dans l'essai n° 5 et on obtient :

t = 180 secondes pour h = 23 cm et $t_{disp}$ = 3 minutes.

Ces résultats montrent qu'il se crée moins de mousse que dans l'essai de l'art antérieur.

Essai n° 13

Cet essai illustre l'invention et met en oeuvre 1,10 % en poids sec, par rapport au poids sec de carbonate de calcium, du copolymère mis en oeuvre dans l'essai n° 12 pour obtenir, à partir d'un carbonate de calcium d'un diamètre médian de 15 μm et dans les mêmes conditions opératoires et avec le même matériel que dans l'essai n° 1, une suspension aqueuse de carbonate de calcium broyé ayant une concentration en matière sèche égale à 75 % en poids et ayant une granulométrie telle que 90 % en poids des particules ont un diamètre inférieur à 2 μm mesurée au Sédigraph™ 5100.

Les résultats de concentration en matière sèche (E.S.) et de viscosité Brookfield™ obtenus avec la même méthode de mesure que l'essai n° 1 sont les suivants :

E.S. = 73,1 %
Viscosité ($T_0$) = 195 mPa.s
Viscosité AVAG ($T_{7\ jours}$) = 731 mPa.s
Viscosité APAG ($T_{7\ jours}$) = 185 mPa.s

Ces mesures de viscosité Brookfield™ ayant été effectuées, on procède à la détermination de la surface spécifique et de la demande cationique du carbonate de calcium avec la même méthode que dans l'essai n°1.
On obtient une surface spécifique BET égale à 8,1 $m^2$/g et une demande en polymère cationique PDDPC égale à 3760 μ Val/kg.
On voit ainsi que la demande en polymère cationique est plus faible que celle de l'art antérieur à granulométrie équivalente.
Dans cet essai, une mesure de mousse a été effectuée avec le même mode opératoire que dans l'essai n° 5 et on obtient :

t = 180 secondes pour h = 23 cm et $t_{disp}$ = 3 minutes.

Ces résultats montrent qu'il se crée moins de mousse que dans l'essai de l'art antérieur.

Essai n° 14

Cet essai illustre l'invention et met en oeuvre 2,10 % en poids sec, par rapport au poids sec de carbonate de calcium, du copolymère mis en oeuvre dans l'essai n° 12 pour obtenir, à partir d'un carbonate de calcium d'un diamètre médian de 15 μm et dans les mêmes conditions opératoires et avec le même matériel que dans l'essai n° 1, une suspension aqueuse de carbonate de calcium broyé ayant une concentration en matière sèche égale à 75 % en poids et ayant une granulométrie telle que 83 % en poids des particules ont un diamètre inférieur à 1 μm mesurée au Sédigraph™ 5100.
Les résultats de concentration en matière sèche (E.S.) et de viscosité Brookfield™ obtenus avec la même méthode de mesure que l'essai n° 1 sont les suivants :

E.S. = 74,3 %
Viscosité (To) = 613 mPa.s
Viscosité AVAG ($T_{7\ jours}$) = 3030 mPa.s
Viscosité APAG ($T_{7\ jours}$) = 650 mPa.s

Ces mesures de viscosité Brookfield™ ayant été effectuées, on procède à la détermination de la surface spécifique et de la demande cationique du carbonate de calcium avec la même méthode que dans l'essai n°1.
On obtient une surface spécifique BET égale à 11,1 $m^2$/g et une demande en polymère cationique PDDPC égale à 7180 μ Val/kg.
On voit ainsi que la demande en polymère cationique est plus faible que celle de l'art antérieur à granulométrie équivalente.
Dans cet essai, une mesure de mousse a été effectuée avec le même mode opératoire que dans l'essai n° 5 et on obtient :

t = 180 secondes pour h = 23 cm et $t_{disp}$ = 3 minutes.

Ces résultats montrent qu'il se crée moins de mousse que dans l'essai de l'art antérieur.

Essai n° 15

Cet essai illustre l'invention et met en oeuvre 0,40 % en poids sec, par rapport au poids sec de carbonate de calcium, d'un copolymère composé, exprimé en poids, de :

a) 8,5 % d'acide acrylique et 1,5 % d'acide méthacrylique
b) 87,0 % d'un monomère de formule (I) dans laquelle :

$R_1$ représente l'hydrogène
$R_2$ représente l'hydrogène
R représente le groupe méthacrylate
R' représente le radical méthyle
avec m = p = 0 ; n = 114 ; q= 1 et (m+n+p)q = 114

c) 3,0 % d'un monomère de formule (IIb) dans laquelle

R représente le groupe méthacrylate
A représente le radical propyle
B représente le radical méthyle

de viscosité intrinsèque égale à 23,2 ml/g selon la méthode dite méthode de visco. intrinsèque précitée pour obtenir, à partir d'un carbonate de calcium d'un diamètre médian de 15 µm et dans les mêmes conditions opératoires et avec le même matériel que dans l'essai n° 1, une suspension aqueuse de carbonate de calcium broyé ayant une concentration en matière sèche égale à 75 % en poids et ayant une granulométrie telle que 58 % en poids des particules ont un diamètre inférieur à 2 µm mesurée au Sédigraph™ 5100.

Les résultats de concentration en matière sèche (E.S.) et de viscosité Brookfield™ obtenus avec la même méthode de mesure que l'essai n° 1 sont les suivants :

E.S. = 73,7 %
Viscosité ($T_0$) = 156 mPa.s
Viscosité AVAG ($T_{7\ jours}$) = 733 mPa.s
Viscosité APAG ($T_{7\ jours}$) = 197 mPa.s

Ces mesures de viscosité Brookfield™ ayant été effectuées, on procède à la détermination de la surface spécifique et de la demande cationique du carbonate de calcium avec la même méthode que dans l'essai n°1.
On obtient une surface spécifique BET égale à 4,9 $m^2/g$ et une demande en polymère cationique PDDPC égale à 1280 µ Val/kg.
On voit ainsi que la demande en polymère cationique est plus faible que celle de l'art antérieur à granulométrie équivalente.
Dans cet essai, une mesure de mousse a été effectuée avec le même mode opératoire que dans l'essai n° 5 et on obtient :

t = 150 secondes pour h = 23 cm et $t_{disp}$ = 4 minutes.

Ces résultats montrent qu'il se crée moins de mousse que dans l'essai de l'art antérieur.

<u>Essai n° 16</u>

Cet essai illustre l'invention et met en oeuvre 1,25 % en poids sec, par rapport au poids sec de carbonate de calcium, du copolymère mis en oeuvre dans l'essai n° 15 pour obtenir, à partir d'un carbonate de calcium d'un diamètre médian de 15 µm et dans les mêmes conditions opératoires et avec le même matériel que dans l'essai n° 1, une suspension aqueuse de carbonate de calcium broyé ayant une concentration en matière sèche égale à 75 % en poids et ayant une granulométrie telle que 87 % en poids des particules ont un diamètre inférieur à 2 µm mesurée au Sédigraph™ 5100.
Les résultats de concentration en matière sèche (E.S.) et de viscosité Brookfield™ obtenus avec la même méthode de mesure que l'essai n° 1 sont les suivants :

E.S. = 75,9 %
Viscosité (To) = 196 mPa.s
Viscosité AVAG ($T_{7\ jours}$) = 642 mPa.s
Viscosité APAG ($T_{7\ jours}$) = 189 mPa.s

Ces mesures de viscosité Brookfield™ ayant été effectuées, on procède à la détermination de la surface spécifique et de la demande cationique du carbonate de calcium avec la même méthode que dans l'essai n°1.
On obtient une surface spécifique BET égale à 7,6 $m^2/g$ et une demande en polymère cationique PDDPC

égale à 4150 μ Val/kg.

On voit ainsi que la demande en polymère cationique est plus faible que celle de l'art antérieur à granulométrie équivalente.

Dans cet essai, une mesure de mousse a été effectuée avec le même mode opératoire que dans l'essai n° 5 et on obtient :

t = 150 secondes pour h = 23 cm et $t_{disp}$ = 4 minutes.

Ces résultats montrent qu'il se crée moins de mousse que dans l'essai de l'art antérieur.

Essai n° 17

Cet essai illustre l'invention et met en oeuvre 2,08 % en poids sec, par rapport au poids sec de carbonate de calcium, du copolymère mis en oeuvre dans l'essai n° 15 pour obtenir, à partir d'un carbonate de calcium d'un diamètre médian de 15 μm et dans les mêmes conditions opératoires et avec le même matériel que dans l'essai n° 1, une suspension aqueuse de carbonate de calcium broyé ayant une concentration en matière sèche égale à 75 % en poids et ayant une granulométrie telle que 81 % en poids des particules ont un diamètre inférieur à 1 μm mesurée au Sédigraph™ 5100.

Les résultats de concentration en matière sèche (E.S.) et de viscosité Brookfield™ obtenus avec la même méthode de mesure que l'essai n° 1 sont les suivants :

E.S. = 77,0 %
Viscosité ($T_0$) = 648 mPa.s
Viscosité AVAG ($T_{7\ jours}$) = 2840 mPa.s
Viscosité APAG ($T_{7\ jours}$) = 747 mPa.s

Ces mesures de viscosité Brookfield™ ayant été effectuées, on procède à la détermination de la surface spécifique et de la demande cationique du carbonate de calcium avec la même méthode que dans l'essai n°1.

On obtient une surface spécifique BET égale à 9,3 $m^2/g$ et une demande en polymère cationique PDDPC égale à 6900 μ Val/kg.

On voit ainsi que la demande en polymère cationique est plus faible que celle de l'art antérieur à granulométrie équivalente.

Dans cet essai, une mesure de mousse a été effectuée avec le même mode opératoire que dans l'essai n° 5 et on obtient :

t = 150 secondes pour h = 23 cm et $t_{disp}$ = 4 minutes.

Ces résultats montrent qu'il se crée moins de mousse que dans l'essai de l'art antérieur.

Essai n° 18

Cet essai illustre l'invention et met en oeuvre 0,79 % en poids sec, par rapport au poids sec de carbonate de calcium, d'un copolymère composé, exprimé en poids, de :

a) 8,5 % d'acide acrylique et 1,5 % d'acide méthacrylique
b) 87,0 % d'un monomère de formule (I) dans laquelle :

$R_1$ représente l'hydrogène
$R_2$ représente l'hydrogène
R représente le groupe méthacrylate
R' représente le radical méthyle
avec m = p = 0 ; n = 114 ; q= 1 et (m+n+p)q = 114

c) 3,0 % d'un monomère de formule (IIb) dans laquelle

R représente le groupe vinyle
A est absent
B représente le radical méthyle

de viscosité intrinsèque égale à 20,0 ml/g selon la méthode dite méthode de visco. intrinsèque précitée, pour obtenir, à partir d'un carbonate de calcium d'un diamètre médian de 15 µm et dans les mêmes conditions opératoires et avec le même matériel que dans l'essai n° 1, une suspension aqueuse de carbonate de calcium broyé ayant une concentration en matière sèche égale à 75 % en poids et ayant une granulométrie telle que 63 % en poids des particules ont un diamètre inférieur à 2 µm mesurée au Sédigraph™ 5100.

Les résultats de concentration en matière sèche (E.S.) et de viscosité Brookfield™ obtenus avec la même méthode de mesure que l'essai n° 1 sont les suivants :

E.S. = 74,5 %
Viscosité (To) = 145 mPa.s
Viscosité AVAG ($T_{7\ jours}$) = 285 mPa.s
Viscosité APAG ($T_{7\ jours}$) = 112 mPa.s

Ces mesures de viscosité Brookfield™ ayant été effectuées, on procède à la détermination de la demande cationique du carbonate de calcium avec la même méthode que dans l'essai n°1.

On obtient une demande en polymère cationique PDDPC égale à 2500 µ Val/kg.

On voit ainsi que la demande en polymère cationique est plus faible que celle de l'art antérieur à granulométrie équivalente.

<u>Essai n° 19</u>

Cet essai illustre l'invention et met en oeuvre 1,10 % en poids sec, par rapport au poids sec de carbonate de calcium, du copolymère mis en oeuvre dans l'essai n° 18 pour obtenir, à partir d'un carbonate de calcium d'un diamètre médian de 15 µm et dans les mêmes conditions opératoires et avec le même matériel que dans l'essai n° 1, une suspension aqueuse de carbonate de calcium broyé ayant une concentration en matière sèche égale à 75 % en poids et ayant une granulométrie telle que 93 % en poids des particules ont un diamètre inférieur à 2 µm mesurée au Sédigraph™ 5100.

Les résultats de concentration en matière sèche (E.S.) et de viscosité Brookfield™ obtenus avec la même méthode de mesure que l'essai n° 1 sont les suivants :

E.S. = 74,0 %
Viscosité ($T_0$) = 249 mPa.s
Viscosité AVAG ($T_{7\ jours}$) = 1260 mPa.s
Viscosité APAG ($T_{7\ jours}$) = 279 mPa.s

Ces mesures de viscosité Brookfield™ ayant été effectuées, on procède à la détermination de la demande cationique du carbonate de calcium avec la même méthode que dans l'essai n°1.

On obtient une demande en polymère cationique PDDPC égale à 4040 µ Val/kg.

On voit ainsi que la demande en polymère cationique est plus faible que celle de l'art antérieur à granulométrie équivalente.

<u>Essai n° 20</u>

Cet essai illustre l'invention et met en oeuvre 2,10 % en poids sec, par rapport au poids sec de carbonate de calcium, du copolymère mis en oeuvre dans l'essai n° 18 pour obtenir, à partir d'un carbonate de calcium d'un diamètre médian de 15 µm et dans les mêmes conditions opératoires et avec le même matériel que dans l'essai n° 1, une suspension aqueuse de carbonate de calcium broyé ayant une concentration en matière sèche égale à 75 % en poids et ayant une granulométrie telle que 83 % en poids des particules ont un diamètre inférieur à 1 µm mesurée au Sédigraph™ 5100.

Les résultats de concentration en matière sèche (E.S.) et de viscosité Brookfield™ obtenus avec la même méthode de mesure que l'essai n° 1 sont les suivants :

E.S. = 74,3 %
Viscosité ($T_0$) = 808 mPa.s
Viscosité AVAG ($T_{7\ jours}$) = 3000 mPa.s
Viscosité APAG ($T_{7\ jours}$) = 802 mPa.s

Ces mesures de viscosité Brookfield™ ayant été effectuées, on procède à la détermination de la demande

cationique du carbonate de calcium avec la même méthode que dans l'essai n°1.

On obtient une demande en polymère cationique PDDPC égale à 7710 μ Val/kg.

On voit ainsi que la demande en polymère cationique est plus faible que celle de l'art antérieur à granulométrie équivalente.

Essai n° 21

Cet essai illustre l'invention et met en oeuvre 0,27 % en poids sec, par rapport au poids sec de carbonate de calcium, du copolymère mis en oeuvre dans l'essai n° 6 pour obtenir, à partir d'un carbonate de calcium d'un diamètre médian de 15 μm et dans les mêmes conditions opératoires et avec le même matériel que dans l'essai n° 1, une suspension aqueuse de carbonate de calcium broyé ayant une concentration en matière sèche égale à 65,1 % en poids et ayant une granulométrie telle que 60 % en poids des particules ont un diamètre inférieur à 2 μm, 33 % en poids des particules ont un diamètre inférieur à 1 μm mesurée au Sédigraph™ correspondant à un diamètre médian égal à 1.50 μm.

Les résultats de concentration en matière sèche (E.S.) et de viscosité Brookfield™ obtenus avec la même méthode de mesure que l'essai n° 1 sont les suivants :

E.S. = 65,1 %
Viscosité (To) = 183 mPa.s
Viscosité AVAG ($T_{7\ jours}$) = 354 mPa.s
Viscosité APAG ($T_{7\ jours}$) = 205 mPa.s

Ces mesures de viscosité Brookfield™ ayant été effectuées, on procède à la détermination de la demande cationique avec la même méthode que dans l'essai n°1. On obtient une demande en polymère cationique PDDPC égale à 410 μ Val/kg.

On voit ainsi que la demande en polymère cationique est plus faible que celle de l'art antérieur à granulométrie équivalente.
Dans cet essai, une mesure de mousse a été effectuée avec le même mode opératoire que dans l'essai n° 5 et on obtient :

t = 600 secondes pour h = 6cm et $t_{disp}$ = immédiat.

Ces résultats montrent qu'il se crée beaucoup moins de mousse que dans l'essai de l'art antérieur.

Essai n° 22

Cet essai illustre l'invention et met en oeuvre 0,40 % en poids sec, par rapport au poids sec de carbonate de calcium, du copolymère mis en oeuvre dans l'essai n° 6 pour obtenir, à partir d'un carbonate de calcium d'un diamètre médian de 15 μm et dans les mêmes conditions opératoires et avec le même matériel que dans l'essai n° 1, une suspension aqueuse de carbonate de calcium broyé ayant une concentration en matière sèche égale à 76,0 % en poids et ayant une granulométrie telle que 74 % en poids des particules ont un diamètre inférieur à 2 μm, 39 % en poids des particules ont un diamètre inférieur à 1 μm mesurée au Sédigraph™ correspondant à un diamètre médian égal à 1.25 μm.

Les résultats de concentration en matière sèche (E.S.) et de viscosité Brookfield™ obtenus avec la même méthode de mesure que l'essai n° 1 sont les suivants :

E.S. = 76,0 %
Viscosité (To) = 295 mPa.s
Viscosité AVAG ($T_{7\ jours}$) = 505 mPa.s
Viscosité APAG ($T_{7\ jours}$) = 195 mPa.s

Ces mesures de viscosité Brookfield™ ayant été effectuées, on procède à la détermination de la demande cationique du carbonate de calcium avec la même méthode que dans l'essai n°1.

On obtient une demande en polymère cationique PDDPC égale à 550 μ Val/kg.

On voit ainsi que la demande en polymère cationique est plus faible que celle de l'art antérieur à granulométrie équivalente.

Dans cet essai, une mesure de mousse a été effectuée avec le même mode opératoire que dans l'essai n° 5 et on obtient :

t = 600 secondes pour h = 6cm et $t_{disp}$ = immédiat.

Ces résultats montrent qu'il se crée beaucoup moins de mousse que dans l'essai de l'art antérieur.

EXEMPLE 2

Cet exemple illustre le lien entre la rétention des charges en charge de masse et la demande en polymère cationique.

Essai n° 23

Cet essai illustre l'art antérieur et met en oeuvre 0,27 % en poids sec, par rapport au poids sec de carbonate de calcium, d'un polyacrylate de sodium et de magnésium de viscosité intrinsèque égale à 7,8ml/g selon la méthode dite méthode de visco. intrinsèque précitée pour obtenir, à partir d'un carbonate de calcium d'un diamètre médian de 15 µm, une suspension aqueuse de carbonate de calcium broyé ayant une concentration en matière sèche égale à 65,5 % en poids et ayant une granulométrie telle que 61 % en poids des particules ont un diamètre inférieur à 2 µm, 30 % en poids des particules ont un diamètre inférieur à 1 µm mesurée au Sédigraph™ 5100 correspondant à un diamètre médian égal à 1,63 µm.

Les résultats de concentration en matière sèche (E.S.) et de viscosité Brookfield™ obtenus avec la même méthode de mesure que l'essai n° 1 sont les suivants :

E.S. = 65,5 %
Viscosité ($T_0$) = 115 mPa.s
Viscosité AVAG ($T_{7\ jours}$) = 620 mPa.s
Viscosité APAG ($T_{7\ jours}$) = 155 mPa.s

La détermination de la rétention de charges dans la masse s'effectue à l'aide de la méthode décrite ci-après et simulant des conditions prévalant pour une feuille de papier de grammage égal à 80 g/m$^2$ et chargée à 20 % en poids.

La valeur de la rétention des charges répond alors à l'équation

$$\text{Rétention des charges} = \frac{\text{Turb. de la caisse d'arrivée} - \text{Turb. wire water}}{\text{Turb. de la caisse d'arrivée}} \times 100$$

avec Turb. = turbidité

$$\text{Turb. de la caisse d'arrivée} = \text{Turb. du mélange fibre-charge} - \text{Turb. de la fibre}$$

Pour ce faire, il est donc nécessaire de mesurer d'une part la turbidité du mélange fibre-charge et d'autre part de mesurer la turbidité de la fibre seule ainsi que la turbidité de l'eau de la toile.

Cette dernière est directement mesurée par lecture de la valeur de la turbidité indiquée par le Néphélomètre 155 de Defensor AG (Suisse) en unités NTU (Nephelo Turbidity Unit).

D'autre part, pour déterminer la turbidité du mélange fibre-charge, on réalise un mélange fibre-charge à partir d'un masterbatch formé par dilution de 4 parts de fibres constituées à 80 % de bouleau et 20 % de pin dans 10 litres d'eau. On ajoute alors dans un dispositif appelé distributeur (Rapid-Köthen) 18,2 grammes sec du masterbatch de fibre et 9,8 grammes de la charge sèche à tester que l'on complète avec 5 litres d'eau. Après 15 minutes d'agitation et l'ajout des quantités, indiquées dans le tableau 1 ci-après, d'un agent rétenteur du type polyacrylamide commercialisé sous le nom Praestol™ PK 422, par Stockhausen, Krefeld, Germany, on obtient un mélange simulant les conditions prévalant pour une feuille de papier de grammage égal à 80 g/m$^2$ et chargée à 20 % en poids.

Le mélange ainsi formé est séché sous un vide de 0,2 bar pendant plus de 2 secondes.

Les valeurs, à 700 tours par minute, de rétention de charges dans la masse, obtenues par l'équation précitée et en fonction du taux d'agent cationique d'aide à la rétention du type polyacrylamide commercialisé sous le nom Praestol™ PK 422, par Stockhausen (Allemagne) sont rassemblées dans le tableau 1 ci-après.

Tableau 1

| 0 ,01 % PK 422 | 0,02 % PK 422 | 0,03 % PK 422 | 0,04 % PK 422 | 0,05 % PK 422 |
|---|---|---|---|---|
| 5 % Rétention de charge | 14 % Rétention de charge | 26 % Rétention de charge | 29 % Rétention de charge | 31 % Rétention de charge |

Essai n° 24

Cet essai illustre l'invention et met en oeuvre 0,40 % en poids sec, par rapport au poids sec de carbonate de calcium, du copolymère mis en oeuvre dans l'essai n° 6 pour obtenir, à partir d'un carbonate de calcium d'un diamètre médian de 15 μm et dans les mêmes conditions opératoires et avec le même matériel que dans l'essai n° 1, une suspension aqueuse de carbonate de calcium broyé ayant une concentration en matière sèche égale à 75,8 % en poids et ayant une granulométrie telle que 62 % en poids des particules ont un diamètre inférieur à 2 μm, 32 % en poids des particules ont un diamètre inférieur à 1 μm mesurée au Sédigraph™ 5100, correspondant à un diamètre médian égal à 1,57 μm.

Les résultats de concentration en matière sèche (E.S.) et de viscosité Brookfield™ obtenus avec la même méthode de mesure que l'essai n° 1 sont les suivants :

E.S. = 75,8 %
Viscosité ($T_0$) = 175 mPa.s
Viscosité AVAG ($T_{7\ jours}$) = 505 mPa.s
Viscosité APAG ($T_{7\ jours}$) = 195 mPa.s

Ces mesures de viscosité Brookfield™ ayant été effectuées, on procède à la détermination de la demande cationique du carbonate de calcium avec la même méthode que dans l'essai n°1.

La détermination de la rétention de charges dans la masse s'effectue avec le même mode opératoire et le même matériel que ceux utilisés dans l'essai précédent.

Les valeurs, à 700 tours par minute, de rétention de charges dans la masse, obtenues par l'équation précitée et en fonction du taux d'agent cationique d'aide à la rétention du type polyacrylamide commercialisé sous le nom Praestol™ PK 422, par Stockhausen (Allemagne) sont rassemblées dans le tableau 2 ci-après.

Tableau 2

| 0 ,01% PK 422 | 0,02% PK 422 | 0,03 % PK 422 | 0,04 % PK 422 | 0,05% PK 422 |
|---|---|---|---|---|
| 15 % Rétention de charge | 26% Rétention de charge | 38 % Rétention de charge | 47 % Rétention de charge | 54 % Rétention de charge |

La lecture des tableaux 1 et 2 permet de distinguer une meilleure rétention des charges pour l'essai selon l'invention.

EXEMPLE 3

Cet exemple illustre, par la comparaison à granulométrie identique, la réduction de la demande en polymère cationique dans la masse par la mise en oeuvre de suspension aqueuse de carbonate de calcium contenant le copolymère utilisé, selon l'invention, comme agent d'aide au broyage, pour divers procédés de broyage.

Essai n° 25

Cet essai illustre l'invention et met en oeuvre, comme dispersant avant l'étape de broyage, 0,1 % en poids sec, par rapport au poids sec de carbonate de calcium, d'un polyacrylate de sodium et de magnésium de viscosité intrinsèque égale à 7,8 ml/g selon la méthode dite méthode de visco. intrinsèque précitée, et comme agent d'aide au broyage pendant l'étape de broyage 0, 27 % en poids sec, par rapport au poids sec de carbonate de calcium, du copolymère mis en oeuvre dans l'essai n° 6 pour obtenir, à partir d'un carbonate de calcium d'un diamètre médian de 15 μm, avec le même matériel que dans l'essai n° 1, une suspension de carbonate de calcium broyé ayant une concentration en matière sèche égale à 65,0 % en poids et ayant une granulométrie telle que 59 % en poids des particules ont un diamètre inférieur à 2 μm, 34 % en poids des particules ont un diamètre inférieur à 1 μm mesurée au Sédigraph

5100 correspondant à un diamètre médian égal à 1.58 µm.

Les résultats de concentration en matière sèche (E.S.) et de viscosité Brookfield™ obtenus avec la même méthode de mesure que l'essai n° 1 sont les suivants :

E.S. = 65,0 %
Viscosité (To) = 163 mPa.s
Viscosité AVAG ($T_{7\ jours}$) =319 mPa.s
Viscosité APAG ($T_{7\ jours}$) = 185 mPa.s

Ces mesures de viscosité Brookfield™ ayant été effectuées, on procède à la détermination de la demande cationique du carbonate de calcium avec la même méthode que dans l'essai n°1.

On obtient une demande en polymère cationique PDDPC égale à 1620 µ Val/kg.

On voit ainsi que la demande en polymère cationique est plus faible que celle de l'art antérieur à granulométrie équivalente.

Essai n° 26

Cet essai illustre l'invention et met en oeuvre, comme agent d'aide au broyage, 1,8 % en poids sec, par rapport au poids sec de carbonate de calcium, du copolymère mis en oeuvre dans l'essai n° 6 pour obtenir par un broyage en deux étapes, une suspension de carbonate de calcium à 74,7 % en poids de matière sèche et de granulométrie telle que 98 % en poids des particules ont un diamètre inférieur à 2 µm et 78 % en poids des particules ont un diamètre inférieur à 1 µm mesurée au Sédigraph™ 5100.

Ce procédé de broyage en deux étapes consiste à broyer, au cours de la première étape, une suspension de carbonate de calcium de diamètre moyen initial égal à 5 µm mesuré à l'aide du granulomètre Sédigraph™ 5100 en une suspension aqueuse de carbonate de calcium à une granulométrie telle que 62 % en poids des particules ont un diamètre inférieur à 2 µm et 37 % en poids des particules ont un diamètre inférieur à 1 µm mesurée au Sédigraph™ 5100, puis à broyer cette suspension à la granulométrie finale recherchée.

Les résultats de concentration en matière sèche (E.S.) et de viscosité Brookfield™ obtenus avec la même méthode de mesure que l'essai n° 1 sont les suivants :

E.S. = 74,7 %
Viscosité (To) = 750 mPa.s
Viscosité APAG ($T_{7\ jours}$) = 680 mPa.s

Ces mesures de viscosité Brookfield™ ayant été effectuées, on procède à la détermination de la surface spécifique et de la demande cationique du carbonate de calcium avec la même méthode que dans l'essai n°1.

On obtient une surface spécifique BET du pigment obtenu, déterminée selon la norme ISO 9277, égale à 7,5 $m^2/g$, et une demande en polymère cationique PDDPC égale à 4140 µ Val/kg.

EXEMPLE 4

Cet exemple illustre, par la comparaison à granulométrie identique, la réduction de la demande en polymère cationique dans la masse par la mise en oeuvre de suspension aqueuse de différentes matières minérales contenant le copolymère utilisé, selon l'invention, comme agent d'aide au broyage.

Essai n° 27

Cet essai illustre l'invention et met en oeuvre 0,40 % en poids sec, par rapport au poids sec de trihydroxyde d'aluminium, du copolymère mis en oeuvre dans l'essai n° 6 pour obtenir, à partir d'un trihydroxyde d'aluminium de diamètre médian égal à 50 µm et dans les mêmes conditions opératoires et avec le même matériel que dans l'essai n° 1, une suspension aqueuse de trihydroxyde d'aluminium broyé ayant une concentration en matière sèche égale à 51,4 % en poids et ayant une granulométrie telle que 48,8 % en poids des particules ont un diamètre inférieur à 2 µm, 29,4 % en poids des particules ont un diamètre inférieur à 1 µm mesurée au Sédigraph™ 5100 correspondant à un diamètre médian égal à 2,00 µm.

Les résultats de concentration en matière sèche (E.S.) et de viscosité Brookfield™ obtenus avec la même méthode de mesure que l'essai n° 1 sont les suivants :

E.S. = 48,8 %

Viscosité (To) = 62 mPa.s
Viscosité AVAG ($T_{7\ jours}$) = 115 mPa.s
Viscosité APAG ($T_{7\ jours}$) = 95 mPa.s

Ces mesures de viscosité Brookfield™ ayant été effectuées, on procède à la détermination de la demande cationique avec la même méthode que dans l'essai n°1. On obtient une demande en polymère cationique PDDPC égale à 590 µ Val/kg.
On voit ainsi que la demande en polymère cationique est faible.

Essai n° 28

Cet essai illustre l'invention et met en oeuvre 0,40 % en poids, par rapport au poids sec de talc, du copolymère mis en oeuvre dans l'essai n° 6 pour obtenir, à partir d'un talc de diamètre médian égal à 15,7 µm ou encore de granulométrie telle que 14 % en poids des particules ont un diamètre inférieur à 5 µm, 4 % en poids des particules ont un diamètre inférieur à 1 µm mesurée au Sédigraph™ 5100 et dans les mêmes conditions opératoires et avec le même matériel que dans l'essai n° 1, une suspension aqueuse de talc broyé ayant une concentration en matière sèche égale à 28,3 % en poids et ayant une granulométrie telle que 41 % en poids des particules ont un diamètre inférieur à 5 µm, 12 % en poids des particules ont un diamètre inférieur à 1 µm mesurée au Sédigraph™ 5100 correspondant à un diamètre médian égal à 6,3 µm.
Les résultats de concentration en matière sèche (E.S.) et de viscosité Brookfield™ obtenus avec la même méthode de mesure que l'essai n° 1 sont les suivants :

E.S. = 28,3 %
Viscosité (To) = 219 mPa.s
Viscosité AVAG ($T_{7\ jours}$) = 415 mPa.s
Viscosité APAG ($T_{7\ jours}$) = 134 mPa.s

Ces mesures de viscosité Brookfield™ ayant été effectuées, on procède à la détermination de la demande cationique avec la même méthode que dans l'essai n°1.
On obtient une demande en polymère cationique PDDPC égale à 520 µ Val/kg.
On voit ainsi que la demande en polymère cationique est faible.

Essai n° 29

Cet essai illustre l'invention et met en oeuvre 0,40 % en poids sec, par rapport au poids sec de kaolin, du copolymère mis en oeuvre dans l'essai n° 6 pour obtenir, à partir d'un kaolin de diamètre médian égal à 0,33 µm ou encore de granulométrie telle que 92 % en poids des particules ont un diamètre inférieur à 0,5 µm, 4 % en poids des particules ont un diamètre inférieur à 0,2 µm mesurée au Sédigraph™ 5100 et dans les mêmes conditions opératoires et avec le même matériel que dans l'essai n ° 1, une suspension aqueuse de kaolin broyé ayant une concentration en matière sèche égale à 15 % en poids et ayant une granulométrie telle que 95 % en poids des particules ont un diamètre inférieur à 0,5 µm, 7 % en poids des particules ont un diamètre inférieur à 0,2 µm mesurée au Sédigraph™ 5100 correspondant à un diamètre médian égal à 0,30 µm.
Les résultats de concentration en matière sèche (E.S.) et de viscosité Brookfield™ obtenus avec la même méthode de mesure que l'essai n° 1 sont les suivants :

E.S. = 15,0 %
Viscosité (To) = 244 mPa.s
Viscosité AVAG ($T_{7\ jours}$) = 212 mPa.s
Viscosité APAG ($T_{7\ jours}$) = 199 mPa.s

Ces mesures de viscosité Brookfield™ ayant été effectuées, on procède à la détermination de la demande cationique avec la même méthode que dans l'essai n°1.
On obtient une demande en polymère cationique PDDPC égale à 420 µ Val/kg.
On voit ainsi que la demande en polymère cationique est faible.

EXEMPLE 5

Cet exemple illustre, par la mesure de brillance et par comparaison à granulométrie identique, la stabilité de

la sauce de couchage obtenue par la mise en oeuvre d'une suspension aqueuse de carbonate de calcium selon l'invention. Pour ce faire dans chacun des essais de l'exemple, on prépare une sauce de couchage à 68 % de concentration en matière sèche, composée de

- 80 parts en sec de la suspension aqueuse de carbonate de calcium à tester,
- 5 parts en sec d'une suspension aqueuse de carbonate de calcium plus grossier,
- 15 parts de kaolin délaminé,
- 9,5 parts de liant,
- 0,32 parts de carboxyméthyl cellulose,
- 0,6 part d'alcool polyvinylique,
- 0,15 part d'azurant optique, et
- 0,4 part de stéarate de calcium.

Une fois la sauce de couchage ainsi préparée, on en mesure la viscosité Brookfield™ à l'aide d'un viscosimètre Brookfield™ modèle DV-II+ équipé du mobile correspondant.

La sauce de couchage préparée est ensuite appliquée sur un papier à base bois de 53 μm d'épaisseur et de grammage égal à 82 à l'aide d'une coucheuse pilote Combiblades de la société Jagenberg GmbH équipée d'une lame de 0,457 mm d'épaisseur.

On utilise une tête long dwell time application avec un angle de lame de 45°. La vitesse du couchage est de 1000 m/s et la couche moyenne déposée est de 11 g/$m^2$ sur chaque face du papier.

L'humidité relative obtenue pour chaque papier est de l'ordre de 4,2 % à 4,6 % en poids pour poids.

Le papier ainsi couché est ensuite calandré à l'aide d'une super calandreuse à 9 zones de contact entre les deux rouleaux, commercialisée par calandreuse

Le diamètre de calandrage fer est de 180 mm et de 270 mm par rapport au coton.

La mesure de la brillance 75 ° TAPPI (norme TAPPI T480 os-78 ) selon Lehmann du papier couché et calandré, qui consiste à passer la feuille de papier couché et calandré dans le brillancemètre de laboratoire (LGDL-05/2 de Lehmann calandreuse AG, Suisse) détermine le super calandrage.

Cette mesure de brillance étant faite, les échantillons de papier sont coupés en format DIN A3 et sont conditionnés dans une pièce climatisée et selon la norme DIN EN 20187 pour détermination des valeurs de brillance 75° DIN selon la norme DIN 54 502, et 45° DIN selon la norme DIN 54 502.

<u>Essai n° 30</u>

Cet essai illustre l'art antérieur et met en oeuvre une suspension de carbonate de calcium de l'art antérieur.

Pour ce faire, afin de préparer la sauce de couchage à tester et de composition précédemment décrite, on mélange, dans un récipient contenant 20 kg d'eau et 0,125 kg d'un polyacrylate de sodium de concentration en matière sèche égale à 42 % et de viscosité intrinsèque égale à 6,2 ml/g selon la méthode dite méthode de visco. intrinsèque précitée, 22,5 kg d'une suspension aqueuse, à 78,2 % de concentration en matière sèche, de carbonate de calcium plus grossier commercialisé par Omya sous la dénomination Hydrocarb™ 60 et 356,5 kg d'une suspension aqueuse, à 78,5 % de concentration en matière sèche, de carbonate de calcium plus fin commercialisé par Omya sous la dénomination Setacarb™.

Le mélange des carbonates de calcium effectué, on ajoute sous une vitesse d'agitation moyenne, 52,5 kg de kaolin délaminé commercialisée par Kaolin International B.V. sous la dénomination Amazon™ 88.

L'agitation est maintenue à vitesse moyenne pendant 15 minutes et après vérification visuelle de la présence ou non d'agglomérats, l'agitation est poursuivie jusqu'à la disparition des quelques agglomérats ou alors stoppée s'il n'y a pas d'agglomérats.

Il est alors ajouté 7,5 kg d'une solution aqueuse à 15 % de concentration, de carboxyméthyl cellulose précédemment dissoute pendant au moins 20 minutes à au moins 90° C et commercialisée par Noviant sous la dénomination CMC Finnfix™ 10.

On rajoute également 8,4 kg d'une solution aqueuse à 25 % de concentration, d'alcool polyvinylique précédemment dissout pendant au moins 20 minutes à au moins 90° C et commercialisé par Clariant sous la dénomination Mowiol™ 4-98.

Comme liant, on ajoute alors 28 kg d'une dispersion aqueuse à 50 % en poids d'un styrène-butadiène commercialisé par Dow Europe sous la dénomination Dow Latex DL 940 et 38,5 kg d'une dispersion aqueuse à 50 % en poids d'un copolymère d'ester acrylique commercialisé par BASF sous la dénomination Acronal™ S 360 D.

Enfin sont ajoutés 1,9 kg d'azurant optique sous la forme d'un dérivé aqueux de 4,4-diaminostilbène-2,2-acide disulfonique commercialisé par Bayer sous le nom Blancophor™ P ainsi que 2,8 kg d'une dispersion aqueuse à 50 % de concentration en matière sèche d'un stéarate de calcium vendu par Henkel-Nopco AS sous le nom Nopcote™ C-104.

Ces ajouts effectués, l'agitation est maintenue pendant encore 15 minutes.

Le pH de la sauce de couchage est alors contrôlé et réglé à une valeur d'environ 9 à l'aide d'une solution de soude à 10 %.

La teneur en matière sèche de la sauce de couchage est elle aussi contrôlée et réglée à une valeur d'environ 68,5 % par ajout éventuel d'eau.

La viscosité Brookfield™ de la sauce de couchage obtenue mesurée à 32°C à l'aide du viscosimètre Brookfield™ modèle DV-II+ équipé du mobile correspondant est égale à 6100 mPa.s à 20 $min^{-1}$ et 1800 mPa.s à 100 $min^{-1}$.

Les diverses mesures de brillance sont effectuées selon la méthode précitée et sont rassemblés dans le tableau 3 qui suit le prochain essai.

Essai n° 31

Cet essai illustre invention et met en oeuvre la suspension de carbonate de calcium de l'essai n° 26 selon l'invention.

Pour ce faire, afin de préparer la sauce de couchage à tester et de composition précédemment décrite, on mélange, dans un récipient contenant 20 kg d'eau et 0,125 kg d'un polyacrylate de sodium de concentration en matière sèche égale à 42 % et de viscosité intrinsèque égale à 6,2 ml/g selon la méthode dite méthode de visco. intrinsèque précitée, 22,5 kg d'une suspension aqueuse, à 78,2 % de concentration en matière sèche, de carbonate de calcium plus grossier commercialisé par Omya sous la dénomination Hydrocarb™ 60 et 375 kg de la suspension aqueuse de carbonate de calcium de l'essai n° 26 selon l'invention, à 74,7 % de concentration en matière sèche.

Le mélange des carbonates de calcium effectué, on ajoute sous une vitesse d'agitation moyenne, 52,5 kg de kaolin délaminé commercialisée par Kaolin International B.V. sous la dénomination Amazon™ 88.

L'agitation est maintenue à vitesse moyenne pendant 15 minutes et après vérification visuelle de la présence ou non d'agglomérats, l'agitation est poursuivie jusqu'à la disparition des quelques agglomérats ou alors stoppée s'il n'y a pas d'agglomérats.

Il est alors ajouté 7,5 kg d'une solution aqueuse à 15 % de concentration, de carboxyméthyl cellulose précédemment dissoute pendant au moins 20 minutes à au moins 90° C et commercialisée par Noviant sous la dénomination CMC Finnfix™ 10.

On rajoute également 8,4 kg d'une solution aqueuse à 25 % de concentration, d'alcool polyvinylique précédemment dissout pendant au moins 20 minutes à au moins 90° C et commercialisé par Clariant sous la dénomination Mowiol™ 4-98. Comme liant, on ajoute alors 28 kg d'une dispersion aqueuse à 50 % en poids d'un styrène-butadiène commercialisé par Dow Europe sous la dénomination Dow Latex DL 940 et 38,5 kg d'une dispersion aqueuse à 50 % en poids d'un copolymère d'ester acrylique commercialisé par BASF sous la dénomination Acronal™ S 360 D.

Enfin sont ajoutés 1,9 kg d'azurant optique sous la forme d'un dérivé aqueux de 4,4-diaminostilbène-2,2-acide disulfonique commercialisé par Bayer sous le nom Blancophor™ P ainsi que 2,8 kg d'une dispersion aqueuse à 50 % de concentration en matière sèche d'un stéarate de calcium vendu par Henkel-Nopco AS sous le nom Nopcote™ C-104.

Ces ajouts effectués, l'agitation est maintenue pendant encore 15 minutes.

Le pH de la sauce de couchage est alors contrôlé et réglé à une valeur d'environ 9 à l'aide d'une solution de soude à 10 %.

La teneur en matière sèche de la sauce de couchage est elle aussi contrôlée et réglée à une valeur d'environ 68,5 % par ajout éventuel d'eau.

La viscosité Brookfield™ de la sauce de couchage obtenue mesurée à 32°C à l'aide du viscosimètre Brookfield™ modèle DV-II+ équipé du mobile correspondant est égale à 3600 mPa.s à 20 $min^{-1}$ et 1200 mPa.s à 100 $min^{-1}$.

Les diverses mesures de brillance sont effectuées selon la méthode précitée et sont rassemblés dans le tableau 3 qui suit.

TABLEAU 3

| | Norme | Unité | Art antérieur Essai n° 32 | Invention Essai n° 33 |
|---|---|---|---|---|
| papier couché | 1301 ISO 536 | $g/m^2$ | 102 | 105 |
| Brillance (75°TAPPI) OS | TAPPI | % | 75 | 80 |
| Brillance (75°TAPPI) SS | TAPPI | % | 77 | 82 |
| Brillance (75°DIN) OS | DIN 54 502 | % | 46 | 50 |
| Brillance (75°DIN) SS | DIN 54 502 | % | 48 | 54 |

(suite)

| | Norme | Unité | Art antérieur Essai n° 32 | Invention Essai n° 33 |
|---|---|---|---|---|
| Brillance (45°DIN) OS | DIN 54 502 | % | 17 | 23 |
| Brillance (45°DIN) SS | DIN 54 502 | % | 19 | 28 |
| Rugosité (PPS) 1.0 soft OS | ISO 8791-4 | μm | 0.610 | 0.579 |
| Rugosité (PPS) 1.0 soft SS | ISO 8791-4 | μm | 0.608 | 0.530 |

OS = Surface supérieure (Oberseite)
SS = Côté de la toile ou envers (Siebseite)

La lecture du tableau permet de constater que le papier couché avec les sauces de couchages contenant les suspensions aqueuses de carbonate de calcium selon l'invention montre une brillance plus élevée quel que soit l'angle de vision et une rugosité plus faible que le papier couché avec des sauces de couchage standard de l'art antérieur.

EXEMPLE 6

Cet exemple illustre l'utilisation de la suspension aqueuse selon l'invention dans un procédé de séchage.

Essai n° 32

Cet essai illustre l'art antérieur et met en oeuvre 0,35 % en poids sec, par rapport au poids sec de carbonate de calcium, d'un polyacrylate de sodium et de magnésium de viscosité intrinsèque égale à 7,8 ml/g selon la méthode dite méthode de visco. intrinsèque précitée, pour obtenir à partir d'un carbonate de calcium d'un diamètre médian de 15 μm, une suspension aqueuse de carbonate de calcium broyé ayant une concentration en matière sèche égale à 36,9 % en poids et ayant une granulométrie telle que 73 % en poids des particules ont un diamètre inférieur à 2 μm, 46 % en poids des particules ont un diamètre inférieur à 1 μm mesurée au Sédigraph™ 5100 correspondant à un diamètre médian égal à 1,17 μm.

La suspension aqueuse obtenue est ensuite séchée à l'aide d'un sécheur du type Media Slurry Drier MSD 100 de Nara calandreuse CO., calandreuse(Japon).

La capacité de séchage obtenue est alors égale à 1220 g/h de produit sec.

Essai n° 33

Cet essai illustre l'invention et met en oeuvre 0,45 % en poids sec, par rapport au poids sec de carbonate de calcium, du copolymère mis en oeuvre dans l'essai n° 6 pour obtenir, à partir d'un carbonate de calcium d'un diamètre médian de 15 μm, une suspension aqueuse de carbonate de calcium broyé ayant une concentration en matière sèche égale à 36,9 % en poids et ayant une granulométrie telle que 74 % en poids des particules ont un diamètre inférieur à 2 μm, 44 % en poids des particules ont un diamètre inférieur à 1 μm mesurée au Sédigraph™ 5100 correspondant à un diamètre médian égal à 1,18 μm.

La suspension aqueuse obtenue est ensuite séchée à l'aide d'un sécheur du type Media Slurry Drier MSD 100 de Nara calandreuse CO., calandreuse(Japon).

La capacité de séchage obtenue est alors égale à 1542 g/h de produit sec, amenant ainsi un gain de 21 % dans la capacité de séchage.

Essai n° 34

Cet essai illustre l'art antérieur et met en oeuvre 0,45 % en poids sec, par rapport au poids sec de carbonate de calcium, d'un polyacrylate de sodium et de magnésium de viscosité intrinsèque égale à 7,8 ml/g selon la méthode dite méthode de visco. intrinsèque précitée, pour obtenir à partir d'un carbonate de calcium d'un diamètre médian de 0,72 μm, une suspension aqueuse de carbonate de calcium broyé ayant une concentration en matière sèche égale à 33,3 % en poids et ayant une granulométrie telle que 98 % en poids des particules ont un diamètre inférieur à 2 μm, 84 % en poids des particules ont un diamètre inférieur à 1 μm mesurée au Sédigraph™ 5100 correspondant à un diamètre médian égal à 0,60 μm.

La suspension aqueuse obtenue est ensuite séchée à l'aide d'un sécheur du type Media Slurry Drier MSD 100

de Nara calandreuse CO., LTD.(Japon).

La capacité de séchage obtenue est alors égale à 1018 g/h de produit sec.

Essai n° 35

Cet essai illustre l'invention et met en oeuvre 0,45 % en poids sec, par rapport au poids sec de carbonate de calcium, du copolymère mis en oeuvre dans l'essai n° 6 pour obtenir, à partir d'un carbonate de calcium d'un diamètre médian de 0,72 μm, une suspension aqueuse de carbonate de calcium broyé ayant une concentration en matière sèche égale à 33,3 % en poids et ayant une granulométrie telle que 98 % en poids des particules ont un diamètre inférieur à 2 μm, 81 % en poids des particules ont un diamètre inférieur à 1 μm mesurée au Sédigraph™ 5100 correspondant à un diamètre médian égal à 0,67 μm.

La suspension aqueuse obtenue est ensuite séchée à l'aide d'un sécheur du type Media Slurry Drier MSD 100 de Nara calandreuse CO., LTD.(Japon).

La capacité de séchage obtenue est alors égale à 1093 g/h de produit sec, amenant ainsi un gain de 7 % dans la capacité de séchage.

EXEMPLE 7

Cet exemple illustre l'utilisation de la suspension aqueuse séchée de carbonate de calcium selon l'invention dans le domaine des matières plastiques et plus particulièrement dans une application PVC, en comparant la dispersion, dans une formulation PVC rigide, d'une suspension aqueuse séchée de carbonate de calcium naturel selon l'invention et selon l'art antérieur par comparaison du comportement rhéologique obtenu.

Pour ce faire, on réalise pour chacun des essais de l'exemple le mélange correspondant à la formulation suivante, en parts, à l'exception de l'essai n° 36 qui ne contient pas de carbonate de calcium :

| | |
|---|---|
| PVC EVAPOLSH 6521 commercialisé par EVC (Allemagne) | 100 |
| sulfate tribasique de plomb | 1,5 |
| stéarate dibasique de plomb | 1,3 |
| stéarate de calcium | 0,6 |
| Cire E | 0,05 |
| Carbonate de calcium à tester | 30,0 |

Ce mélange est réalisé dans un mélangeur Papenmeier à 100°C pendant 10 minutes. Les mélanges sont ensuite gélifiés sur cylindre tournant à 20 tours par minute à 170°C dans une chambre de malaxage de l'extrusiomètre MP, Göttfert Version 2.3.0. Le comportement rhéologique est alors évalué par la mesure du temps de gélification du mélange.

Essai n° 36 - Témoin sans charge

Cet essai est un essai témoin qui concerne la formulation précitée mais sans carbonate de calcium.

Le temps de gélification obtenu est égal à 738 secondes.

Essai n° 37

Cet essai illustre l'art antérieur et met en oeuvre le produit séché de l'essai n° 32.

Le temps de gélification obtenu est égal à 720 secondes pour une formulation à 30 parts de charge, soit un gain de 2,5 % par rapport au témoin sans charge.

Essai n° 38

Cet essai illustre invention et met en oeuvre le produit séché de l'essai n° 33.

Le temps de gélification obtenu est égal à 562 secondes pour une formulation à 30 parts de charge, soit un gain de 23,8 % par rapport au témoin sans charge.

La lecture de ces résultats montre qu'un produit sec de l'invention peut être avantageusement utilisé dans le domaine des matières plastiques, et plus particulièrement dans des formulations PVC rigide.

## Revendications

**1.** Suspension aqueuse de matières minérales affinées, de concentration en matière sèche pouvant être élevée, de viscosité Brookfield™ faible et stable dans le temps et ayant une surface pigmentaire à charge ionique faible **caractérisée en ce qu'**elle contient, comme agent d'aide au broyage, un copolymère composé

a) d'au moins un monomère anionique à insaturation éthylénique et à fonction monocarboxylique choisi parmi les monomères à insaturation éthylénique et à fonction monocarboxylique tels que l'acide acrylique ou méthacrylique ou encore les hémiesters de diacides tels que les monoesters en $C_1$ à $C_4$ des acides maléique ou itaconique, ou leurs mélanges, ou à fonction dicarboxylique choisi parmi les monomères à insaturation éthylénique et fonction dicarboxylique tels que l'acide crotonique, isocrotonique, cinnamique, itaconique, maléique, ou encore les anhydrides d'acides carboxyliques, tels que l'anhydride maléique ou à fonction sulfonique choisi parmi les monomères à insaturation éthylénique et à fonction sulfonique tels que l'acide acrylamido-méthyl-propane-sulfonique, le méthallylsulfonate de sodium, l'acide vinyl sulfonique et l'acide styrène sulfonique ou bien encore à fonction phosphorique choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore à fonction phosphonique choisi parmi les monomères à insaturation éthylénique et à fonction phosphonique tels que l'acide vinyl phosphonique, ou leurs mélanges,
b) d'au moins un monomère à insaturation éthylénique non ionique de formule (I) :

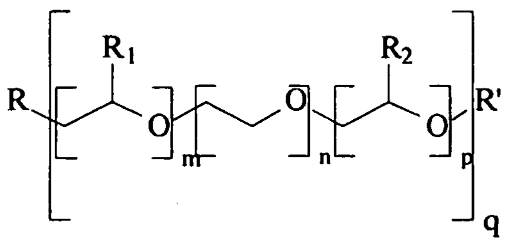

dans laquelle :

- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que $5 \leq (m+n+p)q \leq 150$, et représente préférentiellement un nombre entier tel que $15 \leq (m+n+p)q \leq 120$,
- $R_1$ représente l'hydrogène ou le radical méthyle ou éthyle,
- $R_2$ représente l'hydrogène ou le radical méthyle ou éthyle,
- R représente un radical contenant une fonction insaturée polymérisable, appartenant au groupe des vinyliques ainsi qu'au groupe des esters acrylique, méthacrylique, maléique, itaconique, crotonique, vinylphtalique ainsi qu'au groupe des insaturés uréthannes tels que les acryluréthanne, méthacryluréthanne, $\alpha$ - $\alpha$' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente l'hydrogène ou un radical hydrocarboné ayant 1 à 40 atomes de carbone, et représente préférentiellement un radical hydrocarboné ayant 1 à 12 atomes de carbone et très préférentiellement un radical hydrocarboné ayant 1 à 4 atomes de carbone,

ou du mélange de plusieurs monomères de formule (I),

c) d'au moins un monomère organosililé, choisi de manière préférentielle parmi les molécules de formules (IIa) ou (IIb) ou (IIc) ou leurs mélanges :
avec formule (IIa)

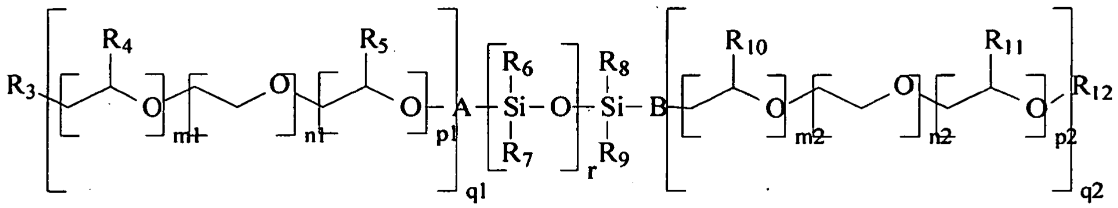

dans laquelle :

- m1, p1, m2 et p2 représentent un nombre de motifs d'oxyde d'alkylène inférieur ou égal à 150,
- n1 et n2 représentent un nombre de motifs d'oxyde d'éthylène inférieur ou égal à 150,
- q1 et q2 représentent un nombre entier au moins égal à 1 et tel que $0 \leq (m1+n1+p1)q1 \leq 150$ et $0 \leq (m2+n2+p2)q2 \leq 150$,
- r représente un nombre tel que $1 \leq r \leq 200$,
- $R_3$ représente un radical contenant une fonction insaturée polymérisable, appartenant au groupe des vinyliques ainsi qu'au groupe des esters acrylique, méthacrylique, maléique, itaconique, crotonique, vinylphtalique ainsi qu'au groupe des insaturés uréthannes tels que les acryluréthanne, méthacryluréthanne, $\alpha$ - $\alpha$' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- $R_4$, $R_5$, $R_{10}$ et $R_{11}$, représentent l'hydrogène ou le radical méthyle ou éthyle,
- $R_6$, $R_7$, $R_8$ et $R_9$, représentent des groupements linéaires ou ramifiés alkyle, ou aryle, ou alkylaryle, ou arylalkyle ayant 1 à 20 atomes de carbone, ou leur mélange,
- $R_{12}$ représente un radical hydrocarboné ayant 1 à 40 atomes de carbone,
- A et B sont des groupements éventuellement présents, qui représentent alors un radical hydrocarboné ayant 1 à 4 atomes de carbone,

avec formule (IIb)

$$R\text{-}A\text{-}Si(OB)_3$$

dans laquelle :

- R représente un radical contenant une fonction insaturée polymérisable, appartenant au groupe des vinyliques ainsi qu'au groupe des esters acrylique, méthacrylique, maléique, itaconique, crotonique, vinylphtalique ainsi qu'au groupe des insaturés uréthannes tels que les acryluréthanne, méthacryluréthanne, $\alpha$ - $\alpha$' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- A est un groupement éventuellement présent, qui représente alors un radical hydrocarboné ayant 1 à 4 atomes de carbone,
- B représente un radical hydrocarboné ayant 1 à 4 atomes de carbone,

avec formule (IIc) :

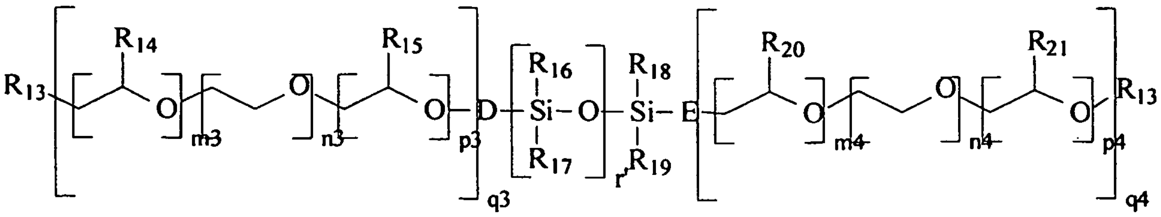

dans laquelle :

- m3, p3, m4 et p4 représentent un nombre de motifs d'oxyde d'alkylène inférieur ou égal à 150,
- n3 et n4 représentent un nombre de motifs d'oxyde d'éthylène inférieur ou égal à 150,
- q3 et q4 représentent un nombre entier au moins égal à 1 et tel que $0 \leq (m3+n3+p3)q3 \leq 150$ et $0 \leq (m4+n4+p4)q4 \leq 150$,
- r' représente un nombre tel que $1 \leq r' \leq 200$,
- $R_{13}$ représente un radical contenant une fonction insaturée polymérisable, appartenant au groupe des vinyliques ainsi qu'au groupe des esters acrylique, méthacrylique, maléique, itaconique, crotonique, vinylphtalique ainsi qu'au groupe des insaturés uréthannes tels que les acryluréthanne, méthacryluréthanne, $\alpha$ - $\alpha$' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- $R_{14}$, $R_{15}$, $R_{20}$ et $R_{21}$, représentent l'hydrogène ou le radical méthyle ou éthyle,
- $R_{16}$, $R_{17}$, $R_{18}$ et $R_{19}$, représentent des groupements linéaires ou ramifiés alkyle, ou aryle, ou alkylaryle, ou arylalkyle ayant 1 à 20 atomes de carbone, ou leur mélange,
- D et E sont des groupements éventuellement présents, qui représentent alors un radical hydrocarboné ayant 1 à 4 atomes de carbone,

d) éventuellement d'au moins un monomère du type acrylamide ou méthacrylamide ou leurs dérivés et leurs mélanges tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle ou leurs mélanges, les esters insaturés tels que le méthacrylate de N-[2-(diméthylamino) éthyl], ou l'acrylate de N-[2-(diméthylamino) éthyl] ou leurs mélanges, les vinyliques tels que l'acétate de vinyle, la vinylpyrrolidone, le styrène, l'alphaméthylstyrène et leurs dérivés ou leurs mélanges, ou d'au moins un monomère cationique ou ammonium quaternaire tels que le chlorure ou sulfate de [2-(méthacryloyloxy) éthyl] triméthyl ammonium, le chlorure ou sulfate de [2-(acryloyloxy) éthyl] triméthyl ammonium, le chlorure ou sulfate de [3-(acrylamido) propyl] triméthyl ammonium, le chlorure ou sulfate de diméthyl diallyl ammonium, le chlorure ou sulfate de [3-(méthacrylamido) propyl] triméthyl ammonium, ou leurs mélanges,

e) éventuellement d'au moins un monomère réticulant choisi dans le groupe constitué par le diméthacrylate d'éthylène glycol, le triméthylolpropanetriacrylate, l'acrylate d'allyle, les maléates d'allyle, le méthylène-bis-acrylamide, le méthylène-bis-méthacrylamide, le tétrallyloxyéthane, les triallylcyanurates, les éthers allyliques obtenus à partir de polyols tels que le pentaérythritol, le sorbitol ou le sucrose,

le total des constituants a), b), c), d) et e) étant égal à 100%,
et ayant une viscosité intrinsèque inférieure ou égale à 100 ml/g déterminée selon la méthode dite « méthode de visco. Intrinsèque ».

**2.** Suspension aqueuse de substances minérales affinées selon la revendication 1 **caractérisée en ce que** ledit copolymère est constitué, exprimé en poids :

a) de 2 % à 95 %, préférentiellement de 3 % à 25 % et très préférentiellement de 4 % à 15 % d'au moins un monomère anionique à insaturation éthylénique et à fonction monocarboxylique choisi parmi les monomères à insaturation éthylénique et à fonction monocarboxylique tels que l'acide acrylique ou méthacrylique ou encore les hémiesters de diacides tels que les monoesters en $C_1$ à $C_4$ des acides maléique ou itaconique, ou leurs mélanges, ou à fonction dicarboxylique choisi parmi les monomères à insaturation éthylénique et fonction dicarboxylique tels que l'acide crotonique, isocrotonique, cinnamique, itaconique, maléique, ou encore les anhydrides d'acides carboxyliques, tels que l'anhydride maléique ou à fonction sulfonique choisi parmi les monomères à insaturation éthylénique et à fonction sulfonique tels que l'acide acrylamido-méthyl-propane-sulfonique, le méthallylsulfonate de sodium, l'acide vinyl sulfonique et l'acide styrène sulfonique ou bien encore à fonction phosphorique choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore à fonction phosphonique choisi parmi les monomères à insaturation éthylénique et à fonction phosphonique tels que l'acide vinyl phosphonique, ou leurs mélanges,

b) de 97,9 % à 4,9 %, préférentiellement de 95 % à 65 % et très préférentiellement de 92 % à 78 % d'au moins un monomère à insaturation éthylénique non ionique de formule (I) :

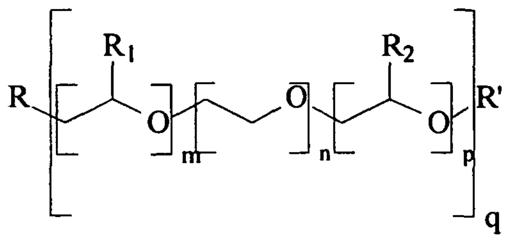

dans laquelle :

- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que $5 \leq (m+n+p)q \leq 150$, et représente préférentiellement un nombre entier tel que $15 \leq (m+n+p)q \leq 120$,
- $R_1$ représente l'hydrogène ou le radical méthyle ou éthyle,
- $R_2$ représente l'hydrogène ou le radical méthyle ou éthyle,
- R représente un radical contenant une fonction insaturée polymérisable, appartenant au groupe des vinyliques ainsi qu'au groupe des esters acrylique, méthacrylique, maléique, itaconique, crotonique, vinylphtalique ainsi qu'au groupe des insaturés uréthannes tels que les acryluréthanne, méthacryluréthanne, $\alpha$ - $\alpha$' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente l'hydrogène ou un radical hydrocarboné ayant 1 à 40 atomes de carbone, et représente préférentiellement un radical hydrocarboné ayant 1 à 12 atomes de carbone et très préférentiellement un radical hydrocarboné ayant 1 à 4 atomes de carbone,

ou du mélange de plusieurs monomères de formule (I),
c) de 0,1 % à 50 %, préférentiellement de 0,2 % à 10 % et très préférentiellement de 0,3 % à 5 % d'au moins un monomère organosililé, choisi de manière préférentielle parmi les molécules de formules (IIa) ou (IIb) ou (IIc) ou leurs mélanges :
avec formule (IIa)

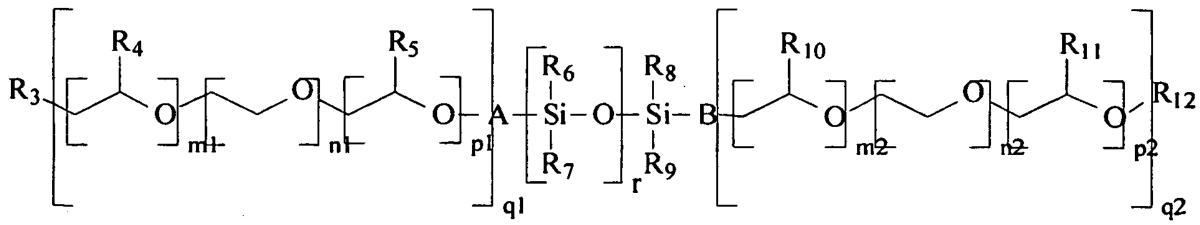

dans laquelle :

- m1, p1, m2 et p2 représentent un nombre de motifs d'oxyde d'alkylène inférieur ou égal à 150,
- n1 et n2 représentent un nombre de motifs d'oxyde d'éthylène inférieur ou égal à 150,
- q1 et q2 représentent un nombre entier au moins égal à 1 et tel que $0 \leq (m1+n1+p1)q1 \leq 150$ et $0 \leq (m2+n2+p2)q2 \leq 150$,
- r représente un nombre tel que $1 \leq r \leq 200$,
- $R_3$ représente un radical contenant une fonction insaturée polymérisable, appartenant au groupe des vinyliques ainsi qu'au groupe des esters acrylique, méthacrylique, maléique, itaconique, crotonique, vinylphtalique ainsi qu'au groupe des insaturés uréthannes tels que les acryluréthanne, méthacryluréthanne, $\alpha$ - $\alpha$' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- $R_4$, $R_5$, $R_{10}$ et $R_{11}$, représentent l'hydrogène ou le radical méthyle ou éthyle,
- $R_6$, $R_7$, $R_8$ et $R_9$, représentent des groupements linéaires ou ramifiés alkyle, ou aryle, ou alkylaryle, ou arylalkyle ayant 1 à 20 atomes de carbone, ou leur mélange,

- $R_{12}$ représente un radical hydrocarboné ayant 1 à 40 atomes de carbone,
- A et B sont des groupements éventuellement présents, qui représentent alors un radical hydrocarboné ayant 1 à 4 atomes de carbone,

avec formule (IIb)

R-A-Si(OB)$_3$

dans laquelle :

- R représente un radical contenant une fonction insaturée polymérisable, appartenant au groupe des vinyliques ainsi qu'au groupe des esters acrylique, méthacrylique, maléique, itaconique, crotonique, vinylphtalique ainsi qu'au groupe des insaturés uréthannes tels que les acryluréthanne, méthacryluréthanne, $\alpha$ - $\alpha$' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- A est un groupement éventuellement présent, qui représente alors un radical hydrocarboné ayant 1 à 4 atomes de carbone,
- B représente un radical hydrocarboné ayant 1 à 4 atomes de carbone,
avec formule (IIc) :

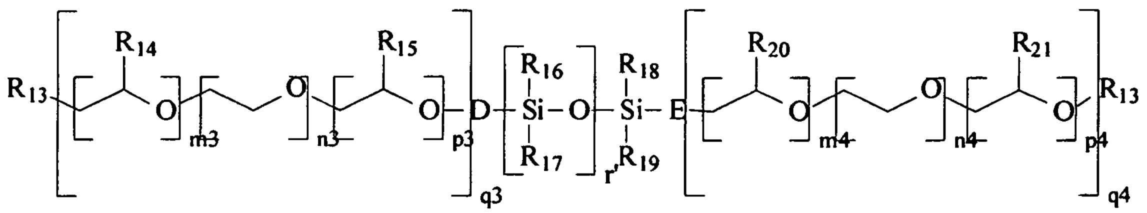

dans laquelle :

- m3, p3, m4 et p4 représentent un nombre de motifs d'oxyde d'alkylène inférieur ou égal à 150,
- n3 et n4 représentent un nombre de motifs d'oxyde d'éthylène inférieur ou égal à 150,
- q3 et q4 représentent un nombre entier au moins égal à 1 et tel que $0 \leq (m3+n3+p3)q3 \leq 150$ et $0 \leq (m4+n4+p4)q4 \leq 150$,
- r' représente un nombre tel que $1 \leq r' \leq 200$,
- $R_{13}$ représente un radical contenant une fonction insaturée polymérisable, appartenant au groupe des vinyliques ainsi qu'au groupe des esters acrylique, méthacrylique, maléique, itaconique, crotonique, vinylphtalique ainsi qu'au groupe des insaturés uréthannes tels que les acryluréthanne, méthacryluréthanne, $\alpha$ - $\alpha$' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- $R_{14}$, $R_{15}$, $R_{20}$ et $R_{21}$, représentent l'hydrogène ou le radical méthyle ou éthyle,
- $R_{16}$, $R_{17}$, $R_{18}$ et $R_{19}$, représentent des groupements linéaires ou ramifiés alkyle, ou aryle, ou alkylaryle, ou arylalkyle ayant 1 à 20 atomes de carbone, ou leur mélange,
- D et E sont des groupements éventuellement présents, qui représentent alors un radical hydrocarboné ayant 1 à 4 atomes de carbone,

d) de 0 % à 50 %, préférentiellement de 0 % à 10 % et très préférentiellement de 0 % à 5 % d'au moins un monomère du type acrylamide ou méthacrylamide ou leurs dérivés et leurs mélanges tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle ou leurs mélanges, les esters insaturés tels que le méthacrylate de N-[2-(diméthylamino) éthyl], ou l'acrylate de N-[2-(diméthylamino) éthyl] ou leurs mélanges, les vinyliques tels que l'acétate de vinyle, la vinylpyrrolidone, le styrène, l'alphaméthylstyrène et leurs dérivés ou leurs mélanges, ou d'au moins un monomère cationique ou ammonium quaternaire tels que le chlorure ou sulfate de [2-(méthacryloyloxy) éthyl] triméthyl ammonium, le chlorure ou sulfate de [2-(acryloyloxy) éthyl] triméthyl ammonium, le chlorure ou sulfate de [3-(acrylamido) propyl] triméthyl

ammonium, le chlorure ou sulfate de diméthyl diallyl ammonium, le chlorure ou sulfate de [3-(méthacrylamido) propyl] triméthyl ammonium, ou leurs mélanges,

e) de 0 % à 5 %, préférentiellement de 0 % à 3 % d'au moins un monomère réticulant choisi dans le groupe constitué par le diméthacrylate d'éthylène glycol, le triméthylolpropanetriacrylate, l'acrylate d'allyle, les maléates d'allyle, le méthylène-bis-acrylamide, le méthylène-bis-méthacrylamide, le tétrallyloxyéthane, les triallylcyanurates, les éthers allyliques obtenus à partir de polyols tels que le pentaérythritol, le sorbitol ou le sucrose,

le total des constituants a), b), c), d) et e) étant égal à 100%,
et ayant une viscosité intrinsèque inférieure ou égale à 100 ml/g déterminée selon la méthode dite « méthode de visco. Intrinsèque ».

3. Suspension aqueuse de matières minérales selon l'une des revendications 1 à 2, **caractérisée en ce que** le dit copolymère est sous sa forme acide, partiellement neutralisée ou totalement neutralisée par un ou plusieurs agents de neutralisation disposant d'une fonction neutralisante monovalente ou disposant d'une fonction neutralisante polyvalente tels que pour la fonction monovalente ceux choisis dans le groupe constitué par les cations alcalins, en particulier le sodium, le potassium, le lithium, l'ammonium ou les amines primaires, secondaires ou tertiaires aliphatiques et/ou cycliques telles que la stéarylamine, les éthanolamines (mono-, di-, triéthanolamine), la mono et diéthylamine, la cyclohexylamine, la méthylcyclohexylamine, l'amino méthyl propanol, la morpholine, ou bien encore pour la fonction polyvalente ceux choisis dans le groupe constitué par les cations divalents alcalino-terreux, en particulier le magnésium et le calcium, ou encore le zinc, de même que par les cations trivalents, dont en particulier l'aluminium, ou encore par certains cations de valence plus élevée.

4. Suspension aqueuse de matières minérales selon l'une des revendications 1 à 3, **caractérisée en ce qu'**elle contient de 0,05 % à 10 % dudit copolymère en poids sec par rapport au poids sec de substances minérales.

5. Suspension aqueuse de matières minérales selon l'une des revendications 1 à 3, **caractérisée en ce qu'**elle contient de 0,05 % à 10 % dudit copolymère en poids sec par rapport au poids sec de substances minérales et au moins un autre dispersant ou agent d'aide au broyage.

6. Suspension aqueuse de matières minérales selon la revendication 5, **caractérisée en ce** l'autre dispersant ou agent d'aide au broyage est choisi parmi les dispersants ou agents d'aide au broyage tels que les homopolymères ou copolymères de l'acide acrylique sous leurs formes acides, ou partiellement ou totalement neutralisées par un ou plusieurs agents de neutralisation disposant d'une fonction neutralisante monovalente ou disposant d'une fonction neutralisante polyvalente tels que pour la fonction monovalente ceux choisis dans le groupe constitué par les cations alcalins, en particulier le sodium, le potassium, le lithium, l'ammonium ou les amines primaires, secondaires ou tertiaires aliphatiques et/ou cycliques telles que la stéarylamine, les éthanolamines (mono-, di-, triéthanolamine), la mono et diéthylamine, la cyclohexylamine, la méthylcyclohexylamine, l'amino méthyl propanol, la morpholine, ou bien encore pour la fonction polyvalente ceux choisis dans le groupe constitué par les cations divalents alcalino-terreux, en particulier le magnésium et le calcium, ou encore le zinc, de même que par les cations trivalents, dont en particulier l'aluminium, ou encore par certains cations de valence plus élevée, ou choisi parmi les dispersants ou agents d'aide au broyage tels que les donneurs d'ions $H_3O^+$choisis préférablement parmi l'acide phosphorique et/ou ses sels avec des bases mono et/ou divalentes telles que la soude ou la chaux.

7. Suspension aqueuse de matières minérales selon l'une des revendications 5 ou 6, **caractérisée en ce qu'**elle contient de 0,05 % à 1,0 %, en poids sec par rapport au poids sec de substances minérales, dudit autre dispersant ou agent d'aide au broyage.

8. Suspension aqueuse de matières minérales selon l'une des revendications 1 à 7 **caractérisée en ce que** la matière minérale est choisie parmi le carbonate de calcium, la dolomie, le gypse, l'hydroxyde de calcium, le blanc satin, le dioxide de titane, le tri hydroxyde d'aluminium, le mica, le talc, les kaolins, les kaolins calcinés, ou encore les charges mixtes à base de carbonates de divers métaux comme le calcium associé au magnésium, et les mélanges de ces charges entre elles, comme les mélanges talc-carbonate de calcium, carbonate de calcium-kaolin, ou encore les mélanges carbonate de calcium avec le trihydroxyde d'aluminium, ou encore les mélanges avec des fibres synthétiques ou naturelles ou encore les co-structures des minéraux comme les co-structures talc-carbonate de calcium ou talc-dioxyde de titane, et est préférentiellement du carbonate de calcium tel que du carbonate de calcium naturel choisi parmi le marbre, la calcite, la craie ou leurs mélanges.

9. Suspension aqueuse de matières minérales selon l'une des revendications 1 à 8 **caractérisée en ce que** la suspension a une concentration en matière sèche comprise entre 15 % et 85 % en poids, de préférence entre 40 % et 80 %, et très préférentiellement entre 50 % et 78 %.

**10.** Suspension aqueuse de matières minérales selon l'une des revendications 1 à 9 **caractérisée en ce que** la matière minérale présente un diamètre médian de grain, mesuré par Sédigraph™ 5100, compris entre 50 μm et 0,01 μm, préférentiellement entre 5 μm et 0,2 μm et très préférentiellement entre 2 μm et 0,3 μm.

**11.** Suspension aqueuse de matières minérales selon l'une des revendications 1 à 10 **caractérisée en ce que** les grains de matières minérales ont, à granulométrie équivalente, une surface spécifique BET déterminée selon la norme ISO 9277 inférieure à celle des grains de matières minérales des suspensions aqueuses de matières minérales affinées à l'aide d'agents d'aide au broyage tels que les polyacrylates homopolymères ou copolymères.

**12.** Suspension aqueuse de matières minérales selon l'une des revendications 1 à 11 **caractérisée en ce que** le pH de la suspension finale est compris entre 7,5 et 13, préférentiellement entre 8 et 12 et très préférentiellement entre 8,5 et 10.

**13.** Utilisation d'un copolymère faiblement ionique et hydrosoluble, comme agent d'aide au broyage de substances minérales en suspension aqueuse **caractérisée en ce que** ledit copolymère est composé :

a) d'au moins un monomère anionique à insaturation éthylénique et à fonction monocarboxylique choisi parmi les monomères à insaturation éthylénique et à fonction monocarboxylique tels que l'acide acrylique ou méthacrylique ou encore les hémiesters de diacides tels que les monoesters en $C_1$ à $C_4$ des acides maléique ou itaconique, ou leurs mélanges, ou à fonction dicarboxylique choisi parmi les monomères à insaturation éthylénique et fonction dicarboxylique tels que l'acide crotonique, isocrotonique, cinnamique, itaconique, maléique, ou encore les anhydrides d'acides carboxyliques, tels que l'anhydride maléique ou à fonction sulfonique choisi parmi les monomères à insaturation éthylénique et à fonction sulfonique tels que l'acide acrylamido-méthyl-propane-sulfonique, le méthallylsulfonate de sodium, l'acide vinyl sulfonique et l'acide styrène sulfonique ou bien encore à fonction phosphorique choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore à fonction phosphonique choisi parmi les monomères à insaturation éthylénique et à fonction phosphonique tels que l'acide vinyl phosphonique, ou leurs mélanges,
b) d'au moins un monomère à insaturation éthylénique non ionique de formule (I) :

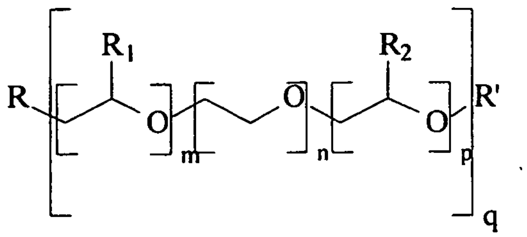

dans laquelle :

- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que $5 \leq (m+n+p)q \leq 150$, et représente préférentiellement un nombre entier tel que $15 \leq (m+n+p)q \leq 120$,
- $R_1$ représente l'hydrogène ou le radical méthyle ou éthyle,
- $R_2$ représente l'hydrogène ou le radical méthyle ou éthyle,
- R représente un radical contenant une fonction insaturée polymérisable, appartenant au groupe des vinyliques ainsi qu'au groupe des esters acrylique, méthacrylique, maléique, itaconique, crotonique, vinylphtalique ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente l'hydrogène ou un radical hydrocarboné ayant 1 à 40 atomes de carbone, et représente

préférentiellement un radical hydrocarboné ayant 1 à 12 atomes de carbone et très préférentiellement un radical hydrocarboné ayant 1 à 4 atomes de carbone,

ou du mélange de plusieurs monomères de formule (I),
c) d'au moins un monomère organosililé, choisi de manière préférentielle parmi les molécules de formules (IIa) ou (IIb) ou (IIc) ou leurs mélanges :
avec formule (IIa)

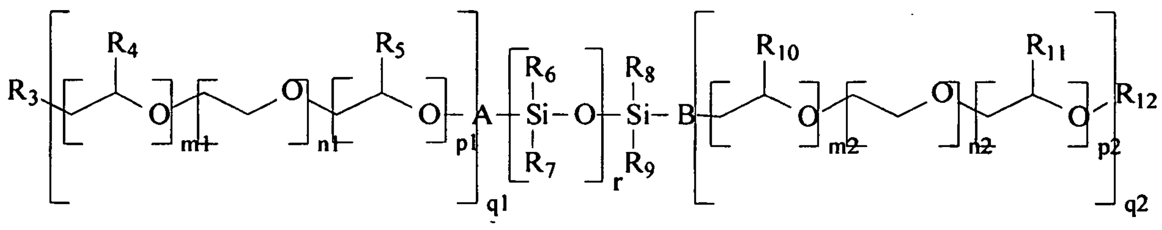

dans laquelle :

- m1, p1, m2 et p2 représentent un nombre de motifs d'oxyde d'alkylène inférieur ou égal à 150,
- n1 et n2 représentent un nombre de motifs d'oxyde d'éthylène inférieur ou égal à 150,
- q1 et q2 représentent un nombre entier au moins égal à 1 et tel que $0 \leq (m1+n1+p1)q1 \leq 150$ et $0 \leq (m2+n2+p2)q2 \leq 150$,
- r représente un nombre tel que $1 \leq r \leq 200$,
- $R_3$ représente un radical contenant une fonction insaturée polymérisable, appartenant au groupe des vinyliques ainsi qu'au groupe des esters acrylique, méthacrylique, maléique, itaconique, crotonique, vinylphtalique ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- $R_4$, $R_5$, $R_{10}$ et $R_{11}$, représentent l'hydrogène ou le radical méthyle ou éthyle,
- $R_6$, $R_7$, $R_8$ et $R_9$, représentent des groupements linéaires ou ramifiés alkyle, ou aryle, ou alkylaryle, ou arylalkyle ayant 1 à 20 atomes de carbone, ou leur mélange,
- $R_{12}$ représente un radical hydrocarboné ayant 1 à 40 atomes de carbone,
- A et B sont des groupements éventuellement présents, qui représentent alors un radical hydrocarboné ayant 1 à 4 atomes de carbone,

avec formule (IIb)

$$R - A - Si\,(OB)_3$$

dans laquelle :

- R représente un radical contenant une fonction insaturée polymérisable, appartenant au groupe des vinyliques ainsi qu'au groupe des esters acrylique, méthacrylique, maléique, itaconique, crotonique, vinylphtalique ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- A est un groupement éventuellement présent, qui représente alors un radical hydrocarboné ayant 1 à 4 atomes de carbone,
- B représente un radical hydrocarboné ayant 1 à 4 atomes de carbone,
avec formule (IIc) :

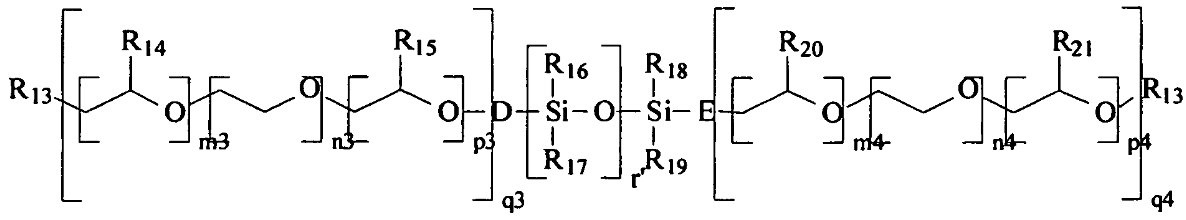

dans laquelle :

- m3, p3, m4 et p4 représentent un nombre de motifs d'oxyde d'alkylène inférieur ou égal à 150,
- n3 et n4 représentent un nombre de motifs d'oxyde d'éthylène inférieur ou égal à 150,
- q3 et q4 représentent un nombre entier au moins égal à 1 et tel que $0 \leq (m3+n3+p3)q3 \leq 150$ et $0 \leq (m4+n4+p4)q4 \leq 150$,
- r' représente un nombre tel que $1 \leq r' \leq 200$,
- $R_{13}$ représente un radical contenant une fonction insaturée polymérisable, appartenant au groupe des vinyliques ainsi qu'au groupe des esters acrylique, méthacrylique, maléique, itaconique, crotonique, vinylphtalique ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- $R_{14}$, $R_{15}$, $R_{20}$ et $R_{21}$, représentent l'hydrogène ou le radical méthyle ou éthyle,
- $R_{16}$, $R_{17}$, $R_{18}$ et $R_{19}$, représentent des groupements linéaires ou ramifiés alkyle, ou aryle, ou alkylaryle, ou arylalkyle ayant 1 à 20 atomes de carbone, ou leur mélange,
- D et E sont des groupements éventuellement présents, qui représentent alors un radical hydrocarboné ayant 1 à 4 atomes de carbone,

d) éventuellement d'au moins un monomère du type acrylamide ou méthacrylamide ou leurs dérivés et leurs mélanges tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle ou leurs mélanges, les esters insaturés tels que le méthacrylate de N-[2-(diméthylamino) éthyl], ou l'acrylate de N-[2-(diméthylamino) éthyl] ou leurs mélanges, les vinyliques tels que l'acétate de vinyle, la vinylpyrrolidone, le styrène, l'alphaméthylstyrène et leurs dérivés ou leurs mélanges, ou d'au moins un monomère cationique ou ammonium quaternaire tels que le chlorure ou sulfate de [2-(méthacryloyloxy) éthyl] triméthyl ammonium, le chlorure ou sulfate de [2-(acryloyloxy) éthyl] triméthyl ammonium, le chlorure ou sulfate de [3-(acrylamido) propyl] triméthyl ammonium, le chlorure ou sulfate de diméthyl diallyl ammonium, le chlorure ou sulfate de [3-(méthacrylamido) propyl] triméthyl ammonium, ou leurs mélanges,

e) éventuellement d'au moins un monomère réticulant choisi dans le groupe constitué par le diméthacrylate d'éthylène glycol, le triméthylolpropanetriacrylate, l'acrylate d'allyle, les maléates d'allyle, le méthylène-bis-acrylamide, le méthylène-bis-méthacrylamide, le tétrallyloxyéthane, les triallylcyanurates, les éthers allyliques obtenus à partir de polyols tels que le pentaérythritol, le sorbitol ou le sucrose,

le total des constituants a), b), c), d) et e) étant égal à 100%,
et **en ce qu'**il a une viscosité intrinsèque inférieure ou égale à 100 ml/g déterminée selon la méthode dite « méthode de visco. Intrinsèque ».

**14.** Utilisation d'un copolymère faiblement ionique et hydrosoluble comme agent d'aide au broyage selon la revendication 13, **caractérisée en ce que** ledit copolymère est constitué, exprimé en poids :

a) de 2 % à 95 %, préférentiellement de 3 % à 25 % et très préférentiellement de 4 % à 15 % d'au moins un monomère anionique à insaturation éthylénique et à fonction monocarboxylique choisi parmi les monomères à insaturation éthylénique et à fonction monocarboxylique tels que l'acide acrylique ou méthacrylique ou encore les hémiesters de diacides tels que les monoesters en $C_1$ à $C_4$ des acides maléique ou itaconique, ou leurs mélanges, ou à fonction dicarboxylique choisi parmi les monomères à insaturation éthylénique et fonction dicarboxylique tels que l'acide crotonique, isocrotonique, cinnamique, itaconique, maléique, ou encore les anhydrides d'acides carboxyliques, tels que l'anhydride maléique ou à fonction sulfonique choisi parmi les monomères à insaturation éthylénique et à fonction sulfonique tels que l'acide acrylamido-méthyl-propane-sulfonique,

le méthallylsulfonate de sodium, l'acide vinyl sulfonique et l'acide styrène sulfonique ou bien encore à fonction phosphorique choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore à fonction phosphonique choisi parmi les monomères à insaturation éthylénique et à fonction phosphonique tels que l'acide vinyl phosphonique, ou leurs mélanges,
b) de 97,9 % à 4,9 %, préférentiellement de 95 % à 65 % et très préférentiellement de 92 % à 78 % d'au moins un monomère à insaturation éthylénique non ionique de formule (I) :

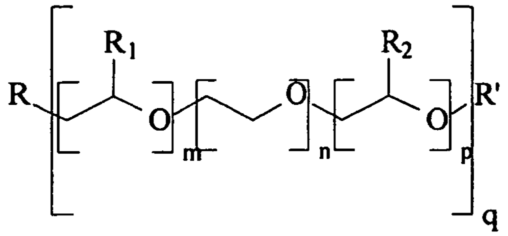

dans laquelle :

- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que $5 \leq (m+n+p)q \leq 150$, et représente préférentiellement un nombre entier tel que $15 \leq (m+n+p)q \leq 120$,
- $R_1$ représente l'hydrogène ou le radical méthyle ou éthyle,
- $R_2$ représente l'hydrogène ou le radical méthyle ou éthyle,
- R représente un radical contenant une fonction insaturée polymérisable, appartenant au groupe des vinyliques ainsi qu'au groupe des esters acrylique, méthacrylique, maléique, itaconique, crotonique, vinylphtalique ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente l'hydrogène ou un radical hydrocarboné ayant 1 à 40 atomes de carbone, et représente préférentiellement un radical hydrocarboné ayant 1 à 12 atomes de carbone et très préférentiellement un radical hydrocarboné ayant 1 à 4 atomes de carbone,

ou du mélange de plusieurs monomères de formule (I),
c) de 0,1 % à 50 %, préférentiellement de 0,2 % à 10 % et très préférentiellement de 0,3 % à 5 % d'au moins un monomère organosililé, choisi de manière préférentielle parmi les molécules de formules (IIa) ou (IIb) ou (IIc) ou leurs mélanges :

avec formule (IIa)

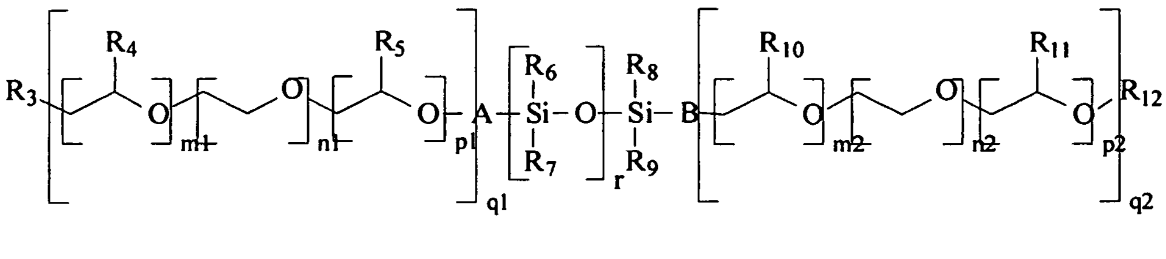

dans laquelle :

- m1, p1, m2 et p2 représentent un nombre de motifs d'oxyde d'alkylène inférieur ou égal à 150,
- n1 et n2 représentent un nombre de motifs d'oxyde d'éthylène inférieur ou égal à 150,
- q1 et q2 représentent un nombre entier au moins égal à 1 et tel que $0 \leq (m1+n1+p1)q1 \leq 150$ et $0 \leq$

$(m2+n2+p2)q2 \leq 150$,

- r représente un nombre tel que $1 \leq r \leq 200$,
- $R_3$ représente un radical contenant une fonction insaturée polymérisable, appartenant au groupe des vinyliques ainsi qu'au groupe des esters acrylique, méthacrylique, maléique, itaconique, crotonique, vinylphtalique ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- $R_4$, $R_5$, $R_{10}$ et $R_{11}$, représentent l'hydrogène ou le radical méthyle ou éthyle,
- $R_6$, $R_7$, $R_8$ et $R_9$, représentent des groupements linéaires ou ramifiés alkyle, ou aryle, ou alkylaryle, ou arylalkyle ayant 1 à 20 atomes de carbone, ou leur mélange,
- $R_{12}$ représente un radical hydrocarboné ayant 1 à 40 atomes de carbone,
- A et B sont des groupements éventuellement présents, qui représentent alors un radical hydrocarboné ayant 1 à 4 atomes de carbone,

avec formule (IIb)

$$R\text{-}A\text{-}Si(OB)_3$$

dans laquelle :

- R représente un radical contenant une fonction insaturée polymérisable, appartenant au groupe des vinyliques ainsi qu'au groupe des esters acrylique, méthacrylique, maléique, itaconique, crotonique, vinylphtalique ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- A est un groupement éventuellement présent, qui représente alors un radical hydrocarboné ayant 1 à 4 atomes de carbone,
- B représente un radical hydrocarboné ayant 1 à 4 atomes de carbone,

avec formule (IIc) :

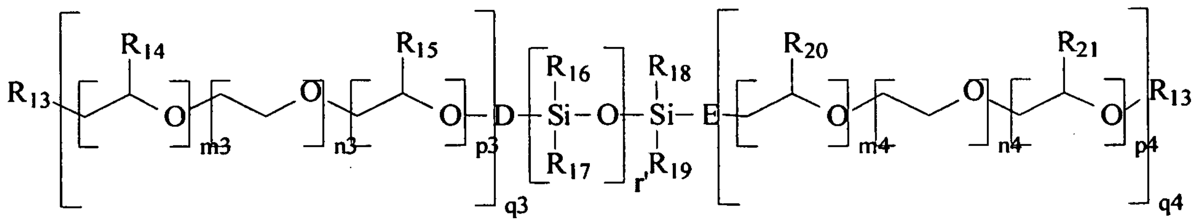

dans laquelle :

- m3, p3, m4 et p4 représentent un nombre de motifs d'oxyde d'alkylène inférieur ou égal à 150,
- n3 et n4 représentent un nombre de motifs d'oxyde d'éthylène inférieur ou égal à 150,
- q3 et q4 représentent un nombre entier au moins égal à 1 et tel que $0 \leq (m3+n3+p3)q3 \leq 150$ et $0 \leq (m4+n4+p4)q4 \leq 150$,
- r' représente un nombre tel que $1 \leq r' \leq 200$,
- $R_{13}$ représente un radical contenant une fonction insaturée polymérisable, appartenant au groupe des vinyliques ainsi qu'au groupe des esters acrylique, méthacrylique, maléique, itaconique, crotonique, vinylphtalique ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- $R_{14}$, $R_{15}$, $R_{20}$ et $R_{21}$, représentent l'hydrogène ou le radical méthyle ou éthyle,
- $R_{16}$, $R_{17}$, $R_{18}$ et $R_{19}$, représentent des groupements linéaires ou ramifiés alkyle, ou aryle, ou alkylaryle, ou arylalkyle ayant 1 à 20 atomes de carbone, ou leur mélange,
- D et E sont des groupements éventuellement présents, qui représentent alors un radical hydrocarboné ayant 1 à 4 atomes de carbone,

d) de 0 % à 50 %, préférentiellement de 0 % à 10 % et très préférentiellement de 0 % à 5 % d'au moins un monomère du type acrylamide ou méthacrylamide ou leurs dérivés et leurs mélanges tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle ou leurs mélanges, les esters insaturés tels que le méthacrylate de N-[2-(diméthylamino) éthyl], ou l'acrylate de N-[2-(diméthylamino) éthyl] ou leurs mélanges, les vinyliques tels que l'acétate de vinyle, la vinylpyrrolidone, le styrène, l'alphaméthylstyrène et leurs dérivés ou leurs mélanges, ou d'au moins un monomère cationique ou ammonium quaternaire tels que le chlorure ou sulfate de [2-(méthacryloyloxy) éthyl] triméthyl ammonium, le chlorure ou sulfate de [2-(acryloyloxy) éthyl] triméthyl ammonium, le chlorure ou sulfate de [3-(acrylamido) propyl] triméthyl ammonium, le chlorure ou sulfate de diméthyl diallyl ammonium, le chlorure ou sulfate de [3-(méthacrylamido) propyl] triméthyl ammonium, ou leurs mélanges,

e) de 0 % à 5 %, préférentiellement de 0 % à 3 % d'au moins un monomère réticulant choisi dans le groupe constitué par le diméthacrylate d'éthylène glycol, le triméthylolpropanetriacrylate, l'acrylate d'allyle, les maléates d'allyle, le méthylène-bis-acrylamide, le méthylène-bis-méthacrylamide, le tétrallyloxyéthane, les triallylcyanurates, les éthers allyliques obtenus à partir de polyols tels que le pentaérythritol, le sorbitol ou le sucrose,

le total des constituants a), b), c), d) et e) étant égal à 100%,
et **en ce qu'**il a une viscosité intrinsèque inférieure ou égale à 100 ml/g déterminée selon la méthode dite « méthode de visco intrinsèque ».

**15.** Utilisation d'un copolymère faiblement ionique et hydrosoluble selon l'une quelconque des revendications 13 à 14, **caractérisée en ce que** ledit copolymère obtenu sous forme acide et éventuellement distillé, peut être également partiellement ou totalement neutralisé par un ou plusieurs agents de neutralisation disposant d'une fonction neutralisante monovalente ou disposant d'une fonction neutralisante polyvalente tels que pour la fonction monovalente ceux choisis dans le groupe constitué par les cations alcalins, en particulier le sodium, le potassium, le lithium, l'ammonium ou les amines primaires, secondaires ou tertiaires aliphatiques et/ou cycliques telles que la stéarylamine, les éthanolamines (mono-, di-, triéthanolamine), la mono et diéthylamine, la cyclohexylamine, la méthylcyclohexylamine, l'amino méthyl propanol, la morpholine, ou bien encore pour la fonction polyvalente ceux choisis dans le groupe constitué par les cations divalents alcalino-terreux, en particulier le magnésium et le calcium, ou encore le zinc, de même que par les cations trivalents, dont en particulier l'aluminium, ou encore par certains cations de valence plus élevée.

**16.** Utilisation d'un copolymère faiblement ionique et hydrosoluble selon l'une quelconque des revendications 13 à 14, **caractérisée en ce que** ledit copolymère issu de la réaction de copolymérisation peut éventuellement avant ou après la réaction de neutralisation totale ou partielle, être traité et séparé en plusieurs phases, selon des procédés statiques ou dynamiques, par un ou plusieurs solvants polaires appartenant au groupe constitué par l'eau, le méthanol, l'éthanol, le propanol, l'isopropanol, les butanols, l'acétone, le tétrahydrofurane ou leurs mélanges.

**17.** Agent d'aide au broyage de matières minérales en suspension aqueuse **caractérisé en ce que** ledit agent est un copolymère composé :

a) d'au moins un monomère anionique à insaturation éthylénique et à fonction monocarboxylique choisi parmi les monomères à insaturation éthylénique et à fonction monocarboxylique tels que l'acide acrylique ou méthacrylique ou encore les hémiesters de diacides tels que les monoesters en $C_1$ à $C_4$ des acides maléique ou itaconique, ou leurs mélanges, ou à fonction dicarboxylique choisi parmi les monomères à insaturation éthylénique et fonction dicarboxylique tels que l'acide crotonique, isocrotonique, cinnamique, itaconique, maléique, ou encore les anhydrides d'acides carboxyliques, tels que l'anhydride maléique ou à fonction sulfonique choisi parmi les monomères à insaturation éthylénique et à fonction sulfonique tels que l'acide acrylamido-méthyl-propane-sulfonique, le méthallylsulfonate de sodium, l'acide vinyl sulfonique et l'acide styrène sulfonique ou bien encore à fonction phosphorique choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore à fonction phosphonique choisi parmi les monomères à insaturation éthylénique et à fonction phosphonique tels que l'acide vinyl phosphonique, ou leurs mélanges,

b) d'au moins un monomère à insaturation éthylénique non ionique de formule (I) :

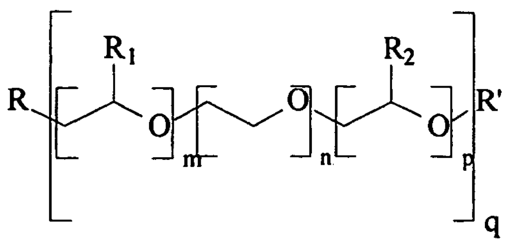

dans laquelle :

- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que $5 \leq (m+n+p)q \leq 150$, et représente préférentiellement un nombre entier tel que $15 \leq (m+n+p)q \leq 120$,
- $R_1$ représente l'hydrogène ou le radical méthyle ou éthyle,
- $R_2$ représente l'hydrogène ou le radical méthyle ou éthyle,
- R représente un radical contenant une fonction insaturée polymérisable, appartenant au groupe des vinyliques ainsi qu'au groupe des esters acrylique, méthacrylique, maléique, itaconique, crotonique, vinylphtalique ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente l'hydrogène ou un radical hydrocarboné ayant 1 à 40 atomes de carbone, et représente préférentiellement un radical hydrocarboné ayant 1 à 12 atomes de carbone et très préférentiellement un radical hydrocarboné ayant 1 à 4 atomes de carbone,

ou du mélange de plusieurs monomères de formule (I),
c) d'au moins un monomère organosililé, choisi de manière préférentielle parmi les molécules de formules (IIa) ou (IIb) ou (IIc) ou leurs mélanges :
avec formule (IIa)

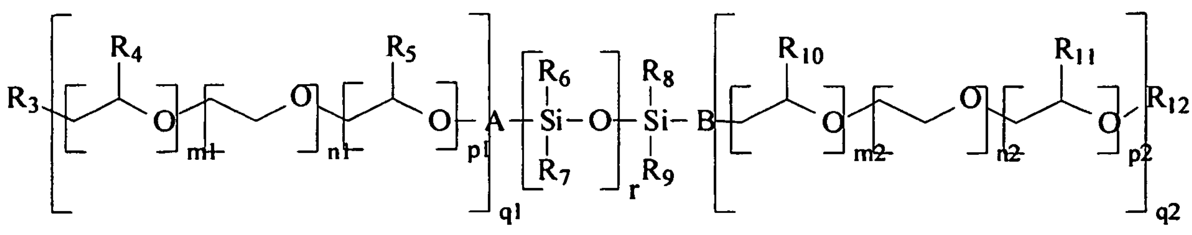

dans laquelle :

- m1, p1, m2 et p2 représentent un nombre de motifs d'oxyde d'alkylène inférieur ou égal à 150,
- n1 et n2 représentent un nombre de motifs d'oxyde d'éthylène inférieur ou égal à 150,
- q1 et q2 représentent un nombre entier au moins égal à 1 et tel que $0 \leq (m1+n1+p1)q1 \leq 150$ et $0 \leq (m2+n2+p2)q2 \leq 150$,
- r représente un nombre tel que $1 \leq r \leq 200$,
- $R_3$ représente un radical contenant une fonction insaturée polymérisable, appartenant au groupe des vinyliques ainsi qu'au groupe des esters acrylique, méthacrylique, maléique, itaconique, crotonique, vinylphtalique ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- $R_4$, $R_5$, $R_{10}$ et $R_{11}$, représentent l'hydrogène ou le radical méthyle ou éthyle,
- $R_6$, $R_7$, $R_8$ et $R_9$, représentent des groupements linéaires ou ramifiés alkyle, ou aryle, ou alkylaryle, ou arylalkyle ayant 1 à 20 atomes de carbone, ou leur mélange,
- $R_{12}$ représente un radical hydrocarboné ayant 1 à 40 atomes de carbone,

- A et B sont des groupements éventuellement présents, qui représentent alors un radical hydrocarboné ayant 1 à 4 atomes de carbone,

avec formule (IIb)

$$R\text{-}A\text{-}Si(OB)_3$$

dans laquelle :

- R représente un radical contenant une fonction insaturée polymérisable, appartenant au groupe des vinyliques ainsi qu'au groupe des esters acrylique, méthacrylique, maléique, itaconique, crotonique, vinylphtalique ainsi qu'au groupe des insaturés uréthannes tels que les acryluréthanne, méthacryluréthanne, α-a ' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- A est un groupement éventuellement présent, qui représente alors un radical hydrocarboné ayant 1 à 4 atomes de carbone,
- B représente un radical hydrocarboné ayant 1 à 4 atomes de carbone,
avec formule (IIc) :

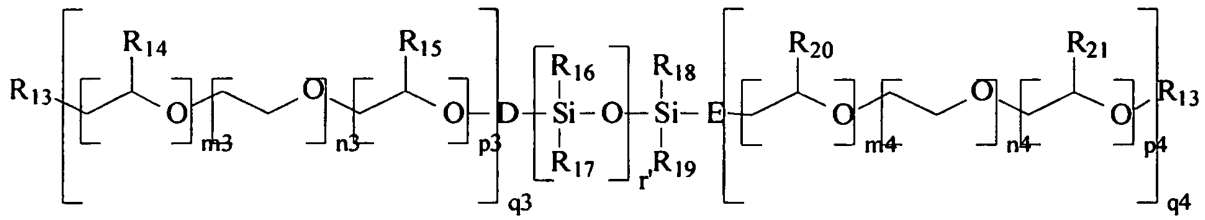

dans laquelle :

- m3, p3, m4 et p4 représentent un nombre de motifs d'oxyde d'alkylène inférieur ou égal à 150,
- n3 et n4 représentent un nombre de motifs d'oxyde d'éthylène inférieur ou égal à 150,
- q3 et q4 représentent un nombre entier au moins égal à 1 et tel que 0 ≤ (m3+n3+p3)q3 ≤ 150 et 0 ≤ (m4+n4+p4)q4 ≤ 150,
- r' représente un nombre tel que 1 ≤ r' ≤ 200,
- $R_{13}$ représente un radical contenant une fonction insaturée polymérisable, appartenant au groupe des vinyliques ainsi qu'au groupe des esters acrylique, méthacrylique, maléique, itaconique, crotonique, vinylphtalique ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- $R_{14}$, $R_{15}$, $R_{20}$ et $R_{21}$, représentent l'hydrogène ou le radical méthyle ou éthyle,
- $R_{16}$, $R_{17}$, $R_{18}$ et $R_{19}$, représentent des groupements linéaires ou ramifiés alkyle, ou aryle, ou alkylaryle, ou arylalkyle ayant 1 à 20 atomes de carbone, ou leur mélange,
- D et E sont des groupements éventuellement présents, qui représentent alors un radical hydrocarboné ayant 1 à 4 atomes de carbone,

d) éventuellement d'au moins un monomère du type acrylamide ou méthacrylamide ou leurs dérivés et leurs mélanges tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle ou leurs mélanges, les esters insaturés tels que le méthacrylate de N-[2-(diméthylamino) éthyl], ou l'acrylate de N-[2-(diméthylamino) éthyl] ou leurs mélanges, les vinyliques tels que l'acétate de vinyle, la vinylpyrrolidone, le styrène, l'alphaméthylstyrène et leurs dérivés ou leurs mélanges, ou d'au moins un monomère cationique ou ammonium quaternaire tels que le chlorure ou sulfate de [2-(méthacryloyloxy) éthyl] triméthyl ammonium, le chlorure ou sulfate de [2-(acryloyloxy) éthyl] triméthyl ammonium, le chlorure ou sulfate de [3-(acrylamido) propyl] triméthyl ammonium, le chlorure ou sulfate de diméthyl diallyl ammonium, le chlorure ou sulfate de [3-(méthacrylamido) propyl] triméthyl ammonium, ou leurs mélanges,

e) éventuellement d'au moins un monomère réticulant choisi dans le groupe constitué par le diméthacrylate d'éthylène glycol, le triméthylolpropanetriacrylate, l'acrylate d'allyle, les maléates d'allyle, le méthylène-bis-acrylamide, le méthylène-bis-méthacrylamide, le tétrallyloxyéthane, les triallylcyanurates, les éthers allyliques obtenus à partir de polyols tels que le pentaérythritol, le sorbitol ou le sucrose,

le total des constituants a), b), c), d) et e) étant égal à 100%,
et **en ce qu'**il a une viscosité intrinsèque inférieure ou égale à 100 ml/g déterminée selon la méthode dite « méthode de visco intrinsèque ».

**18.** Agent d'aide au broyage de matières minérales en suspension aqueuse selon la revendication 17 **caractérisé en ce que** ledit agent est un copolymère constitué, exprimé en poids :

a) de 2 % à 95 %, préférentiellement de 3 % à 25 % et très préférentiellement de 4 % à 15 % d'au moins un monomère anionique à insaturation éthylénique et à fonction monocarboxylique choisi parmi les monomères à insaturation éthylénique et à fonction monocarboxylique tels que l'acide acrylique ou méthacrylique ou encore les hémiesters de diacides tels que les monoesters en $C_1$ à $C_4$ des acides maléique ou itaconique, ou leurs mélanges, ou à fonction dicarboxylique choisi parmi les monomères à insaturation éthylénique et fonction dicarboxylique tels que l'acide crotonique, isocrotonique, cinnamique, itaconique, maléique, ou encore les anhydrides d'acides carboxyliques, tels que l'anhydride maléique ou à fonction sulfonique choisi parmi les monomères à insaturation éthylénique et à fonction sulfonique tels que l'acide acrylamido-méthyl-propane-sulfonique, le méthallylsulfonate de sodium, l'acide vinyl sulfonique et l'acide styrène sulfonique ou bien encore à fonction phosphorique choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore à fonction phosphonique choisi parmi les monomères à insaturation éthylénique et à fonction phosphonique tels que l'acide vinyl phosphonique, ou leurs mélanges,
b) de 97,9 % à 4,9 %, préférentiellement de 95 % à 65 % et très préférentiellement de 92 % à 78 % d'au moins un monomère à insaturation éthylénique non ionique de formule (I) :

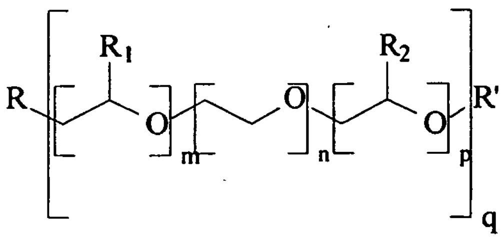

dans laquelle :

- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que $5 \leq (m+n+p)q \leq 150$, et représente préférentiellement un nombre entier tel que $15 \leq (m+n+p)q \leq 120$,
- $R_1$ représente l'hydrogène ou le radical méthyle ou éthyle,
- $R_2$ représente l'hydrogène ou le radical méthyle ou éthyle,
- R représente un radical contenant une fonction insaturée polymérisable, appartenant au groupe des vinyliques ainsi qu'au groupe des esters acrylique, méthacrylique, maléique, itaconique, crotonique, vinylphtalique ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente l'hydrogène ou un radical hydrocarboné ayant 1 à 40 atomes de carbone, et représente préférentiellement un radical hydrocarboné ayant 1 à 12 atomes de carbone et très préférentiellement un radical hydrocarboné ayant 1 à 4 atomes de carbone,
ou du mélange de plusieurs monomères de formule (I),

c) de 0,1 % à 50 %, préférentiellement de 0,2 % à 10 % et très préférentiellement de 0,3 % à 5 % d'au moins

un monomère organosililé, choisi de manière préférentielle parmi les molécules de formules (IIa) ou (IIb) ou (IIc) ou leurs mélanges :
avec formule (IIa)

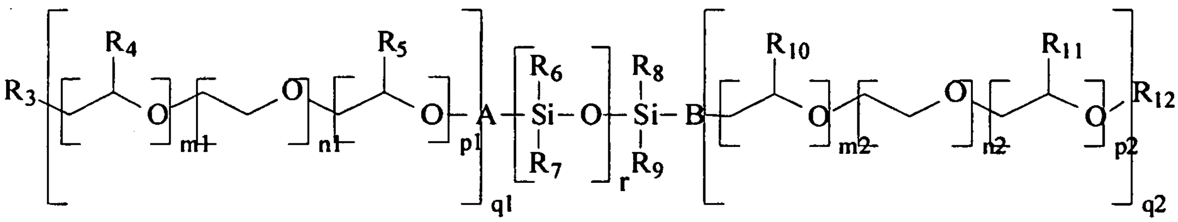

dans laquelle :

- m1, p1, m2 et p2 représentent un nombre de motifs d'oxyde d'alkylène inférieur ou égal à 150,
- n1 et n2 représentent un nombre de motifs d'oxyde d'éthylène inférieur ou égal à 150,
- q1 et q2 représentent un nombre entier au moins égal à 1 et tel que $0 \leq (m1+n1+p1)q1 \leq 150$ et $0 \leq (m2+n2+p2)q2 \leq 150$,
- r représente un nombre tel que $1 \leq r \leq 200$,
- $R_3$ représente un radical contenant une fonction insaturée polymérisable, appartenant au groupe des vinyliques ainsi qu'au groupe des esters acrylique, méthacrylique, maléique, itaconique, crotonique, vinylphtalique ainsi qu'au groupe des insaturés uréthannes tels que les acryluréthanne, méthacryluréthanne, $\alpha$-$\alpha$' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- $R_4$, $R_5$, $R_{10}$ et $R_{11}$, représentent l'hydrogène ou le radical méthyle ou éthyle,
- $R_6$, $R_7$, $R_8$ et $R_9$, représentent des groupements linéaires ou ramifiés alkyle, ou aryle, ou alkylaryle, ou arylalkyle ayant 1 à 20 atomes de carbone, ou leur mélange,
- $R_{12}$ représente un radical hydrocarboné ayant 1 à 40 atomes de carbone,
- A et B sont des groupements éventuellement présents, qui représentent alors un radical hydrocarboné ayant 1 à 4 atomes de carbone,

avec formule (IIb)

$$R\text{-}A\text{-}Si(OB)_3$$

dans laquelle :

- R représente un radical contenant une fonction insaturée polymérisable, appartenant au groupe des vinyliques ainsi qu'au groupe des esters acrylique, méthacrylique, maléique, itaconique, crotonique, vinylphtalique ainsi qu'au groupe des insaturés uréthannes tels que les acryluréthanne, méthacryluréthanne, $\alpha$-$\alpha$' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- A est un groupement éventuellement présent, qui représente alors un radical hydrocarboné ayant 1 à 4 atomes de carbone,
- B représente un radical hydrocarboné ayant 1 à 4 atomes de carbone, avec formule (IIc) :

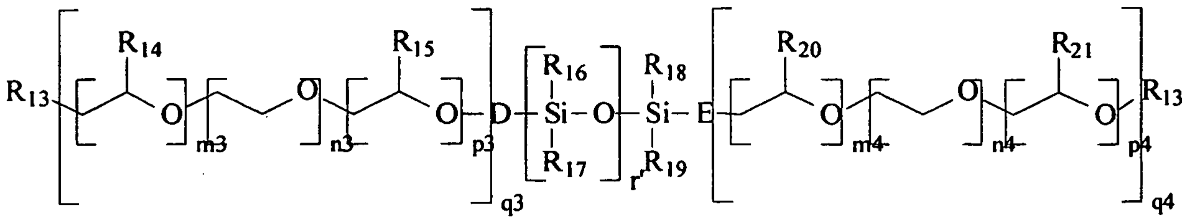

dans laquelle :

- m3, p3, m4 et p4 représentent un nombre de motifs d'oxyde d'alkylène inférieur ou égal à 150,
- n3 et n4 représentent un nombre de motifs d'oxyde d'éthylène inférieur ou égal à 150,
- q3 et q4 représentent un nombre entier au moins égal à 1 et tel que $0 \leq (m3+n3+p3)q3 \leq 150$ et $0 \leq (m4+n4+p4)q4 \leq 150$,
- r' représente un nombre tel que $1 \leq r' \leq 200$,
- $R_{13}$ représente un radical contenant une fonction insaturée polymérisable, appartenant au groupe des vinyliques ainsi qu'au groupe des esters acrylique, méthacrylique, maléique, itaconique, crotonique, vinylphtalique ainsi qu'au groupe des insaturés uréthannes tels que les acryluréthanne, méthacryluréthanne, α-a ' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- $R_{14}$, $R_{15}$, $R_{20}$ et $R_{21}$, représentent l'hydrogène ou le radical méthyle ou éthyle,
- $R_{16}$, $R_{17}$, $R_{18}$ et $R_{19}$, représentent des groupements linéaires ou ramifiés alkyle, ou aryle, ou alkylaryle, ou arylalkyle ayant 1 à 20 atomes de carbone, ou leur mélange,
- D et E sont des groupements éventuellement présents, qui représentent alors un radical hydrocarboné ayant 1 à 4 atomes de carbone,

d) de 0 % à 50 %, préférentiellement de 0 % à 10 % et très préférentiellement de 0 % à 5 % d'au moins un monomère du type acrylamide ou méthacrylamide ou leurs dérivés et leurs mélanges tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle ou leurs mélanges, les esters insaturés tels que le méthacrylate de N-[2-(diméthylamino) éthyl], ou l'acrylate de N-[2-(diméthylamino) éthyl] ou leurs mélanges, les vinyliques tels que l'acétate de vinyle, la vinylpyrrolidone, le styrène, l'alphaméthylstyrène et leurs dérivés ou leurs mélanges, ou d'au moins un monomère cationique ou ammonium quaternaire tels que le chlorure ou sulfate de [2-(méthacryloyloxy) éthyl] triméthyl ammonium, le chlorure ou sulfate de [2-(acryloyloxy) éthyl] triméthyl ammonium, le chlorure ou sulfate de [3-(acrylamido) propyl] triméthyl ammonium, le chlorure ou sulfate de diméthyl diallyl ammonium, le chlorure ou sulfate de [3-(méthacrylamido) propyl] triméthyl ammonium, ou leurs mélanges,
e) de 0 % à 5 %, préférentiellement de 0 % à 3 % d'au moins un monomère réticulant choisi dans le groupe constitué par le diméthacrylate d'éthylène glycol, le triméthylolpropanetriacrylate, l'acrylate d'allyle, les maléates d'allyle, le méthylène-bis-acrylamide, le méthylène-bis-méthacrylamide, le tétrallyloxyéthane, les triallylcyanurates, les éthers allyliques obtenus à partir de polyols tels que le pentaérythritol, le sorbitol ou le sucrose,

le total des constituants a), b), c), d) et e) étant égal à 100%,
et **en ce qu'**il a une viscosité intrinsèque inférieure ou égale à 100 ml/g déterminée selon la méthode dite « méthode de visco. Intrinsèque ».

**19.** Agent d'aide au broyage de matières minérales en suspension aqueuse selon l'une quelconque des revendications 17 ou 18 **caractérisé en ce que** ledit agent est un copolymère sous sa forme acide ou partiellement ou totalement neutralisé par un ou plusieurs agents de neutralisation disposant d'une fonction neutralisante monovalente ou disposant d'une fonction neutralisante polyvalente tels que pour la fonction monovalente ceux choisis dans le groupe constitué par les cations alcalins, en particulier le sodium, le potassium, le lithium, l'ammonium ou les amines primaires, secondaires ou tertiaires aliphatiques et/ou cycliques telles que la stéarylamine, les éthanolamines (mono-, di-, triéthanolamine), la mono et diéthylamine, la cyclohexylamine, la méthylcyclohexylamine, l'amino méthyl propanol, la morpholine, ou bien encore pour la fonction polyvalente ceux choisis dans le groupe constitué par les cations divalents alcalino-terreux, en particulier le magnésium et le calcium, ou encore le zinc, de même que par les cations trivalents, dont en particulier l'aluminium, ou encore par certains cations de valence plus élevée.

**20.** Agent d'aide au broyage de matières minérales en suspension aqueuse selon la revendication 19 **caractérisé en ce que** ledit copolymère issu de la réaction de copolymérisation peut éventuellement avant ou après la réaction de neutralisation totale ou partielle, être traité et séparé en plusieurs phases, selon des procédés statiques ou dynamiques par un ou plusieurs solvants polaires appartenant au groupe constitué par l'eau, le méthanol, l'éthanol, le propanol, l'isopropanol, les butanols, l'acétone, le tétrahydrofurane ou leurs mélanges.

**21.** Procédé de broyage de matières minérales en suspension aqueuse consistant à affiner en particules très fines une suspension aqueuse de ces matériaux minéraux **caractérisé en ce que** l'on utilise, comme agent d'aide au broyage avant et/ou pendant l'étape de broyage, 0,05 % à 10 % en poids sec, par rapport au poids sec de matières minérales,

du copolymère selon l'une quelconque des revendications 16 à 20, et **en ce que** l'on utilise éventuellement au moins un autre dispersant ou agent d'aide au broyage avant et/ou pendant l'étape de broyage.

**22.** Procédé de broyage en suspension aqueuse selon la revendication 21 **caractérisé en ce que** cet autre dispersant ou agent d'aide au broyage est choisi parmi les dispersants ou agents d'aide au broyage tels que les homopolymères ou copolymères de l'acide acrylique sous leurs formes acides, ou partiellement ou totalement neutralisées par un ou plusieurs agents de neutralisation ou choisi parmi les dispersants ou agents d'aide au broyage tels que les donneurs d'ions $H_3O^+$ choisis préférablement parmi l'acide phosphorique et/ou ses sels avec des bases mono et/ou divalentes telles que la soude ou la chaux.

**23.** Procédé de broyage en suspension aqueuse selon la revendication 22 **caractérisé en ce que** l'on utilise de 0,05 % à 1,0 %, en poids sec par rapport au poids sec de substances minérales, dudit autre dispersant ou agent d'aide au broyage.

**24.** Procédé de broyage en suspension aqueuse selon l'une quelconque des revendications 21 à 23 **caractérisé en ce que** la température au cours de l'étape de broyage et pour toutes les variantes du procédé de broyage selon l'invention est comprise entre 15°C et 150°C, préférentiellement entre 50°C et 105°C et très préférentiellement entre 60°C et 98°C.

**25.** Procédé de broyage en suspension aqueuse selon l'une quelconque des revendications 21 à 24 **caractérisé en ce que** pour des matières minérales contenant du carbonate, le pH au cours de l'étape de broyage est compris entre 6 et 13, préférentiellement entre 7,5 et 12 et très préférentiellement entre 8 et 10.

**26.** Procédé de broyage en suspension aqueuse selon l'une quelconque des revendications 21 à 24 **caractérisé en ce que** pour des matières minérales ne contenant pas de carbonate, le pH au cours de l'étape de broyage est compris entre 2 et 13, préférentiellement entre 7,5 et 12 et très préférentiellement entre 8 et 10.

**27.** Utilisation de la suspension aqueuse de matières minérales selon l'une quelconque des revendications 1 à 12 au domaine du papier, de la peinture et des matières plastiques.

**28.** Utilisation de la suspension aqueuse de matières minérales selon l'une quelconque des revendications 1 à 12 avant ou après séchage ou re-dispersion après séchage dans le domaine du papier, de la peinture et après séchage dans le domaine des matières plastiques.

**29.** Utilisation de la suspension aqueuse de matières minérales selon l'une quelconque des revendications 1 à 12 dans un procédé de séchage après broyage.

**30.** Utilisation de la suspension aqueuse de matières minérales selon l'une des revendications 27 à 29 dans le domaine papetier et plus particulièrement utilisation pour le couchage du papier et/ou le traitement de surface du papier.

**31.** Utilisation de la suspension aqueuse de matières minérales selon l'une des revendications 27 à 29 dans le domaine papetier et plus particulièrement utilisation comme charge de masse directe lors de la fabrication des feuilles de papier, carton ou analogue ou comme charge de masse indirecte lors de la fabrication des feuilles de papier, carton ou analogue mettant en oeuvre un recyclage des cassés de couché.

**32.** Feuilles de papier ou carton contenant la suspension aqueuse de matières minérales selon l'une quelconque des revendications 1 à 12.

**33.** Utilisation de la suspension aqueuse de matières minérales selon l'une des revendications 27 à 29 dans le domaine des matières plastiques tel que les polyoléfines comme les basses densités (LLDPE) et haute densité (HMW-HDPE), ou les membranes respirables, ou encore tel que les chlorures de polyvinyle (PVC) et plus particulièrement dans le domaine des PVC comme PVC rigides ou flexibles.

## Claims

**1.** An aqueous suspension of refined mineral matter with dry matter concentration that can be high, with low Brookfield™ that remains stable over time, and having a pigmentary surface area with low ionic charge, **characterized in that**

it contains, as a grinding aid agent, a copolymer consisting of:

a) at least one ethylenically unsaturated anionic monomer having a monocarboxyl function selected from among the ethylenically unsaturated monomers having a monocarboxyl function such as acrylic or methacrylic acid or hemiesters of diacids such as $C_1$ to $C_4$ monoesters of maleic or itaconic acid, or mixtures thereof, or having a dicarboxyl function selected from among the ethylenically unsaturated monomers having a dicarboxyl function such as crotonic, isocrotonic, cinnamic, itaconic, maleic acid, or anhydrides of carboxyl acids, such as maleic anhydride or having a sulfonic function selected from among the ethylenically unsaturated monomers having a sulfonic function such as acrylamido-methyl-propane-sulfonic acid, sodium mathallylsulfonate, vinylsulfonic acid and styrenesulfonic acid or having a phosphoric function selected from among the ethylenically unsaturated monomers having a phosphoric function such as vinylphosphoric acid, ethylene glycol methacrylate phosphate, propylene glycol methacrylate phosphate, ethylene glycol acrylate phosphate, propylene glycol acrylate phosphate and their ethoxylates or having a phosphonic function selected from among the ethylenically unsaturated monomers having a phosphonic function such as vinylphosphonic acid, or mixtures thereof,

b) at least one non-ionic ethylenically unsaturated monomer of formula (I):

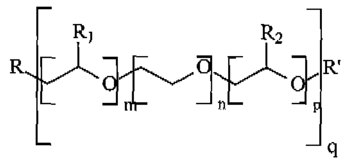

where

- m and p represent a number of alkylene oxide units less than or equal to 150
- n represents a number of ethylene oxide units less than or equal to 150
- q represents an integer equal to at least 1 and such that $5 \leq (m+n+p)q \leq 150$, and preferably represents an integer such that $15 \leq (m+n+p)q \leq 120$,
- $R_1$ represents hydrogen or the methyl or ethyl radical
- $R_2$ represents hydrogen or the methyl or ethyl radical
- R represents a radical containing a polymerizable unsaturated function, belonging to the vinyl group and to the group of acrylic, methacrylic, maleic, itaconic, crotonic, and vinylphtalic esters and to the group of urethane unsaturates such as acrylurethane, methacrylurethane, α-α' dimethyl-isopropenyl-benzylurethane and allylurethane, and to the group of allyl or vinyl ethers, whether or not substituted, or to the group of ethylenically unsaturated amides or imides,
- R' represents hydrogen or a hydrocarbon radical having from 1 to 40 carbon atoms, and preferably represents a hydrocarbon radical having from 1 to 12 carbon atoms and even more preferably a hydrocarbon radical having from 1 to 4 carbon atoms,

or a mixture of several monomers of formula (I),

c) at least one organofluorinated or organosilylated monomer, preferably selected from among the molecules of formulae (IIa) or (IIb) or (IIc) or mixtures thereof:

with formula (IIa)

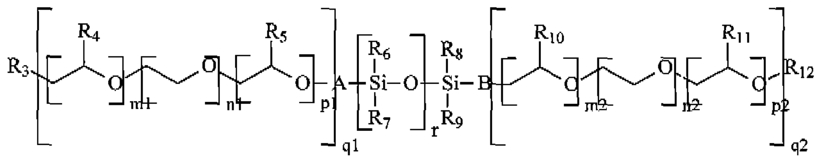

where

- m1, p1, m2 and p2 represent a number of alkylene oxide units less than or equal to 150
- n1 and n2 represent a number of ethylene oxide units less then or equal to 150

- q1 and q2 represent an integer equal to at least 1 and such that $0 \leq (m1+n1+p1)q1 \leq 150$ and $0 \leq (m2+n2+p2)q2 \leq 150$,
- r represents a number such that $1 \leq r \leq 200$
- $R_3$ represents a radical containing a polymerizable unsatursted function, belonging to the vinyl group and to the group of acrylic, methacrylic, maleic, itaconic, crotonic, and vinylphtalic esters and to the group of urethane unsaturates such as acrylurethane, methacrylurethane, α-α' dimethyl-isopropeuyl-benzylurethane and allylurethane, and to the group of allyl or vinyl ethers, whether or not substituted, or to the group of ethylenically unsaturated amides or imides,
- $R_4$, $R_5$, $R_{10}$ and $R_{11}$ represent hydrogen or the methyl or ethyl radical
- $R_6$, $R_7$, $R_8$ and $R_9$ represent straight or branched alkyl, aryl, alkylaryl or arylalkyl groups having from 1 to 20 carbon atoms, or a mixture thereof
- $R_{12}$ represents a hydrocarbon radical having from 1 to 40 carbon atoms
- A and B are groups which may be present, in which case they represent a hydrocarbon radical having from 1 to 4 carbon atoms,

with formula (IIb)

$$R\text{-}A\text{-}Si(OB)_3$$

where

- R represents a radical containing a polymerizable unsaturated function, belonging to the vinyl group and to the group of acrylic, methacrylic, maleic, itaconic, crotonic, and vinylphtalic esters and to the group of urethane unsaturates such as acrylurethane, methacrylurethane, α-α' dimethyl-isopropenyl-benzylurethane and allylurethane, and to the group of allyl or vinyl ethers, whether or not substituted, or to the group of ethylenically unsaturated amides or imides,
- A is a group which may be present, in which case it represents a hydrocarbon radical having from 1 to 4 carbon atoms,
- B represents a hydrocarbon radical having from 1 to 4 carbon atoms,

with formula (IIc)

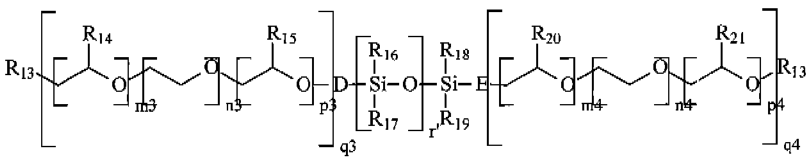

where

- m3, p3, m4 and p4 represent a number of alkylene oxide units less than or equal to 150
- n3 and n4 represent a number of ethylene oxide units less than or equal to 150
- q3 and q4 represent an integer equal to at least 1 and such that $0 \leq (m3+n3+p3)q3 \leq 150$ and $0 \leq (m4+n4+p4)q4 \leq 150$,
- r represents a number such that $1 \leq r' \leq 200$,
- $R_{13}$ represents a radical containing a polymerizable unsaturated function, belonging to the vinyl group and to the group of acrylic, methacrylic, maleic, itaconic, crotonic, and vinylphtalic esters and to the group of urethane unsaturates such as acrylurethane, methacrylurethane, α-α' dimethyl-isopropenyl-benzylurethane and allylurethane, and to the group of allyl or vinyl ethers, whether or not substituted, or to the group of ethylenically unsaturated amides or imides,
- $R_{14}$, $R_{15}$, $R_{20}$ and $R_{21}$ represent hydrogen or the methyl or ethyl radical
- $R_{16}$, $R_{17}$, $R_{18}$ and $R_{19}$ represent straight or branched alkyl, aryl, alkylaryl or arylalkyl groups having from 1 to 20 carbon atoms, or a mixture thereof
- D and E are groups which may be present, in which case they represent a hydrocarbon radical having from I to 4 carbon atoms,

d) possibly at least one monomer of the acrylamide or methacrylamide type or their derivatives or mixtures thereof such as N-[3-(dimethylamino)propy]acrylamide or N-[3-(dimethylamino) propyl] methacrylamide, and

mixtures thereof, or at least one non water-soluble monomer such as the alkyl acrylates or methacrylates or mixtures thereof, unsaturated esters such as N-[2-(dimethylamino) ethyl] methacrylate, or N-[2-(dimethylamino) ethyl] acrylate or mixtures thereof, vinyls such as vinyl acetate, vinylpyrrolidone, styrene, alphamethylstyrene and their derivatives or mixtures thereof, or at least one cationic monomer or quaternary ammonium such as [2-(methacryloyloxy)ethyl] trimethyl ammonium chloride or sulfate, [2-(acryloyloxy) ethyl] trimethyl ammonium chloride or sulfate, [3-(acrylamido) propyl] trimethyl ammonium chloride or sulfate, dimethyl diallyl ammonium chloride or sulfate, [3-(methacrylamido) propyl] trimethyl ammonium chloride or sulfate, or mixtures thereof
e) possibly at least one crosslinking monomer selected from the group consisting of ethylene glycol dimethacrylate, trimethylolpropanetriacrylate, allyl acrylate, the allyl maleates, methylene-bis-acrylamide, methylenc-bis-methacrylamidc, tetrallyloxyethane, triallylcyanurates, allyl ethers prepared from polyols such as pentaerythritol, sorbitol, or sucrose

the total of the components a), b), c), d) and e) being equal to 100%,
and having an intrinsic viscosity less than or equal to 100 ml/g determined in accordance with the method known as the intrinsic viscosity method.

**2.** An aqueous suspension of mineral substances refined according to claim 1 **characterized in that** said copolymer consists, by weight, of:

a) from 2% to 95%, preferably from 3% to 25%, and even more preferably from 4% to 15%, of at least one ethylenically unsaturated anionic monomer having a monocarboxyl function selected from among the ethylenically unsaturated monomers having a monocarboxyl function such as acrylic or methacrylic acid or hemiesters of diacids such as $C_1$ to $C_4$ monoesters of maleic or itaconic acid, or mixtures thereof, or having a dicarboxyl function selected froth among the ethylenically unsaturated monomers having a dicarboxyl function such as crotonic, isocrotonic, cinnamic, itaconic, maleic acid, or anhydride of carboxyl acids, such as maleic anhydride or having a sulfonic function selected from among the ethylenically unsaturated monomers having a sulfonic function such as acrylamido-methyl-propane-sulfonic acid, sodium methallylsulfonate, vinylsulfonic acid and styrenesulfonic acid or having a phosphoric function selected from among the ethylenically unsaturated monomers having a phosphoric function such as vinylphosphoric acid, ethylene glycol methacrylate phosphate, propylene glycol methacrylate phosphate, ethylene glycol acrylate phosphate, propylene glycol acrylate phosphate and their ethoxylates or having a phosphonic function selected from among the ethylenically unsaturated monomers having a phosphonic function such as vinylphosphonic acid, or mixtures thereof,
b) From 97.9% to 4.9%, preferably from 95% to 65%, and even more preferably from 92% to 78%, of at least one non-ionic ethylenically unsaturated monomer of formula (I):

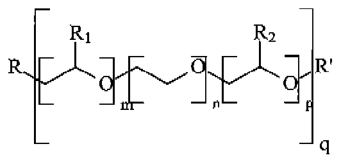

where

- m and p represent a number of alkylene oxide units less than or equal to 150
- n represents a number of ethylene oxide units less than or equal to 150
- q represents an integer equal to at least 1 and such that $5 \leq (m+n+p)q \leq 150$, and preferably represents an integer such that $15 \leq (m+n--p)q \leq 120$,
- $R_1$ represents hydrogen or the methyl or ethyl radical
- $R_2$ represents hydrogen or the methyl or ethyl radical
- R represents a radical containing a polymerizable unsaturated function, belonging to the vinyl group and to the group of acrylic, methacrylic, maleic, itaconic, crotonic, and vinylphtalic esters and to the group of urethane unsaturates such as acrylurethane, methacrylurethane, α-α' dimethyl-isopropenyl-benzylurethane and allylurethane, and to the group of allyl or vinyl ethers, whether or not substituted, or to the group of ethylenically unsaturated amides or imides,
- R' represents hydrogen or a hydrocarbon radical having from 1 to 40 carbon atoms, and preferably represents a hydrocarbon radical having from 1 to 12 carbon atoms and even more preferably a hydrocarbon radical having from 1 to 4 carbon atoms,

or a mixture of several monomers of formula (I),
c) from 0.1% to 50%, preferably from 0.2% to 10%, and even more preferably from 0.3% to 5%, of at least one organofluorinated or organosilylated monomer, preferably selected from among the molecules of formulae (IIa) or (IIb) or (IIe) or mixtures thereof:
with formula (IIa)

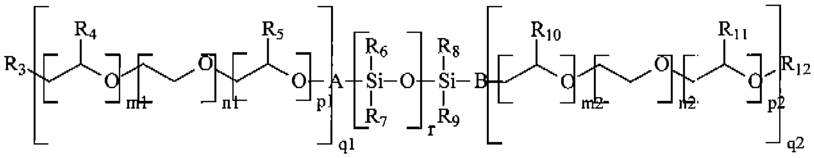

where

- m1, p1, m2 and p2 represent a number of alkylene oxide units less than or equal to 150
- n1 and n2 represent a number of ethylene oxide units less than or equal to 150
- q1 and q2 represent an integer equal to at least 1 and such that $0 \leq (m1+n1+p1)q1 \leq 150$ and $0 \leq (m2+n2+p2)q2 \leq 150$,
- represents a number such that $1 \leq r \leq 200$
- $R_3$ represents a radical containing a polymerizable unsaturated function, belonging to the vinyl group and to the group of acrylic, methacrylic, maleic, itaconic, crotonic, and vinylphtalic esters and to the group of urethane unsaturates such as acrylurethane, methacrylurethane, α-α' dimethyl-isvprvpenyl-benzylurethane and allylurethane, and to the group of allyl or vinyl ethers, whether or not substituted, or to the group of ethylenically unsaturated amides or imides,
- $R_4$, $R_5$, $R_{10}$ and $R_{11}$ represent hydrogen or the methyl or ethyl radical
- $R_6$, $R_7$, $R_8$ and $R_9$ represent straight or branched alkyl, aryl, alkylaryl or arylalkyl groups having from 1 to 20 carbon atoms, or a mixture thereof
- $R_{12}$ represents a hydrocarbon radical having from 1 to 40 carbon atoms
- A and B are groups which may be present, in which case they represent a hydrocarbon radical having from 1 to 4 carbon atoms,

with formula (IIb)

$$R\text{-}A\text{-}Si(OB)_3$$

where

- R represents a radical containing a polymerizable unsaturated function, belonging to the vinyl group and to the group of acrylic, methacrylic, maleic, itaconic, crotonic, and vinylphtalic esters and to the group of urethane unsaturates such as acrylurethane, methacrylurethane, α-α' dimethyl-isopropenyl-benzylurethane and allylurethane, and to the group of allyl or vinyl ethers, whether or not substituted, or to the group of ethylenically unsaturated amides or imides,
- A is a group which may be present, in which case it represents a hydrocarbon radical having from 1 to 4 carbon atoms,
- B represents a hydrocarbon radical having from 1 to 4 carbon atoms,
with formula (IIc)

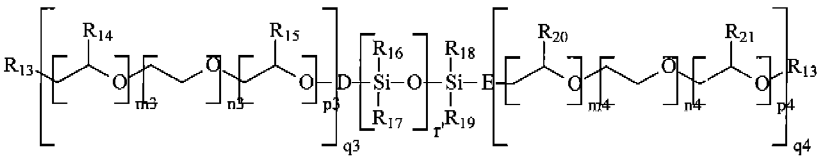

where

- m3, p3, m4 and p4 represent a number of alkylene oxide units less than or equal to 150
- n3 and n4 represent a number of ethylene oxide units less than or equal to 150
- q3 and q4 represent an integer equal to at least 1 and such that $0 \leq (m3+n3+p3)q3 \leq 150$ and $0 \leq (m4+n4+p4)q4 \leq 150$,
- r represents a number such that $1 \leq r' \leq 200$,
- $R_{13}$ represents a radical containing a polymerizable unsaturated function, belonging to the vinyl group and to the group of acrylic, methacrylic, maleic, itaconic, crotonic, and vinylphtalic esters and to the group of urethane unsaturates such as acrylurethane, methacrylurethane, $\alpha$-$\alpha$' dimethyl-isopropenyl-benzylurethane and allylurethane, and to the group of allyl or vinyl ethers, whether or not substituted, or to the group of ethylenically unsaturated amides or imides,
- $R_{14}$, $R_{15}$, $R_{20}$ and $R_{21}$ represent hydrogen or the methyl or ethyl radical
- $R_{16}$, $R_{17}$, $R_{18}$ and $R_{19}$ represent straight or branched alkyl, aryl, alkylaryl or arylalkyl groups having from 1 to 20 carbon atoms, or a mixture thereof
- D and E are groups which may be present, in which case they represent a hydrocarbon radical having from 1 to 4 carbon atoms,

d) from 0% to 50%, preferably from 0% to 10%, and even more preferably from 0% to 5%, of at least one monomer of the acrylamide or methacrylamide type or their derivatives or mixtures thereof such as N-[3-(dimethylamino) propyl] acrylamide or N-[3-(dimethylamino) propyl] methacrylamide, and mixtures thereof, or at least one non water-soluble monomer such as the alkyl acrylates or methacrylates or mixtures thereof, unsaturated esters such as N-[2-(dimethylamino) ethyl] methacrylate, or N-[2-(dimethylamino) ethyl] acrylate or mixtures thereof, vinyls such as vinyl acetate, vinylpyrrolidone, styrene, alphamethylstyrene and their derivatives or mixtures thereof, or at least one cationic monomer or quaternary ammonium such as [2-(methacryloyloxy) ethyl] trimethyl ammonium chloride or sulfate, [2-(acryloyloxy) ethyl] trimethyl ammonium chloride or sulfate, [3-(acrylamido) propyl] trimethyl ammonium chloride or sulfate, dimethyl diallyl ammonium chloride or sulfate, [3-(methacrylamido) propyl] trimethyl ammonium chloride or sulfate or mixtures thereof
e) from 0% to 5%, and preferably from 0% to 3%, of at least one crosslinking monomer selected from the group consisting of ethylene glycol dimethacrylate, trimethylolpropanetriacrylate, allyl acrylate, the allyl maleates, methylene-bis-acrylamide, methylene-bis-methacrylamide, tetrallyloxyethane, triallylcyanurates, allyl ethers prepared from polyols such as pentaerythritol, sorbitol, or sucrose

the total of the components a), b), c), d) and e) being equal to 100%,
and having an intrinsic viscosity less than or equal to 100 ml/g determined in accordance with the method known as the intrinsic viscosity method.

**3.** An aqueous suspension of mineral matter according to claim 1 or 2, **characterized in that** said copolymer is in its acid form, fully neutralized or partially neutralized by one or more neutralizing agents having a monovalent neutralizing function or a polyvalent neutralizing function such as, for the monovalent function, those selected from among the group consisting of the alkaline cations, in particular sodium, potassium, lithium, ammonium or the primary, secondary or tertiary aliphatic and/or cyclic amines such as stearylamine, the ethanolamines (mono-, di-, triethanolamine), mono and diethylamine, cyclohexylamine, methylcyclohexylamine, aminomethylpropanol, morpholine or, for the polyvalent function, those selected from among the group consisting of alkaline earth divalent cations, in particular magnesium and calcium, or zinc, and of the trivalent cations, including in particular aluminium, or of certain cations of higher valency.

**4.** An aqueous suspension of mineral matter according to one of claims 1 to 3, **characterized in that** it contains from 0.05% to 10% of said copolymer by dry weight with respect to the dry weight of mineral substances.

**5.** An aqueous suspension of mineral matter according to one of claims 1 to 3, **characterized in that** it contains from 0.05% to 10% of said copolymer by dry weight with respect to the dry weight of mineral substances and at least one other dispersant or grinding aid agent.

**6.** An aqueous suspension of mineral matter according to claim 5, **characterized in that** the other dispersant or grinding aid agent is selected from among the dispersants or grinding aid agents such as the homopolymers or copolymers of acrylic acid in their acid form, or fully or partially neutralized by one or more neutralizing agents having a monovalent neutralizing function or a polyvalent neutralizing function such as, for the monovalent function, those selected from among the group consisting of the alkaline cations, in particular sodium, potassium, lithium, ammonium or the primary, secondary or tertiary aliphatic and/or cyclic amines such as stearylamine, the ethanolamines (mono-,

di-, triethanolamine), mono and diethylamine, cyclohexylamine, methylcyclohexylamine, aminomethylpropanol, morpholine or, for the polyvalent function, those selected from among the group consisting of alkaline earth divalent cations, in particular magnesium and calcium, or zinc, and of the trivalent cations, including in particular aluminium, or of certain cations of higher valency, or selected from among the dispersants or grinding aid agents such as the $H_3O^+$ ion donors preferably selected from among phosphoric acid and/or its salts with mono and/or divalent bases such as soda and lime.

**7.** An aqueous suspension of mineral matter according to claim 5 or 6, **characterized in that** it contains from 0.05% to 1.0% by dry weight with respect to the dry weight of mineral substances of said other dispersant or grinding aid agent.

**8.** An aqueous suspension of mineral matter according to one of claims I to 7, **characterized in that** the mineral matter is selected from among calcium carbonate, dolomite, gypsum, calcium hydroxide, satin white, titanium dioxide, aluminium trihydroxide, mica, talc, kaolins, calcine kaolins, or mixed carbonate based fillers of various metals such as calcium associated with magnesium, and mixtures of said fillers such as talc-calcium carbonate or calcium carbonate-kaolin mixtures, or mixtures of calcium carbonate with aluminium trihydroxide, or mixtures with synthetic or natural fibres or co-structures of minerals such as talc-calcium carbonate or talc-titanium dioxide co-structures, and is preferably calcium carbonate such as natural calcium carbonate selected from among marble, calcite, chalk or mixtures thereof.

**9.** An aqueous suspension of mineral matter according to one of claims 1 to 8, **characterized in that** the suspension has a dry matter concentration of between 15% and 85% by weight, preferably between 40% and 80%, and very preferable between 50% and 78%.

**10.** An aqueous suspension of mineral matter according to one of claims I to 9, **characterized in that** the mineral matter presents a median grain diameter, as measured using the Sedigraph™ 5100, of between 50 $\mu$m and 0.01 $\mu$m, preferably between 5 $\mu$m and 0.2 $\mu$m and even more preferably between 2 $\mu$m and 0.3 $\mu$m.

**11.** An aqueous suspension of mineral matter according to one of claims 1 to 10, **characterized in that** the mineral matter grains have, for equivalent grain size, a BET specific surface area determined according to standard ISO 9277 less than that of the mineral matter grains of the aqueous suspensions or mineral matter refined using grinding aid agents such as polyacrylates homopolymers or copolymers.

**12.** An aqueous suspension of mineral matter according to one of claims 1 to 11, **characterized in that** the pH of the final suspension is between 7.5 and 13, preferably between 8 and 12 and very preferably between 8.5 and 10.

**13.** The use as a grinding aid agent for mineral matter in aqueous suspension of a weakly ionic and water-soluble copolymer is **characterized in that** said copolymer consists of:

a) at least one ethylenically unsaturated anionic monomer having a monocarboxyl function selected from among the ethylenically unsaturated monomers having a monocarboxyl function such as acrylic or methacrylic acid or hemiesters of diacids such as $C_1$ to $C_4$ monoesters of maleic or itaconic acid, or mixtures thereof, or having a dicarboxyl function selected from among the ethylenically unsaturated monomers having a dicarboxyl function such as crotonic, isocrotonic, cinnamic, itaconic, maleic acid, or anhydrides of carboxyl acids, such as maleic anhydride or having a sulfonic function selected from among the ethylenically unsaturated monomers having a sulfonic function such as acrylamido-methyl-propane-sulfonic acid, sodium methallylsulfonate, vinylsulfonic acid and styrenesulfonic acid or having a phosphoric function selected from among the ethylenically unsaturated monomers having a phosphoric function such as vinylphosphoric acid, ethylene glycol methacrylate phosphate, propylene glycol methacrylate phosphate, ethylene glycol acrylate phosphate, propylene glycol acrylate phosphate and their ethoxylates or having a phosphonic function selected from among the ethylenically unsaturated monomers having a phosphonic function such as vinylphosphonic acid, or mixtures thereof,
b) at least one non-ionic ethylenically unsaturated monomer of formula (I):

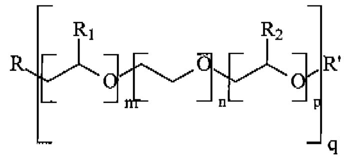

where

- m and p represent a number of alkylene oxide units less than or equal to 150
- n represents a number of ethylene oxide units less than or equal to 150
- q represents an integer equal to at least 1 and such that $5 \leq (m+n+p)q \leq 150$, and preferably represents an integer such that $15 \leq (m+n-p)q \leq 120$,
- $R_1$ represents hydrogen or the methyl or ethyl radical
- $R_2$ represents hydrogen or the methyl or ethyl radical
- R represents a radical containing a polymerizable unsaturated function, belonging to the vinyl group and to the group of acrylic, methacrylic, maleic, itaconic, crotonic, and vinylphtalic esters and to the group of urethane unsaturates such as acrylurethane, methacrylurethane, α-α' dimethyl-isopropenyl-benzylurethane and allylurethane, and to the group of allyl or vinyl ethers, whether or not substituted, or to the group of ethylenically unsaturated amides or imides,
- R' represents hydrogen or a hydrocarbon radical having from 1 to 40 carbon atoms, and preferably represents a hydrocarbon radical having from 1 to 12 carbon atoms and even more preferably a hydrocarbon radical having from 1 to 4 carbon atoms,

or a mixture of several monomers of formula (I),
c) at least one organofluorinated or carbon silicon derivative monomer, preferably selected from among the molecules of formulae (IIa) or (IIb) or (IIc) or mixtures thereof:
with formula (IIa)

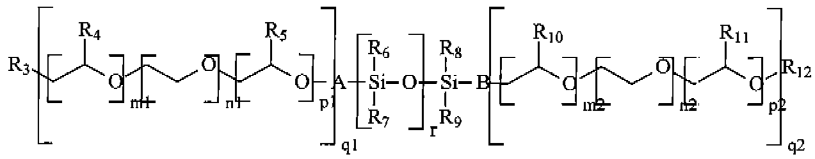

where

- m1, p1, m2 and p2 represent a number of alkylene oxide units less than or equal to 150
- n1 and n2 represent a number of ethylene oxide units less than or equal to 150
- q1 and q2 represent an integer equal to at least 1 and such that $0 \leq (m1+n1+p1)q1 \leq 150$ and $0 \leq (m2+n2+p2)q2 \leq 150$,
- r represents a number such that $1 \leq r \leq 200$
- $R_3$ represents a radical containing a polymerizable unsaturated function, belonging to the vinyl group and to the group of acrylic, methacrylic, maleic, itaconic, crotonic, and vinylphtalic esters and to the group of urethane unsaturates such as acrylurethane, methacrylurethane, α-α' dimethyl-isopropenyl-benzylurethane and allylurethane, and to the group of allyl or vinyl ethers, whether or not substituted, or to the group of ethylenically unsaturated amides or imides,
- $R_4$, $R_5$, $R_{10}$ and $R_{11}$ represent hydrogen or the methyl or ethyl radical
- $R_6$, $R_7$, $R_8$ and $R_9$ represent straight or branched alkyl, aryl, alkylaryl or arylalkyl groups having from 1 to 20 carbon atoms, or a mixture thereof
- $R_{12}$ represents a hydrocarbon radical having from 1 to 40 carbon atoms
- A and B are groups which may be present, in which case they represent a hydrocarbon radical having from 1 to 4 carbon atoms,

with formula (IIb)

R-A-Si(OB)$_3$

where

- R represents a radical containing a polymerizable unsaturated function, belonging to the vinyl group and to the group of acrylic, methacrylic, maleic, itaconic, crotonic, and vinylphtalic esters and to the group of urethane unsaturates such as acrylurethane, methacrylurethane, α-α' dimethyl-isopropenyl-benzylurethane and allylurethane, and to the group of allyl or vinyl ethers, whether or not substituted, or to the group of ethylenically unsaturated amides or imides,
- A is a group which may be present, in which case it represents a hydrocarbon radical having from 1 to 4 carbon atoms,
- B represents a hydrocarbon radical having from 1 to 4 carbon atoms,

with formula (IIc)

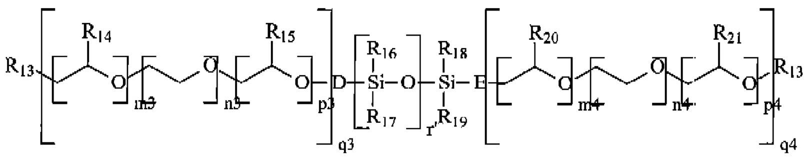

where

- m3, p3, m4 and p4 represent a number of alkylene oxide units less than or equal to 150
- n3 and n4 represent a number of ethylene oxide units less than or equal to 150
- q3 and q4 represent an integer equal to at least 1 and such that $0 \leq (m3+n3+p3)q3 \leq 150$ and $0 \leq (m4+n4+p4)q4 \leq 150$,
- r represents a number such that $1 \leq r' \leq 200$,
- $R_{13}$ represents a radical containing a polymerizable unsaturated function, belonging to the vinyl group and to the group of acrylic, methacrylic, maleic, itaconic, crotonic, and vinylphtalic esters and to the group of urethane unsaturates such as acrylurethane, methacrylurethane, α-α' dimethyl-isopropenyl-benzylurethane and allylurethane, and to the group of allyl or vinyl ethers, whether or not substituted, or to the group of ethylenically unsaturated amides or imides,
- $R_{14}$, $R_{15}$, $R_{20}$ and $R_{21}$ represent hydrogen or the methyl or ethyl radical
- $R_{16}$, $R_{17}$, $R_{18}$ and $R_{19}$ represent straight or branched alkyl, aryl, alkylaryl or arylalkyl groups having from 1 to 20 carbon atoms, or a mixture thereof
- D and E are groups which may be present, in which case they represent a hydrocarbon radical having from 1 to 4 carbon atoms,

d) possibly at least one monomer of the acrylamide or methacrylamide type or their derivatives or mixtures thereof such as N-[3-(dimethylamino) propyl] acrylamide or N-[3-(dimethylamino) propyl] methacrylamide, and mixtures thereof, or at least one non water-soluble monomer such as the alkyl acrylates or methacrylates or mixtures thereof, unsaturated esters such as N-[2-(dimethylamino) ethyl] methacrylate, or N-[2-(dimethylamino) ethyl] acrylate or mixtures thereof, vinyls such as vinyl acetate, vinylpyrrolidone, styrene, alphamethylstyrene and their derivatives or mixtures thereof, or at least one cationic monomer or quaternary ammonium such as [2-(methacryloyloxy) ethyl] trimethyl ammonium chloride or sulfate, [2-(acryloyloxy) ethyl] trimethyl ammonium chloride or sulfate, [3-(acrylamido) propyl] trimethyl ammonium chloride or sulfate, dimethyl diallyl ammonium chloride or sulfate, [3-(methacrylamido) propyl] trimethyl ammonium chloride or sulfate, or mixtures thereof
e) possibly at least one crosslinking monomer selected from the group consisting of ethylene glycol dimethacrylate, trimethylolpropanetriacrylate, allyl acrylate, the allyl maleates, methylene-bis-acrylamide, methylene-bis-methacrylamide, tetrallyloxyethane, triallylcyanurates, allyl ethers prepared from polyols such as pentaerythritol, sorbitol, or sucrose

the total of the components a), b), c), d) and e) being equal to 100%,
and **in that** it has an intrinsic viscosity less than or equal to 100 ml/g determined in accordance with the method known as the intrinsic viscosity method.

**14.** The use of a weakly ionic and water-soluble copolymer as a grinding aid agent according to claim 13, **characterized in that** said copolymer consists, by weight, of:

a) from 2% to 95%, preferably from 3% to 25%, and even more preferably from 4% to 15%, of at least one ethylenically unsaturated anionic monomer having a monocarboxyl function selected from among the ethylenically unsaturated monomers having a monocarboxyl function such as acrylic or methacrylic acid or hemiesters of diacids such as $C_1$ to $C_4$ monesters of maleic or itaconic acid, or mixtures thereof, or having a dicarboxyl function selected from among the ethylenically unsaturated monomers having a dicarboxyl function such as crotonic, isocrotonic, cinnamic, itaconic, maleic acid, or anhydrides of carboxyl acids, such as maleic anhydride or having a sulfonic function selected from among the ethylenically unsaturated monomers having a sulfonic function such as acrylamido-methyl-propane-sulfonic acid, sodium methallylsulfonate, vinylsulfonic acid and styrenesulfonic acid or having a phosphoric function selected from among the ethylenically unsaturated monomers having a phosphoric function such as vinylphosphoric acid, ethylene glycol methacrylate phosphate, propylene glycol methacrylate phosphate, ethylene glycol acrylate phosphate, propylene glycol acrylate phosphate and their ethoxylates or having a phosphonic function selected from among the ethylenically unsaturated monomers having a phosphonic function such as vinylphosphonic acid, or mixtures thereof,
b) From 97.9% to 4.9%, preferably from 95% to 65%, and even more preferably from 92% to 78%, of at least one non-ionic ethylenically unsaturated monomer of formula (I):

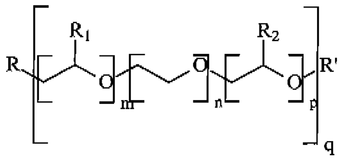

where

- m and p represent a number of alkylene oxide units less than or equal to 150
- n represents a number of ethylene oxide units less than or equal to 150
- q represents an integer equal to at least 1 and such that $5 \leq (m+n+p)q \leq 150$, and preferably represents an integer such that $15 \leq (m+n+p)q \leq 120$,
- $R_1$ represents hydrogen or the methyl or ethyl radical
- $R_2$ represents hydrogen or the methyl or ethyl radical
- R represents a radical containing a polymerizable unsaturated function, belonging to the vinyl group and to the group of acrylic, methacrylic, maleic, itaconic, crotonic, and vinylphtalic esters and to the group of urethane unsaturates such as acrylurethane, methacrylurethane, α-α' dimethyl-isopropenyl-benzylurethane and allylurethane, and to the group of allyl or vinyl ethers, whether or not substituted, or to the group of ethylenically unsaturated amides or imides,
- R' represents hydrogen or a hydrocarbon radical having from 1 to 40 carbon atoms, and preferably represents a hydrocarbon radical having from 1 to 12 carbon atoms and even more preferably a hydrocarbon radical having from 1 to 4 carbon atoms,
or a mixture of several monomers of formula (I),

c) from 0.1% to 50%, preferably from 0.2% to 10%, and even more preferably from 0.3% to 5%, of at least one organofluorinated or organosilylated monomer, preferably selected from among the molecules of formulae (IIa) or (IIb) or (IIc) or mixtures thereof:
with formula (IIa)

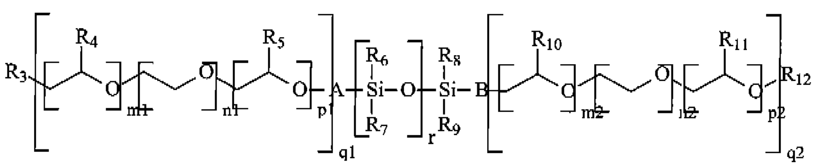

where

- m1, p1, m2 and p2 represent a number of alkylene oxide units less than or equal to 150
- n1 and n2 represent a number of ethylene oxide units less than or equal to 150
- q1 and q2 represent an integer equal to at least 1 and such that $0 \leq (m1+n1+p1)q1 \leq 150$ and $0 \leq (m2+n2+p2)q2 \leq 150$,
- r represents a number such that $1 \leq r \leq 200$
- $R_3$ represents a radical containing a polymerizable unsaturated function, belonging to the vinyl group and to the group of acrylic, methacrylic, maleic, itaconic, crotonic, and vinylphtalic esters and to the group of urethane unsaturates such as acrylurethane, methacrylurethane, α-α' dimethyl-isopropenyl-benzylurethane and allylurethane, and to the group of allyl or vinyl ethers, whether or not substituted, or to the group of ethylenically unsaturated amides or imides,
- $R_4$, $R_5$, $R_{10}$ and $R_{11}$ represent hydrogen or the methyl or ethyl radical
- $R_6$, $R_7$, $R_8$ and $R_9$ represent straight or branched alkyl, aryl, alkylaryl or arylalkyl groups having from 1 to 20 carbon atoms, or a mixture: thereof
- $R_{12}$ represents a hydrocarbon radical having from 1 to 40 carbon atoms A and B are groups which may be present, in which case they represent a hydrocarbon radical having from 1 to 4 carbon atoms,

with formula (IIb)

$$R\text{-}A\text{-}Si(OB)_3$$

where

- R represents a radical containing a polymerizable unsaturated function, belonging to the vinyl group and to the group of acrylic, methacrylic, maleic, itaconic, crotonic, and vinylphtalic esters and to the group of urethane unsaturates such as acrylurethane, methacrylurethane, α-α' dimethyl-isopropenyl-benzylurethane and allylurethane, and to the group of allyl or vinyl ethers, whether or not substituted, or to the group of ethylenically unsaturated amides or imides,
- A is a group which may be present, in which case it represents a hydrocarbon radical having from 1 to 4 carbon atoms,
- B represents a hydrocarbon radical having from 1 to 4 carbon atoms,
with formula (IIc)

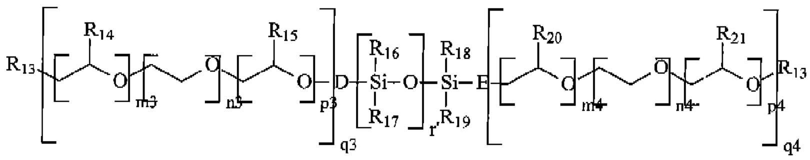

where

- m3, p3, m4 and p4 represent a number of alkylene oxide units less than or equal to 150
- n3 and n4 represent a number of ethylene oxide units less than or equal to 150
- q3 and q4 represent an integer equal to at least 1 and such that $0 \leq (m3+n3+p3)q3 \leq 150$ and $0 \leq (m4+n4+p4)q4 \leq 150$,
- r represents a number such that $1 \leq r' \leq 200$,
- $R_{13}$ represents a radical containing a polymerizable unsaturated function, belonging to the vinyl group and to the group of acrylic, methacrylic, maleic, itaconic, crotonic, and vinylphtalic esters and to the group of urethane unsaturates such as acrylurethane, methacrylurethane, α-α' dimethyl-isopropenyl-benzylurethane and allylurethane, and to the group of allyl or vinyl ethers, whether or not substituted, or to the group of ethylenically unsaturated amides or imides,
- $R_{14}$, $R_{15}$, $R_{20}$ and $R_{21}$ represent hydrogen or the methyl or ethyl radical
- $R_{16}$, $R_{17}$, $R_{18}$ and $R_{19}$ represent straight or branched alkyl, aryl, alkylaryl or arylalkyl groups having from 1 to 20 carbon atoms, or a mixture thereof
- D and E are groups which may be present, in which case they represent a hydrocarbon radical having from 1 to 4 carbon atoms,

d) from 0% to 50%, preferably from 0% to 10%, and even more preferably from 0% to 5%, of at least one monomer of the acrylamide or methacrylamide type or their derivatives or mixtures thereof such as N-[3-(dimethylamino) propyl] acrylamide or N-[3-(dimethylamino) propyl] methacrylamide, and mixtures thereof, or at least one non water-soluble monomer such as the alkyl acrylates or methacrylates or mixtures thereof, unsaturated esters such as N-[2-(dimethylamino) ethyl] methacrylate, or N-[2-(dimethylamino) ethyl] acrylate, vinyls such as vinyl acetate, vinylpyrrolidone, styrene, alphamethylstyrene and their derivatives or mixtures thereof, or at least one cationic monomer or quaternary ammonium such as [2-(methacryloyloxy) ethyl] trimethylammonium chloride or sulfate, [2-(acryloyloxy) ethyl] trimethyl ammonium chloride or sulfate, [3-(acrylamido) propyl] trimethyl ammonium chloride or sulfate, dimethyl diallyl ammonium chloride or sulfate, [3-(methacrylamido) propyl] trimethyl ammonium chloride or sulfate, or mixtures thereof

e) from 0% to 5%, and preferably from 0% to 3%, of at least one crosslinking monomer selected from the group consisting of ethylene glycol dimethacrylate, trimethylolpropanetriacrylate, allyl acrylate, the allyl maleates, methylene-bis-acrylamide, methylene-bis-methacrylamide, tetrallyloxyethane, triallyleyanurates, allyl ethers prepared from polyols such as pentaerythritol, sorbitol, or sucrose

the total of the components a), b), c), d) and e) being equal to 100%,
and **in that** it has an intrinsic viscosity less than or equal to 100 ml/g determined in accordance with the method known as the intrinsic viscosity method.

**15.** The use of a weakly ionic and water-soluble copolymer according to any one of claims 13 to 14, **characterized in that** said copolymer obtained in acid form and possibly distilled can also be fully or partially neutralized by one or more neutralizing agents having a monovalent neutralizing function or having a polyvalent neutralizing function such as, for the monovalent function, those selected from among the group consisting of the alkaline cations, in particular sodium, potassium, lithium, ammonium or the primary, secondary or tertiary aliphatic and/or cyclic amines such as stearylamine, the ethanolamines (mono-, di-, triethanolamine), mono and diethylamine, cyclohexylamine, methylcyclohexylamine, aminomethylpropanol, morpholine or, for the polyvalent function, those selected from among the group consisting of alkaline earth divalent cations, in particular magnesium and calcium, or zinc, and of the trivalent cations, including in particular aluminium, or of certain cations ofhigher valency.

**16.** The use of a weakly ionic and water-soluble copolymer according to any one of claims 13 to 14, **characterized in that** said copolymer obtained from the copolymerization reaction may, before or after the total or partial neutralization reaction, be treated and separated into several phases, according to static or dynamic methods, by one or more polar solvents belonging to the group consisting of water, methanol, ethanol, propanol, isopropanol, butanols, acetone, tetrahydrofurane or mixtures thereof.

**17.** A grinding aid agent for mineral matter in aqueous suspension, **characterized in that** said agent is a copolymer consisting of:

a) at least one ethylenically unsaturated anionic monomer having a monocarboxyl function selected from among the ethylenically unsaturated monomers having a monocarboxyl function such as acrylic or methacrylic acid or hemiesters of diacids such as $C_1$ to $C_4$ monoesters of maleic or itaconic acid, or mixtures thereof, or having a dicarboxyl function selected from among the ethylenically unsaturated monomers having a dicarboxyl function such as crotonic, isocrotonic, cinnamic, itaconic, maleic acid, or anhydrides of carboxyl acids, such as maleic anhydride or having a sulfonic function selected from among the ethylenically unsaturated monomers having a sulfonic function such as acrylamido-methyl-propane-sulfonic acid, sodium methallylsulfonate, vinylsulfonic acid and styrenesulfonic acid or having a phosphoric function selected from among the ethylenically unsaturated monomers having a phosphoric function such as vinylphosphoric acid, ethylene glycol methacrylate phosphate, propylene glycol methacrylate phosphate, ethylene glycol acrylate phosphate, propylene glycol acrylate phosphate and their ethoxylates or having a phosphonic function selected from among the ethylenically unsaturated monomers having a phosphonic function such as vinylphosphonic acid, or mixtures thereof,

b) at least one non-ionic ethylenically unsaturated monomer of formula (I):

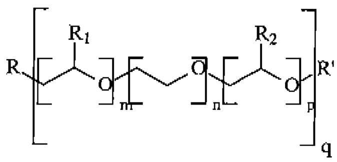

where

- m and p represent a number of alkylene oxide units less than or equal to 150
- n represents a number of ethylene oxide units less than or equal to 150
- q represents an integer equal to at least 1 and such that $5 \leq (m+n+p)q \leq 150$, and preferably represents an integer such that $15 \leq (m+n+p)q \leq 120$,
- $R_1$ represents hydrogen or the methyl or ethyl radical
- $R_2$ represents hydrogen or the methyl or ethyl radical
- R represents a radical containing a polymerizable unsaturated function, belonging to the vinyl group and to the group of acrylic, methacrylic, maleic, itaconic, crotonic, and vinylphtalic esters and to the group of urethane unsaturates such as acrylurethane, methacrylurethane, α-α' dimethyl-isopropenyl-benzylurethane and allylurethane, and to the group of allyl or vinyl ethers, whether or not substituted, or to the group of ethylenically unsaturated amides or imides,
- R' represents hydrogen or a hydrocarbon radical having from 1 to 40 carbon atoms, and preferably represents a hydrocarbon radical having from 1 to 12 carbon atoms and even more preferably a hydrocarbon radical having from 1 to 4 carbon atoms,

or a mixture of several monomers of formula (I),
c) at least one organofluorinated or organosilylated monomer, preferably selected from among the molecules of formulae (IIa) or (IIb) or (IIc) or mixtures thereof:
with formula (IIa)

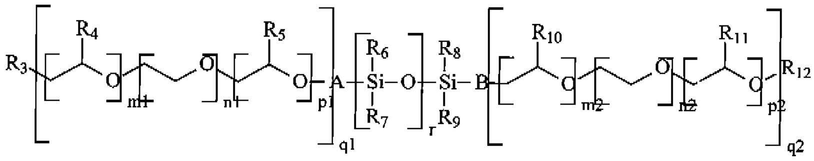

where

- m1, p1, m2 and p2 represent a number of alkylene oxide units less than or equal to 150
- n1 and n2 represent a number of ethylene oxide units less than or equal to 150
- q1 and q2 represent an integer equal to at least 1 and such that $0 \leq (m1+n1+p1)q1 \leq 150$ and $0 \leq (m2+n2+p2)q2 \leq 150$,
- r represents a number such that $1 \leq r \leq 200$
- $R_3$ represents a radical containing a polymerizable unsaturated function, belonging to the vinyl group and to the group of acrylic, methacrylic, maleic, itaconic, crotonic, and vinylphtalic esters and to the group of urethane unsaturates such as acrylurethane, methacrylurethane, α-α' dimethyl-isopropenyl-benzylurethane and allylurethane, and to the group of allyl or vinyl ethers, whether or not substituted, or to the group of ethylenically unsaturated amides or imides,
- $R_4$, $R_5$, $R_{10}$ and $R_{11}$ represent hydrogen or the methyl or ethyl radical
- $R_6$, $R_7$, $R_8$ and $R_9$ represent straight or branched alkyl, aryl, alkylaryl or arylalkyl groups having from 1 to 20 carbon atoms, or a mixture thereof
- $R_{12}$ represents a hydrocarbon radical having from 1 to 40 carbon atoms
- A and B are groups which may be present, in which case they represent a hydrocarbon radical having from 1 to 4 carbon atoms,

with formula (IIb)

$$R\text{-}A\text{-}Si(OB)_3$$

where

- R represents a radical containing a polymerizable unsaturated function, belonging to the vinyl group and to the group of acrylic, methacrylic, maleic, itaconic, crotonic, and vinylphtalic esters and to the group of urethane unsaturates such as acrylurethane, methacrylurethane, α-α' dimethyl-isopropenyl-benzylurethane and allylurethane, and to the group of allyl or vinyl ethers, whether or not substituted, or to the group of ethylenically unsaturated amides or imides,
- A is a group which may be present, in which case it represents a hydrocarbon radical having from 1 to 4 carbon atoms,
- B represents a hydrocarbon radical having from 1 to 4 carbon atoms,
with formula (IIc)

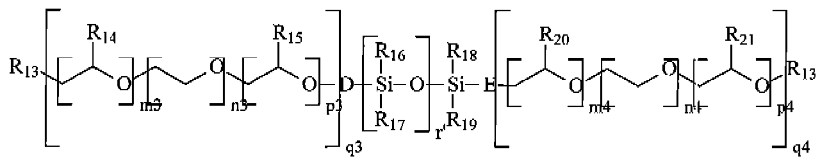

where

- m3, p3, m4 and p4 represent a number of alkylene oxide units less than or equal to 150
- n3 and n4 represent a number of ethylene oxide units less than or equal to 150
- q3 and q4 represent an integer equal to at least 1 and such that $0 \leq (m3+n3+p3)q3 \leq 150$ and $0 \leq (m4+n4+p4)q4 \leq 150$,
- r represents a number such that $1 \leq r' \leq 200$,
- $R_{13}$ represents a radical containing a polymerizable unsaturated function, belonging to the vinyl group and to the group of acrylic, methacrylic, maleic, itaconic, crotonic, and vinylphtalic esters and to the group of urethane unsaturates such as acrylurethane, methacryl urethane, $\alpha$-$\alpha$' dimethyl-isopropenyl-benzylurethane and allylurethane, and to the group of allyl or vinyl ethers, whether or not substituted, or to the group of ethylenically unsaturated amides or imides,
- $R_{14}$, $R_{15}$, $R_{20}$ and $R_{21}$ represent hydrogen or the methyl or ethyl radical
- $R_{16}$, $R_{17}$, $R_{18}$ and $R_{19}$ represent straight or branched alkyl, aryl, alkylaryl or arylalkyl groups having from 1 to 20 carbon atoms, or a mixture thereof
- D and E are groups which may be present, in which case they represent a hydrocarbon radical having from 1 to 4 carbon atoms,

d) possibly at least one monomer of the acrylamide or methacrylamide type or their derivatives or mixtures thereof such as N-[3-(dimethylamino) propyl] acrylamide or N-[3-(dimethylamino) propyl] methacrylamide, and mixtures thereof, or at least one non water-soluble monomer such as the alkyl acrylates or methacrylates or mixtures thereof, unsaturated esters such as N-[2-(dimethylamino) ethyl] methacrylate, or N-[2-(dimethylamino) ethyl] acrylate or mixtures thereof, vinyls such as vinyl acetate, vinylpyrrolidone, styrene, alphamethylstyrene and their derivatives or mixtures thereof, or at least one cationic monomer or quaternary ammonium such as [2-(methacryloyloxy) ethyl] trimethyl ammonium chloride or sulfate, [2-(acryloyloxy) ethyl] trimethyl ammonium chloride or sulfate, [3-(acrylamido) propyl] trimethyl ammonium chloride or sulfate, dimethyl diallyl ammonium chloride or sulfate, [3-(methacrylamido) propyl] trimethyl ammonium chloride or sulfate, or mixtures thereof
e) possibly at least one crosslinking monomer selected from the group consisting of ethylene glycol dimethacrylate, trimethylolpropanetriacrylate, allyl acrylate, the allyl maleates, methylene-bis-acrylamide, methylene-bis-methacrylamide, tetrallyloxyethane, triallylcyanurates, allyl ethers prepared from polyols such as pentaerythritol, sorbitol, or sucrose

the total of the components a), b), c), d) and e) being equal to 100%,
and **in that** it has an intrinsic viscosity less than or equal to 100 ml/g determined in accordance with the method known as the intrinsic viscosity method.

**18.** A grinding aid agent for mineral matter in aqueous suspension according to claim 17, **characterized in that** said agent is a copolymer consisting, by weight, of:

a) from 2% to 95%, preferably from 3% to 25%, and even more preferably from 4% to 15%, of at least one ethylenically unsaturated anionic monomer having a monocarboxyl function selected from among the ethylenically unsaturated monomers having a monocarboxyl function such as acrylic or methacrylic acid or hemiesters of diacids such as $C_1$ to $C_4$ monoesters of maleic or itaconic acid, or mixtures thereof, or having a dicarboxyl

function selected from among the ethylenically unsaturated monomers having a dicarboxyl function such as crotonic, isocrotonic, cinnamic, itaconic, maleic acid, or anhydrides of carboxyl acids, such as maleic anhydride or having a sulfonic function selected from among the ethylenically unsaturated monomers having a sulfonic function such as acrylamido-methyl-propane-sulfonic acid, sodium methallylsulfonate, vinylsulfonic acid and styrenesulfonic acid or having a phosphoric function selected from among the ethylenically unsaturated monomers having a phosphoric function such as vinylphosphoric acid, ethylene glycol methacrylate phosphate, propylene glycol methacrylate phosphate, ethylene glycol acrylate phosphate, propylene glycol acrylate phosphate and their ethoxylates or having a phosphonic function selected from among the ethylenically unsaturated monomers having a phosphonic function such as vinylphosphonic acid, or mixtures thereof,

b) From 97.9% to 4.9%, preferably from 95% to 65%, and even more preferably from 92% to 78%, of at least one non-ionic ethylenically unsaturated monomer of formula (I):

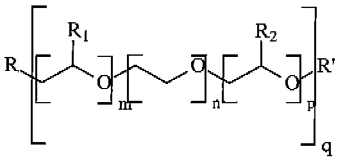

where

- m and p represent a number of alkylene oxide units less than or equal to 150
- n represents a number of ethylene oxide units less than or equal to 150
- q represents an integer equal to at least 1 and such that $5 \leq (m+n+p)q \leq 150$, and preferably represents an integer such that $15 \leq (m+n+p)q \leq 120$,
- $R_1$ represents hydrogen or the methyl or ethyl radical
- $R_2$ represents hydrogen or the methyl or ethyl radical
- R represents a radical containing a polymerizable unsaturated function, belonging to the vinyl group and to the group of acrylic, methacrylic, maleic, itaconic, crotonic, and vinylphtalic esters and to the group of urethane unsaturates such as acrylurethane, methacrylurethane, α-α' dimethyl-isopropenyl-benzylurethane and allylurethane, and to the group of allyl or vinyl ethers, whether or not substituted, or to the group of ethylenically unsaturated amides or imides,
- R' represents hydrogen or a hydrocarbon radical having from 1 to 40 carbon atoms, and preferably represents a hydrocarbon radical having from 1 to 12 carbon atoms and even more preferably a hydrocarbon radical having from 1 to 4 carbon atoms,

or a mixture of several monomers of formula (I),

c) from 0.1% to 50%, preferably from 0.2% to 10%, and even more preferably from 0.3% to 5%, of at least one organofluorinated or organosilylated monomer, preferably selected from among the molecules of formulae (IIa) or (IIb) or (IIc) or mixtures thereof:

with formula (IIa)

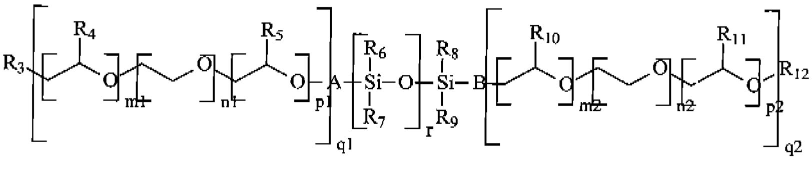

where

- m1, p1, m2 and p2 represent a number of alkylene oxide units less than or equal to 150
- n1 and n2 represent a number of ethylene oxide units less than or equal to 150
- q1 and q2 represent an integer equal to at least 1 and such that $0 \leq (m1+n1+p1)q1 \leq 150$ and $0 \leq (m2+n2+p2)q2 \leq 150$,
- r represents a number such that $1 \leq r \leq 200$

- $R_3$ represents a radical containing a polymerizable unsaturated function, belonging to the vinyl group and to the group of acrylic, methacrylic, maleic, itaconic, crotonic, and vinylphtalic esters and to the group of urethane unsaturates such as acrylurethane, methacrylurethane, α-α' dimethyl-isopropenyl-benzylurethane and allylurethane, and to the group of allyl or vinyl ethers, whether or not substituted, or to the group of ethylenically unsaturated amides or imides,
- $R_4$, $R_5$, $R_{10}$ and $R_{11}$ represent hydrogen or the methyl or ethyl radical
- $R_6$, $R_7$, $R_8$ and $R_9$ represent straight or branched alkyl, aryl, alkylaryl or arylalkyl groups having from 1 to 20 carbon atoms, or a mixture thereof
- $R_{12}$ represents a hydrocarbon radical having from 1 to 40 carbon atoms
- A and B are groups which may be present, in which case they represent a hydrocarbon radical having from 1 to 4 carbon atoms,

with formula (IIb)

$$R\text{-}A\text{-}Si(OB)_3$$

where

- R represents a radical containing a polymerizable unsaturated function, belonging to the vinyl group and to the group of acrylic, methacrylic, maleic, itaconic, crotonic, and vinylphtalic esters and to the group of urethane unsaturates such as acrylurethane, methacrylurethane, α-α' dimethyl-isopropenyl-benzylurethane and allylurethane, and to the group of allyl or vinyl ethers, whether or not substituted, or to the group of ethylenically unsaturated amides or imides,
- A is a group which may be present, in which case it represents a hydrocarbon radical having from 1 to 4 carbon atoms,
- B represents a hydrocarbon radical having from 1 to 4 carbon atoms,

with formula (IIc)

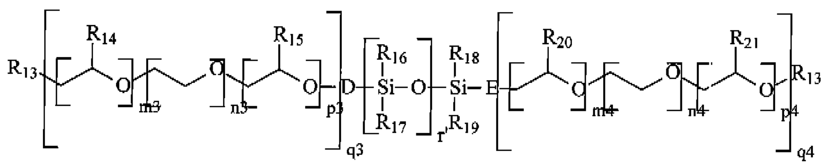

where
- m3, p3, m4 and p4 represent a number of alkylene oxide units less than or equal to 150
- n3 and n4 represent a number of ethylene oxide units less than or equal to 150
- q3 and q4 represent an integer equal to at least 1 and such that $0 \leq (m3+n3+p3)q3 \leq 150$ and $0 \leq (m4+n4+p4)q4 \leq 150$,
- r represents a number such that $1 \leq r' \leq 200$,
- $R_{13}$ represents a radical containing a polymerizable unsaturated function, belonging to the vinyl group and to the group of acrylic, methacrylic, maleic, itaconic, crotonic, and vinylphtalic esters and to the group of urethane unsaturates such as acrylurethane, methacrylurethane, α - α' dimethyl-isopropenyl-benzylurethane and allylurethane, and to the group of allyl or vinyl ethers, whether or not substituted, or to the group of ethylenically unsaturated amides or imides,
- $R_{14}$, $R_{15}$, $R_{20}$ and $R_{21}$ represent hydrogen or the methyl or ethyl radical
- $R_{16}$, $R_{17}$, $R_{18}$ and $R_{19}$ represent straight or branched alkyl, aryl, alkylaryl or arylalkyl groups having from 1 to 20 carbon atoms, or a mixture thereof
- D and E are groups which may be present, in which case they represent a hydrocarbon radical having from 1 to 4 carbon atoms

d) from 0% to 50%, preferably from 0% to 10%, and even more preferably from 0% to 5%, of at least one monomer of the acrylamide or methacrylamide type or their derivatives or mixtures thereof such as N-[3-(dimethylamino) propyl] acrylamide or N-[3-(dimethylamino) propyl] methacrylamide, and mixtures thereof, or at least one non water-soluble monomer such as the alkyl acrylates or methacrylates or mixtures thereof, unsaturated esters such as N-[2-(dimethylamino) ethyl] methacrylate, or N-[2-(dimethylamino) ethyl] acrylate or

mixtures thereof, vinyls such as vinyl acetate, vinylpyrrolidone, styrene, alphamethylstyrene and their derivatives or mixtures thereof, or at least one cationic monomer or quaternary ammonium such as [2-(methacryloyloxy) ethyl] trimethyl ammonium chloride or sulfate, [2-(acryloyloxy) ethyl] trimethyl ammonium chloride or sulfate, [3-(acrylamido) propyl] trimethyl ammonium chloride or sulfate, dimethyl diallyl ammonium chloride or sulfate, [3-(methacrylamido) propyl] trimethyl ammonium chloride or sulfate or mixtures thereof
e) from 0% to 5%, and preferably from 0% to 3%, of at least one crosslinking monomer selected from the group consisting of ethylene glycol dimethacrylate, trimethylolpropanetriacrylate, allyl acrylate, the allyl maleates, methylene-bis-acrylamide, methylene-bis-methacrylamide, tetrallyloxyethane, triallylcyanurates, allyl ethers prepared from polyols such as pentaerythritol, sorbitol, or sucrose

the total of the components a), b), c), d) and e) being equal to 100%,
and **in that** it has an intrinsic viscosity less than or equal to 100 ml/g determined in accordance with the method known as the intrinsic viscosity method.

**19.** A grinding aid agent for mineral matter in aqueous suspension according to any one of claims 17 or 18 **characterized in that** said agent is a copolymer in its acid form or fully neutralized or partially neutralized by one or more neutralizing agents having a monovalent neutralizing function or a polyvalent neutralizing function such as, for the monovalent function, those selected from among the group consisting of the alkaline cations, in particular sodium, potassium, lithium, ammonium or the primary, secondary or tertiary aliphatic and/or cyclic amines such as stearylamine, the ethanolamines (mono-, di-, triethanolamine), mono and diethylamine, cyclohexylamine, methylcyclohexylamine, aminomethylpropanol, morpholine or, for the polyvalent function, those selected from among the group consisting of alkaline earth divalent cations, in particular magnesium and calcium, or zinc, and of the trivalent cations, including in particular aluminium, or of certain cations of higher valency.

**20.** A grinding aid agent for mineral matter in aqueous suspension according to claim 19, **characterized in that** said copolymer obtained from the copolymerization reaction may, before or after the total or partial neutralization reaction, be treated and separated into several phases, according to static or dynamic methods, by one or more polar solvents belonging to the group consisting of water, methanol, ethanol, propanol, isopropanol, butanols, acetone, tetrahydrofurane or mixtures thereof.

**21.** A method for grinding mineral matter in aqueous suspension consisting of relining an aqueous suspension of said mineral materials into very fine particles **characterized in that** use is made, as a grinding aid agent before and/or during the grinding stage, of 0.05% to 10% by dry weight, with respect to the dry weight of mineral matter, of the copolymer according to any one of claims 16 to 20, and **in that** use may be made of at least one other dispersant or grinding aid agent before and/or during the grinding stage.

**22.** A grinding method in aqueous suspension according to claim 21, **characterized in that** said other dispersant or grinding aid agent is selected from among the dispersants or grinding aid agents such as homopolymers or copolymers of acrylic acid in their acid forms, or fully or partially neutralized by one or more neutralizing agents or selected from among the dispersants or grinding aid agents such as $H30^+$ ion donors preferably selected from among phosphoric acid and/or its salts with mono and/or divalent bases such as soda or lime.

**23.** A grinding method in aqueous suspension according to claim 22, **characterized in that** use is made of 0.05% to 1.0%, by dry weight with respect to the dry weight of mineral substances, of said other dispersant or grinding aid agent.

**24.** A grinding method in aqueous suspension according to any one of claims 21 to 23, **characterized in that** the temperature during the course of the grinding stage and for all the variants of the grinding method according to the invention is between 15°C and 150°C, preferably between 50°C and 105°C and very preferably between 60°C and 98°C.

**25.** A grinding method in aqueous suspension according to any one of claims 21 to 24, **characterized in that**, for mineral matter containing carbonate, the pH during the course of the grinding stage lies between 6 and 13, preferably between 7.5 and 12 and very preferably between 8 and 10.

**26.** A grinding method in aqueous suspension according to any one of claims 21 to 24, **characterized in that**, for mineral matter not containing carbonate, the pH during the course of the grinding stage lies between 2 and 13, preferably between 7.5 and 12 and very preferably between 8 and 10.

**27.** The use of the aqueous suspension of mineral matter according tc any one of claims 1 to 12 in the field of paper, paint and plastics.

**28.** The use of the aqueous suspension of mineral matter according to any one of claims 1 to 12 before or after drying or re-dispersion after drying in the field of paper and paint, and after drying in the field of plastics.

**29.** The use of the aqueous suspension of mineral matter according to any one of claims 1 to 12 in a drying method after grinding.

**30.** The use of the aqueous suspension of mineral matter according to any one of claims 27 to 29 in the paper industry and more particularly use for coating the paper and/or for the surface treatment of the paper.

**31.** The use of the aqueous suspension of mineral matter according to any one of claims 27 to 29 in the paper industry and more particularly use as direct filler during the manufacture of the paper, board, or analogous sheets or as indirect filler during manufacture of the paper, board, or analogous sheets implementing recycling of the coating brokes.

**32.** Paper or board sheets containing the aqueous suspension of mineral matter according to any one of claims 1 to 12.

**33.** The use of the aqueous suspension of mineral matter according to one of claims 27 to 29 in the field of plastic such as low density (LLDPE) and high density (HMW-HDPE) polyolefines, or breathable membranes, or polyvinyl chlorides (PVC) and more particularly in the field of PVCs such as rigid or flexible PVCs.

## Patentansprüche

**1.** Eine wässrige Suspensiongemahlener Mineralstoffe mit einer Trockenmassekonzentration, die hoch sein kann, mit niedrigem Brookfield™ der über die Zeit stabil bleibt, und mit einer Pigmentoberftäche mit niedriger ionischer Ladung, **gekennzeichnet dadurch, dass** sie als Mahlhilfsmittel ein Copolymer enthält, das aus Folgendem besteht:

a) mindestens einem ungesättigten ethylenisch anionischen Monomer mit einer Monocarboxylfunktion, ausgewählt aus den ethylenisch ungesättigten Monomeren mit einer Monocarboxylfunktion, wie Acryl- oder Methacrylsäure oder Hemiestern von Diaziden, wie C1 bis C4 Monoester von Malein- oder Itaconsäuxe, oder Gemischen derselben oder mit einer Dicarboxylfunktion, ausgewählt aus den ethylenisch ungesättigten Monomeren mit einer Dicarboxylfunktion, wie Croton-, Isocroton-, Zimt-, Itacon-, Maleinsäure, oder Anhydriden von Carbonsäuren, wie Maleinsäureanhydrid oder mit einer Sulfonfunktion, ausgewählt aus den ethylenisch ungesättigten Monomeren mit einer Sutfonfunktion, wie Acrylamidomethylpropansulfonsäure, Natriulmmethallylsulfonat, Vinylsulfonsäure und Styrolsulfonsäure oder mit einer phosphorischen Funktion, ausgewählt aus den ethylenisch ungesättigten Monomeren mit einer phosphorischen Funktion, wie Vinylphosphorsäure, Ethylenglycolmethacrylatphosphat, Propylenglycolmethacrylatphosphat, Ethyleneglycolacrylatphosphat, Propylenglycolacrylatphosphat und ihren Ethoxylaten oder mit einer phosphonischen Funktion, ausgewählt aus den ethylenisch ungesättigten Monomeren mit einer phosphonischen Funktion, wie Vinylphosphonsäure, oder Gemischen derselben,
b) mindestens einem nicht-ionischen, ethylenisch ungesättigten Monomer der Formel (I):

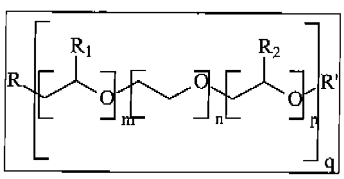

worin

- m und p für eine Anzahl von Alkylenoxidcinhciten stehen, die kleiner oder gleich 150 ist
- n für eine Anzahl von Ethylenoxideinheiten steht, die kleiner oder gleich 150 ist
- q für eine ganze Zahlsteht, die mindestens gleich 1 ist und derart, dass $5 \leq (m+n+p)q \leq 150$ und bevorzugt

für eine ganze Zahl, derart, dass 15≤ (m+n+p)q ≤ 120,
- $R_1$ für Wasserstoff oder den Methyl- oder Ethylrest steht
- $R_2$ für Wasserstoff oder den Methyl- oder Ethylrest steht
- R für einen Rest steht, der eine polymerisierbare ungesättigte Funktion enthält, der zur Vinylgruppe und der Gruppe der Acryl-, Methacryl-, Malein-, Itacon-, Croton-, Vinylphthalester sowie der ungesättigten Urethane, wie Acrylurethan, Methaerylurethan, α-α'-Dimethyl-m-isopropenylbenzylurethan und Allylurethan, sowie zur Gruppe der Allyl- oder Vinylester gehört, egal ob, substituiert oder nicht, oder zur Gruppe der ethylenisch ungesättigten Amide oder Imide,
- R' für Wasserstoff oder einen Kohlenwasserstoffrestmit 1 bis 40 Kohlenstoffatomen steht, und bevorzugt für einen Kohlenwasserstoffrest steht, der 1 bis 12 Kohlenstoffatome hat und besonders bevorzugt für einen Kohlenwasserstoffrest, der 1 bis 4 Kohlenstoffatome hat,

oder einem Gemisch mehrerer Monomere der Formel (I),
c) mindestens einem Organofluor- oder Organosilylmonomer, bevorzugt ausgewählt aus den Molekulen in Formel (IIa) oder (IIb) oder (IIc) oder Gemische derselben:
mit Formel (IIa)

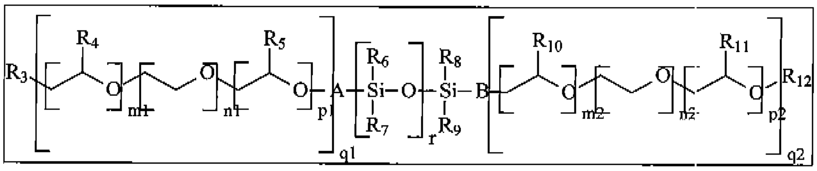

worin

- m1, p1, m2 und p2 für eine Anzahl von Alkylenoxideinheiten kleiner als oder gleich 150 stehen
- n1 und n2 für eine Anzahl von Alkylenoxideinheiten kleiner als oder gleich 150 stehen
- q1 und q2 für eine ganze Zahl, die mindestens gleich 1 ist und derart, dass 0 ≤ (m1+n1+p1)q1 ≤ 150 und 0 ≤ (m2+n2+p2)q2 ≤ 150 stehen,
- r für eine Zahl steht, derart, dass 1 ≤ r ≤ 200
- $R_3$ für einen Rest steht, der eine polymerisierbare ungesättigte Funktion enthält, der zur Vinylgruppe und der Gruppe der Acryl-, Methacryl-, Malein-, Itacon-, Croton-, Vinylphthalester sowie der ungesättigten Urethane, wie Acrylurethan, Methacrylurcthan, α-α'-Dimethyl-m-isopropenylbenzylurethan und Allylurethan, sowie zur Gruppe der Allyl- oder Vinylester gehört, egal ob, substituiert oder nicht, oder zur Gruppe der ethylenisch ungesättigtenAmide oder Imide,
- $R_4$, $R_5$, $R_{10}$und $R_{11}$ für Wasserstoff oder den Methyl- oder Ethylrest stehen
- $R_6$, $R_7$, $R_8$ und $R_9$ für gerade oder verzweigte Alkyl-, Aryl, Alkylaryl -oder Arylalkylgruppen mit 1 bis 20 Kohlenstoffatomen, oder einem Gemisch derselben, stehen
- $R_{12}$ für einen Kohlenwasserstoffrest mit 1 bis 40 Kohlenstoffatomen steht
- A und B Gruppen sind, die vorhanden sein können, in dem Fallstehen sie für einen Kohlenwasserstoffrestmit 1 bis 4 Kohlenstoffatomen,

mit Formel (IIb)

R-A-Si(OB)3

worin

- R für einen Rest steht, der eine polymerisierbare ungesättige Funktion enthält, der zur Vinylgruppe und der Gruppe der Acryl-. Methacryl-, Malein-, Itacon-, Croton-, Vinylphthalester sowie der ungesättigten Urethane, wie Acrylurethan, Methaerylurethan, α-α'-Dimethyl-m-isopropenylbenzylurethan und Allylurethan, sowie zur Gruppe der Allyl- oder Vinylester gehört, egal ob, substituiert oder nicht, oder zur Gruppe der ethylenisch ungesättigten Amide oder Imide,
- A eine Gruppe ist, die vorhanden sein kann, in dem Fall steht sie für einen Kohlenwasserstoffrest mit 1 bis 4 Kohlenstoffatomen,
- B für einen Kohlenwasserstoffrest mit 1 bis 40 Kohlenstoffatomen steht

mit Formel (IIc)

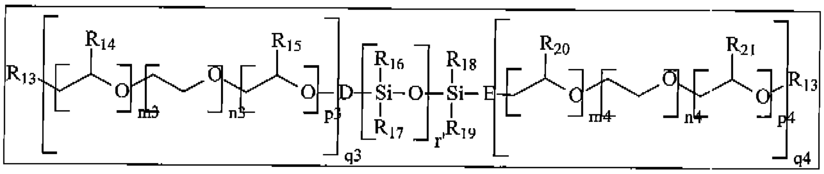

worin

- m3, p3, m4 und p4 für eine Anzahl von Alkylenoxideinheiten kleiner als oder gleich 150 stehen
- n3 und n4 für eine Anzahl von Alkylenoxideinheiten kleiner als oder gleich 150 stehen
- q3 und q4 für eine ganze Zahl, die mindestens gleich 1 ist und derart, dass 0 ≤ ((m3+n3+p3)q3 ≤ 150 und 0 ≤ (m4+n4+p4)q4 ≤ 150 stehen,
- r für eine Zahl steht, derart, dass 1 ≤ r' ≤ 200
- $R_{13}$für einen Rest steht, der eine polymerisierbare ungesättigte Funktion enthält, der zur Vinylgruppe und der Gruppe der Acryl-, Methacryl-, Malein-, Itacon-, Croton-, Vinylphthalester sowie der ungesättigten Urethane, wie Acrylurethan, Methacrylurethan, α-α'-Dimethyl-m-isopropenylbenzylurethan und Allylurethan, sowie zur Gruppe der Allyl- oder Vinylester gehört, egal ob, substituiert oder nicht, oder zur Gruppe der ethylenisch ungesättigten Amide oder Imide,
- $R_{14}$, $R_{15}$, $R_{20}$und $R_{21}$ für Wasserstoff oder den Methyl- oder Ethylrest stehen
- $R_{16}$, $R_{17}$, $R_{18}$ und $R_{19}$ für gerade oder verzweigte Alkyl-, Aryl, Alkylaryl -oder Arylalkylgruppen mit 1 bis 20 Kohlenstoffatomen, oder ein Gemisch derselben stehen
- D und E Gruppen sind, die vorhanden sein können, in dem Fallstehen sie für einen Kohlenwasserstoffrestmit 1 bis 4 Kohlenstoffatomen,

b) gegebenenfalls mindestens einem Monomer der Arten Acrylamid, Methacrylamid oder ihren Derivaten oder Gemischen derselben, wie N-[3-(dimethylamino) propyl] Acrylamid oder N-[3-(dimethylamino) propyl] Methacrylamid, und Gemischen derselben, oder mindestens einem nicht-wasserlöslichen Monomer, wie Alkylacrylaten oder Methacrylaten oder Gemischen derselben, ungesättigten Estern wie N-[2-(dimethylamino) ethyl] Methacrylat oder N-[2-(dimethylamino) ethyl] Acrylat oder Gemischen derselben, Vinylen, wie Vinylacetat, Vinylpyrrolidon, Styrol, Alphamethylstyrol und ihren Derivaten oder Gemischen derselben, oder mindestens einemkationischen Monomer oder quaternärem Ammonium, wie [2-(methacryloyloxy) ethyl] Trimethylammoniumchlorid oder -sulfat, [2-(acryloyloxy) ethyl] Trimethylammoniumchlorid oder -sulfat, [3-(acrylamido) propyl Trimethylammoniumchlorid oder -sulfat, Dimethyldiallylammoniumchloride oder -sulfat, [3-(methacrylamido) propyl] Trimethylammoniumchlorid oder -sulfat, oder Gemischen derselben.

c) gegebenenfalls mindestens einem vernetzenden Monomer, ausgewählt aus der Gruppe bestehend aus Ethyleneglycoldimethacrylat, Trimethylolpropanetriacrylat, Allylacrylat, den Allylmaleaten, Methylenbisacrylamid, Methylenbismethacrylamid, Tetrallyloxyethan, Triallylcyanurat, Allylether, die aus Polyolen, wie Pentaerythrit, Sorbitol oder Saccharose hergestellt wurden

die Summe der Bestandteile a), b), c), d) und e) 100 % ergibt,
und mit einer Grenzviskosität von weniger als oder gleich 100 ml/g, bestimmt gemäß dem Verfahren, das als Grenzviskositätsverfahren bekannt ist.

**2.** Eine wässrige Suspensiongetnahlener Mineralstoffe gemäß Anspruch 1, **dadurch gekennzeichnet, dass** das besagte Copolymer nach Gewicht aus Folgendern besteht:

a) von 2 % bis 95 %, bevorzugt von 3 % bis 25 %, und besonders bevorzugt von 4 % bis 15 %, aus mindestens einem ethylenisch ungesättigten anionischen Monomer mit einer Monocarboxylfunktion, ausgewählt aus der ethylenisch ungesättigten Monomeren mit einer Monocarboxylfunktion, wie Acryl- oder Methacrylsäure, oder Hemiestern von Diaziden, wie C1 bis C4, Monoestern aus Malein- oder Itaconsäure, oder Gemischen derselben, oder mit einer Dicarboxylfunktion, ausgewählt aus den ethylenisch ungesättigten Monomeren mit einer Dicarboxylfunktion, wie Croton-, Isocroton-, Zimt-, Itacon-, Maleinsäure, oder Anhydriden von Carbonsäuren, wie Maleinsäureanhydrid oder mit einer Sulfonfunktion, ausgewählt aus den ethylenisch ungesättigten Monomeren mit einer Sulfonfunktion, wie Acrylamidomethylpropansulfonsäure, Natriummethallylsulfonat, Vinylsulfonsäure

und Styrolsulfonsäure oder mit einer phosphorischen Funktion, ausgewählt aus den ethylenisch ungesättigten Monomeren mit einer phosphorischen Funktion, wie Vinylphosphorsäure, Ethylenglyr-olmethacrylatphosphat, Propylenglycolmcthacrylatphosphat, Ethyleneglycolacrylatphosphat, Propylenglycolacrylatphosphat und ihren Ethoxylaten oder mit einer phosphonischen Funktion, ausgewählt aus den ethylenisch ungesättigten Monomeren mit einer phosphonischen Funktion, wie Vinylphosphonsäure, oder Gemischen derselben,

b) Von 97,9 % bis 4,9 %, bevorzugt von 95 % bis 65 %, und besonders bevorzugt von 92 % bis 78 %, aus mindestens einem nicht-ionischen, ethylenisch ungesättigten Monomer der Formel (I):

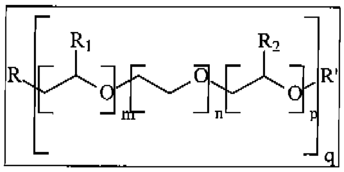

worin

- m und p für eine Anzahl von Alkylenoxideinheiten stehen, die kleiner oder gleich 150 ist
- n für eine Anzahl von Ethylenoxideinheiten steht, die kleiner oder gleich 150 ist
- q3 und q4 für eine ganze Zahl, die mindestens gleich 1 ist und derart, dass $5 \leq (m+n+p)q \leq 150$ und bevorzugt für eine ganze Zahl steht, derart, dass $15 \leq (m+n+p)q \leq 120$, steht,
- R1für Wasserstoff oder den Methyl- oder Ethylrest steht
- R2für Wasserstoff oder den Methyl- oder Ethylrest steht
- R für einen Rest steht, der eine polymerisierbare ungesättigte Funktion enthält, der zur Vinylgruppe und der Gruppe der Acryl-, Methacryl-, Malein-, Itacon-, Croton-, Vinylphthalester sowie der ungesättigten Urethane, wie Acrylurethan, Methacrylurethan, α-α'-Dimethyl-m-isopropenylbenzylurethan und Allylurethan, sowie zur Gruppe der Allyl- oder Vinylester gehört, egal ob, substituiert oder nicht, oder zur Gruppe der ethylenisch ungesättigten Amide oder Imide,
- R' für Wasserstoff oder einen Kohlenwasserstoffrestmit 1 bis 40 Kohlenstoffatomen steht, und bevorzugen für einen Kohlenwasserstoffrest steht, der 1 bis 12 Kohlenstoffatome hat und besonders bevorzugt für einen Kohlenwasserstoffrest, der 1 bis 4 Kohlenstoffatome hat,

oder einem Gemisch mehrerer Monomere der Formel (I),

c) von 0,1 % bis 50 %, bevorzugt von 0,2 % bis 10 %, und besonders bevorzugt von 0,3 % bis 5 %, aus mindestens einem Organofluor- oder Organosilylmonomer, bevorzugt ausgewählt aus den Molek,len in Formel (IIa) oder (IIb) oder (IIc) oder Gemischen derselben:

mit Formel (IIa)

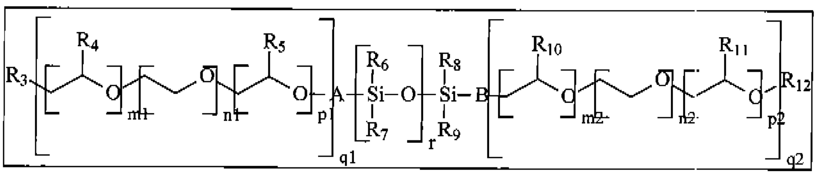

worin

- mal, p1, m2 und p2 für eine Anzahl von Alkylenoxideinheiten kleiner als oder gleich 150 stehen
- n1 und n2 für eine Anzahl von Alkylenoxideinheiten kleiner als oder gleich 150 stehen
- q1 und q2 für eine ganze Zahl, die mindestens gleich 1 ist und derart, dass $0 \leq ((m1+n1+p1)q1 \leq 150$ und $0 \leq (m2+n2+p2)q2 \leq 150$ stehen,
- r für eine Zahl steht, derart, dass $1 \leq r \leq 200$
- $R_3$für einen Rest steht, der eine polymerisierbare ungesättigte Funktion enthält, der zur Vinylgruppe und der Gruppe der Acryl-, Methacryl-, Malein-, Itacon-, Croton-, Vinylphthalester sowie der ungesättigten Urethane, wie Acrylurethan, Methacrylurethan, α-α'-Dimethyl-m-isopropenylbenzylurethan und Allylurethan, sowie zur Gruppe der Allyl- oder Vinylester gehört, egal ob, substituiert oder nicht, oder zur Gruppe der ethylenischen, ungesättigten Amide oder Imide,
- $R_4$, $R_5$, $R_{10}$und $R_{11}$ für Wasserstoff oder den Methyl- oder Ethylrest stehen

- $R_6$, $R_7$, $R_8$ und $R_9$ für gerade oder verzweigte Alkyl-, Aryl, Alkylaryl -oder Arylalkylgruppen mit 1 bis 20 Kohlenstoffatomen, oder ein Gemisch derselben stehen
- $R_{12}$für einen Kohlenwasserstoffrest mit 1 bis 40 Kohlenstoffatomen steht
- A und B Gruppen sind, die vorhanden sein können, in dem Fallstehen sie für einen Kohlenwasserstoffrestmit 1 bis 4 Kohlenstoffatomen,

mit Formel (IIb)

R-A-Si(OB)3

worin

- R für einen Rest steht, der eine polymerisierbare ungesättigte Funktion enthält, der zur Vinylgruppe und der Gruppe der Acryl-, Methacryl-, Malein-, Itacon-, Croton-, Vinylphthalester sowie der ungesättigten Urethane, wie Acrylurethan, Methacrylurethan, α-α'-Dimethyl-m-isopropenylbenzyluretlran und Allylurethan, sowie zur Gruppe der Allyl- oder Vinylester gehört, egal ob, substituiert oder nicht, oder zur Gruppe der ethylenisch ungesättigten Amide oder Imide,
- A eine Gruppe ist, die vorhanden sein kann, in dem Fallsteht sie für einen Kohlenwasserstoffrest mit 1 bis 4 Kohlenstoffatomen,
- B für einen Kohlenwasserstoffrest mit 1 bis 40 Kohlenstoffatomen steht
mit Formel (IIc)

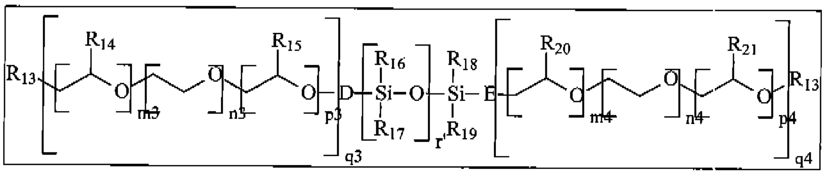

worin

- m3, p3, m4 und p4 für eine Anzahl von Alkylenoxideinheiten kleiner als oder gleich 150 stehen
- n3 und n4 für eine Anzahl von Alkylenoxideinheiten kleiner als oder gleich 150 stehen
- q3 und q4 für eine ganze Zahl, die mindestens gleich 1 ist und derart, dass $0 \leq ((m3+n3+p3)q3 \leq 150$ und $0 \leq (m4+n4+p4)q4 \leq 150$ stehen,
- r für eine Zahl steht, derart, dass $1 \leq r' \leq 200$
- $R_{13}$für einen Rest steht, der eine polymerisierbare ungesättigte Funktion enthält, der zur Vinylgruppe und der Gruppe der Acryl-, Methacryl-, Malein-, Itacon-, Croton-, Vinylphthalester sowie der ungesättigten Urethane, wie Acrylurethan, Methacrylurethan, α-α'-Dimethyl-m-isopropenylbenzylurethan und Allylurethan, sowie zur Gruppe der Allyl- oder Vinylester gehört, egal ob, substituiert oder nicht, oder zur Gruppe der ethylenischen, ungesättigten Amide oder Imide,
- $R_{14}$, $R_{15}$, $R_{20}$ und $R_{21}$ für Wasserstoff oder den Methyl- oder Ethylrest stehen
- $R_{16}$, $R_{17}$, $R_{18}$ und $R_{19}$ für gerade oder verzweigte Alkyl-, Aryl, Alkylaryl -oder Arylalkylgruppen mit 1 bis 20 Kohlenstoffatomen, oder ein Gemisch derselben stehen
- D und E Gruppen sind, die vorhanden sein können, in dem Fallstehen sie für einen Kohlenwasserstoffrestmit 1 bis 4 Kohlenstoffatomen,

d) von 0 % bis 50%, bevorzugt von 0% bis 10%, und besonders bevorzugt von 0% bis 5 % aus mindestens einem Monomer der Arten Acrylamid, Methacrylamid oder ihren Derivaten oder Gemischen derselben, wie N-[3-(dimethylamino) propyl] Acrylamid oder N-[3-(dimethylamino) propyl] Methacrylamid, und Gemischen derselben, oder mindestens einem nicht-wasserlöslichen Monomer, wie Alkylacrylaten oder Methacrylaten oder Gemischen derselben, ungesättigten Estern, wie N-[2-(dimethylamino) ethyl] Methacrylat oder N-[2-(dimethylamino) ethyl] Acrylat, oder Gemischen derselben, Vinylen, wie Vinylacetat, Vinylpyrrolidon, Styrol, Alphamethylstyrol und ihren Derivaten oder Gemische derselben, oder mindestens einem kationischen Monomer oder quaternären Ammonium wie [2-(methacryloyloxy) ethyl] Trimethylammoniumchlorid oder - sulfat, [2-(acryloyloxy) ethyl] Trimethylammoniumchlordi oder -sulfat, [3-(acrylamido) propyl] Trimethylammoniumchlorid oder -sulfat, Dimethyldiallylammoniumchloride oder -sulfat, [3-(methacrylamido) propyl] Trimethylammoniumchlorid oder

-sulfat, oder Gemischen derselben.

e) von 0 % bis %, und bevorzugt von 0 % bis 3 %, aus mindestens einem vernetzenden Monomer, ausgewählt aus der Gruppe bestehend aus Ethyleneglycoldimethacrylat, Trimethylolpropanetriacrylat, Allylacrylat, den Allylmaleaten, Methylenbisacrylamid, Methylenbismethacrylamid, Tetrallyloxyethan, Triallylcyanurat, Allylether, die aus Polyolen, wie Pentaerythrit, Sorbitol oder Saccharose hergestellt wurden

die Summe der Bestandteile a), b), c), d) und e) 100 % ergibt,
und mit einer Grenzviskosität von weniger als oder gleich 100 ml/g, bestimmt gemäß dem Verfahren, das als Grenzviskositätsverfahren bekannt ist.

3. Eine wässrige Suspension aus Mineralstoffen gemäß Anspruch 1 oder 2, **dadurch gekennzeichnet, dass** das besagte Copolymer in seiner Säureform vorliegt, vollständig neutralisiert oder teilweise neutralisiert durch einen oder mehrere Neutralisierungsmittel mit einer monovalenten Neutralisierungsfunktion oder einer polyvalenten Neutralisierungsfunktion, wie, für die monovalente Funktion, denen aus den Gruppen bestehend aus den alkalinen Kationen, insbesondere Natrium, Kalium, Lithium, Ammonium oder die primären, sekundären oder tertiären aliphatischen und/oder zyklische Amine wie Stearylamin, die Ethanolamine (Mono-, Di-, Triethanolamine), Mono- und Diethylamin, Cyclohexylamin, Methylcyclohexylamin, Aminomethylpropanol, Morpholin ausgewählt oder, für die polyvalente Funktion, aus den Gruppen bestehend aus bivalenten Erdalkalikationen, insbesondere Magnesium und Kalzium oder Zink, und aus den trivalenten Kationen, einschließlich insbesondere Aluminium, oder aus bestimmten Kationen höherer Wertigkeit ausgewählt.

4. Eine wässerige Suspension aus Mineralstoffen gemäß Anspruch 1 bis 3, **dadurch gekennzeichnet dass** sie 0,05 % bis 10 % (Trockenmasse) des besagten Copolymerss in Bezug auf die Trockenmasse der Mineralstoffeenthält.

5. Eine wässrige Suspension aus Mineralstoffen gemäß Anspruch 1 bis 3, **dadurch gekennzeichnet, dass** sie 0,05 % bis 10 % (Trockenmasse) des besagten Copolymers, in Bezug auf die Trockenmasse der Mineralstoffe, und mindestens ein anderes Dispergiermittel oder Mahlhilfsmittelenthält.

6. Eine wässrige Suspension aus Mineralstoffen gemäß Anspruch 5, **dadurch gekennzeichnet, dass** das andere Dispergiermittel oder Mahlhilfsmittel aus den Dispergiermitteln oder Mahlhilfsmitteln, wie Homopolymeren oder Copolymeren, der Acrylsäure in ihrer Säureform, vollständig neutralisiert oder teilweise neutralisiert durch einen oder mehrere Neutralisierungsmittel mit einer monovalenten Neutralisierungsfunktion oder einer polyvalenten Neutralisierungsfunktion, wie, für die monovalente Funktion, aus den Gruppen bestehend aus den alkalinen Kationen, insbesondere Natrium, Kalium, Lithium, Ammonium oder die primären, sekundären oder tertiären aliphatischen und/oder zyklische Amine wie Stearylamin, die Ethanolamine (Mono-, Di-, Triethanolamine), Mono- und Diethylamin, Cyclohexylamin, Methylcyclohexylamin, Aminomethylpropanol, Morpholin ausgewählt oder, für die polyvalente Funktion, aus den Gruppen bestehend aus bivalenten Erdalkalikationen, insbesondere Magnesium und Kalzium oder Zink, und aus den trivalenten Kationen, einschließlich insbesondere Aluminium, oder aus bestimmten Kationen höherer Wertigkeit ausgewählt, oder ausgewählt aus den Dispergiermitteln oder Mahlhilfsmitteln wie den H30+ Ionendonatoren, bevorzugt aus den Phosphorsäuren und/oder ihren Salzen mit ein- und/oder bivalenten Basen, wie Natriumkarbonat und Kalziumoxid.

7. Eine wässrige Suspension aus Mineralstoffen gemäß Anspruch 5 oder 6, **dadurch gekennzeichnet, dass** sie 0,05% bis 1,0 % (Trockenmasse) der Mineralstoffe aus besagtem anderen Dispergiermittel oder Mahlhilfsmittel enthält.

8. Eine wässrige Suspension aus Mineralstoffen gemäß der Anspruche 1 bis 7, **dadurch gekennzeichnet, dass** die Mineralstoffe aus Kalzimnkarbonat, Dolomit, Gips, Löschkalk, Satinweiß, Titandioxid, Aluminium-Trihydroxid, Glimmer, Talk, Kaoline, kalziniertem Kaolin, oder gemischten Fullstoffen aus verschiedenen Metallen auf Karbonatbasis, wie Kalzium in Verbindung mit Magnesium, und Gemischen besagter Fullstoffe, wie Talk-Kalziumkarbonat oder Kalziumkarbonat-Kaolin-Gernicehe, oder Gemischen aus Kalziumkarbonat mit Aluminium-Trihydroxid, oder Gemischen mit synthetischen oder naturlichen Fasern oder Co-Strukturenvon Mineralien, wie Talk-Kalziumkarbonat- oder Talk-Titandioxid-Co-Strukturen ausgewählt werden und ist bevorzugt Kalziumkarbonat, wie naturliches Kalziumkarbonat, ausgewählt aus Marmor, Kalzit, Kreide oder Gemischen derselben.

9. Eine wässrige Suspension aus Mineralstoffen gemäß der Anspruche 1 bis 8, **dadurch gekennzeichnet, dass** sich in der Suspension eine Trockenmassenkonzentration von 15 % bis 85 % (Trockenmasse), bevorzugt zwischen 40 % und 80 %, und besonders bevorzugt zwischen 50 % und 78 % befindet.

**10.** Eine wässrige Suspension aus Mineralstoffen gemäß der Anspruche 1 bis 9, **dadurch gekennzeichnet, dass** der Mineralstoff einen mittleren Korndurchmesser, gemessen mit einem Sedigraph□ 5100, von 50 µm bis 0,01 µm, bevorzugt von 5 µm bis 0,2 µm und besonders bevorzugt von 2 µm bis 0,3 µm hat.

**11.** Eine wässrige Suspension aus Mineralstoffen gemäß der Anspruche 1 bis 10, **dadurch gekennzeichnet, dass** die im Mineralstoff befindlichen Körner für eine gleichwertige Körnergröße eine BET-spezifische Oberfläche haben, die gemäß der Norm ISO 9277 bestimmt wurde, von weniger als der der Mineralsoffkömer der wässrigen Suspensionen aus gemahlenen Mineralstoffen, die Mahlhilfsmittel verwenden, wie homo- oder copolymere Polyacrylate.

**12.** Eine wässrige Suspension aus Mineralstoffen gemäß der Anspruche 1 bis 11, **dadurch gekennzeichnet, dass** der pH-Wert der fertigen Suspension eine zwischen 7,5 und 13 liegt, bevorzugt zwischen 8 und 12 und besonders bevorzugt zwischen 8,5 und 10.

**13.** Die Verwendung von Mineralstoffen in wässriger Suspension als Mahlhilfsmittel aus schwach ionischen und wasserlöslichen Copolymeren ist **dadurch gekennzeichnet, dass** das besagte Copolymer aus Folgendem besteht:

a) mindestens einem ungesättigten ethylenisch anionischen Monomer mit einer Monocarboxylfunktion, ausgewählt aus den ethylenisch ungesättigten Monomeren mit einer Monocarboxylfunktion, wie Acryl- oder Methacrylsäure, oder Herniestern von Diaziden, wie C1 bis C4, Monoester von Malein- oder Itaconsäure, oder Gemischen derselben, oder mit einer Dicarboxylfunktion, ausgewählt aus den ethylenisch ungesättigten Monomeren mit einer Dicarboxylfunktion, wie Croton-, Isocroton-, Zimt-, Itacon-, Maleinsäure, oder Anhydriden von Carbonsäuren, wie Maleinsäureanhydrid oder mit einer Sulfonfunktion, ausgewählt aus den ethylenisch ungesättigten Monomeren mit einer Sulfonfunktion, wie Acrylamidomethylpropansulfonsäure, Natriummethallylsulfonat, Vinylsulfonsäure und Styrolsulfonsäure, oder mit einer phosphorischen Funktion, ausgewählt aus den ethylenisch ungesättigten Monomeren mit einer phosphorischen Funktion, wie Vinylphosphorsäure, Ethylenglycolmethacrylatphosphat, Propylenglycolmethacrylatphosphat, Ethyleneglycolacrylatphosphat, Propylenglycolacrylatphosphat und ihren Ethoxylaten, oder mit einer phosphonischen Funktion, ausgewählt aus den ethylenisch ungesättigten Monomeren mit einer phosphonischen Funktion, wie Vinylphosphonsäure, oder Gemischen derselben,
b) mindestens einem nicht-ionischen, ethylenisch ungesättigten Monomer der Formel (I):

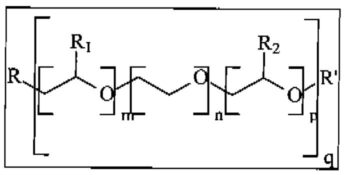

worin

- m und p für eine Anzahl von Alkylenoxideinheiten stehen, die kleiner oder gleich 150 ist
- n für eine Anzahl von Ethylenoxideinheiten steht, die kleiner oder gleich 150 ist
- q1 für eine ganze Zahl steht, die mindestens gleich 1 ist und derart, dass $5 \leq (m+n+p)q \leq 150$ und bevorzugt für eine ganze Zahl steht, derart, dass $15 \leq (m+n+p)q \leq 120$, steht,
- $R_1$ für Wasserstoff oder den Methyl- oder Ethylrest steht
- $R_2$ für Wasserstoff oder den Methyl- oder Ethylrest steht
- R für einen Rest steht, der eine polymerisierbare ungesättigte Funktion enthält, der zur Vinylgruppe und der Gruppe der Acryl-, Methacryl-, Malein-, Itacon-, Croton-, Vinylphthalester sowie der ungesättigten Urethane, wie Acrylurethan, Methacrylurethan, α-α'-Dimethyl-m-isopropenylbenzylurethan und Allylurethan, sowie zur Gruppe der Allyl- oder Vinylester gehört, egal ob, substituiert oder nicht, oder zur Gruppe der ethylenisch ungesättigten Amide oder Imide,
- R' für Wasserstoff oder einen Kohlenwasserstoffrestmit 1 bis 40 Kohlenstoffatomen steht, und bevorzugt für einen Kohlenwasserstoffrest steht, der 1 bis 12 Kohlenstoffatome hat und besonders bevorzugt für einen Kohlenwasserstoffrest, der 1 bis 4 Kohlenstoffatome hat,

oder einem Gemisch mehrerer Monomere der Formel (I),
c) mindestens einem Organofluor- oder Karbonosiliziumderivatmonomer, bevorzugt ausgewählt aus den Molekulen in Formel (IIa) oder (IIb) oder (IIc) oder Gemischen derselben:

mit Formel (IIa)

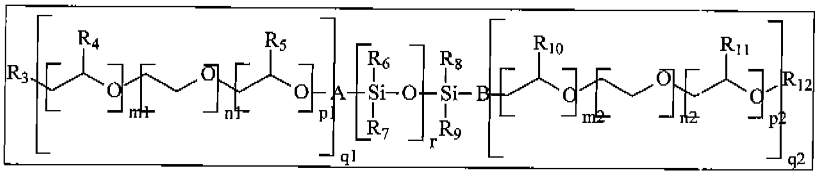

worin

- m1, p1, m2 und p2 für eine Anzahl von Alkylenoxideinheiten kleiner als oder gleich 150 stehen
- n1 und n2 für eine Anzahl von Alkylenoxideinheiten kleiner als oder gleich 150 stehen
- q1 und q2 für eine ganze Zahl, die mindestens gleich 1 ist und derart, dass $0 \leq ((m1+n1+p1)q1 \leq 150$ und $0 \leq (m2+n2+p2)q2 \leq 150$ stehen,
- r für eine Zahl steht, derart, dass $1 \leq r \leq 200$
- $R_3$ für einen Rest steht, der eine polymerisierbare ungesättigte Funktion enthält, der zur Vinylgruppe und der Gruppe der Acryl-, Methacryl-, Malein-, Itacon-, Croton-, Vinylphthalester sowie der ungesättigten Urethan, wie Acrylurethan, Methacrylurethan, α-α'-Dimethyl-m-isopropenylbenzylurethan und Allylurethan, sowie zur Gruppe der Allyl- oder Vinylester gehört, egal ob, substituiert oder nicht, oder zur Gruppe der ethylenischen, ungesättigten Amide oder Imide,
- $R_4$, $R_5$, $R_{10}$und $R_{11}$ für Wasserstoff oder den Methyl- oder Ethylrest stehen
- R6, R7, R8 und R9 für gerade oder verzweigte Alkyl-, Aryl, Alkylaryl -oder Arylalkylgruppen mit 1 bis 20 Kohlenstoffatomen, oder ein Gemisch derselben stehen
- $R_{12}$ für einen Kohlenwasserstoffrest mit 1 bis 40 Kohlenstoffatomen steht
- A und B Gruppen sind, die vorhanden sein könnten, in dem Fallstehen sie für einen Kohlenwasserstoffrestmit 1 bis 4 Kohlenstoffatomen,

mit Formel (IIb)

R-A-Si(OB)3

worin

- R für einen Rest steht, der eine polymerisierbare ungesättigte Funktion enthält, der zur Vinylgruppe und der Gruppe der Acryl-, Methacryl-, Malein-, Itacon-, Croton-, Vinylphthalester sowie der ungesättigten Urethane, wie Acrylurethan, Methacrylurethan, α-α'-Dimethyl-m-isopropenylbenzylurethan und Allylurethan, sowie zur Gruppe der Allyl- oder Vinylester gehört, egal ob, substituiert oder nicht, oder zur Gruppe der ethylenisch(!!??)) ungesättigten Amide oder Imide,
- A eine Gruppe ist, die vorhanden sein kann, in dem Fallsteht sie für einen Kohlenwasserstoffrestmit 1 bis 4 Kohlenstoffatomen,
- B für einen Kohlenwasserstoffrest mit 1 bis 40 Kohlenstoffatomen steht

mit Formel (IIc)

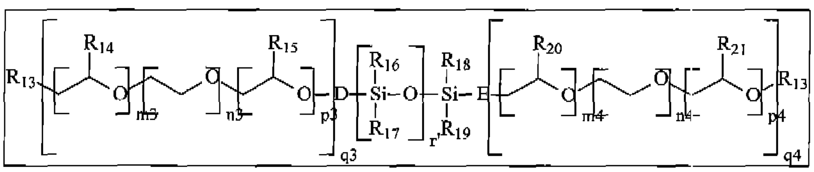

worin

- m3, p3, m4 und p4 für eine Anzahl von Alkylenoxideinheiten kleiner als oder gleich 150 stehen
- n3 und n4 für eine Anzahl von Alkylenoxideinheiten kleiner als oder gleich 150 stehen

- q3 und q4 für eine ganze Zahl, die mindestens gleich 1 ist und derart, dass 0 $\leq$ ((m3+n3+p3)q3 $\leq$ 150 und 0 $\leq$ (m4+n4+p4)q4 $\leq$ 150 stehen,
- r für eine Zahl steht, derart, dass 1 $\leq$ r' $\leq$ 200
- $R_{13}$ für einen Rest steht, der eine polymerisierbare ungesättigte Funktion enthält, der zur Vinylgruppe und der Gruppe der Acryl-, Methacryl-, Malein-, Itacon-, Croton-, Vinylphthalester sowie der ungesättigten Urethane, wie Acrylurethan, Methaerylurethan, $\alpha$-$\alpha$'-Dimethyl-m-isopropenylbenzylurethan und Allylurethan, sowie zur Gruppe der Allyl- oder Vinylester gehört, egal ob, substituiert oder nicht, oder zur Gruppe der ethylenischen, ungesättigten Amide oder Imide,
- $R_{14}$, $R_{15}$, $R_{20}$und $R_{21}$ für Wasserstoff oder den Methyl- oder Ethylrest stehen
- $R_{16}$, $R_{17}$, $R_{18}$ und $R_{19}$ für gerade oder verzweigte Alkyl-, Aryl, Alkylaryl -oder Arylalkylgruppen mit 1 bis 20 Kohlenstoffatomen, oder ein Gemisch derselben stehen
- D und E Gruppen sind, die vorhanden sein können, in dem Fallstehen sie für einen Kohlenwasserstoffrestmit 1 bis 4 Kohlenstoffatomen,

d) gegebenenfalls mindestens einem Monomer der Arten Acrylamid, Methacrylamid oder ihren Derivaten oder Gemischen derselben, wie N-[3-(dimethylamino) propyl] Acrylamid oder N-[3-(dimethylamino) propyl] Methacrylamid" und Gemischen derselben, oder mindestens einem nicht-wasserlöslichen Monomer, wie Alkylacrylaten oder Methacrylaten, oder Gemischen derselben, ungesättigten Estern wie N-[2-(dimethylamino) ethyl] Methacrylat oder N-[2-(dimethylamino) ethyl] Acrylat, oder Gemischen derselben, Vinylen, wie Vinylacetat, Vinylpyrrolidon, Styrol, Alphamethylstyrol und ihren Derivaten oder Gemischen derselben, oder mindestens einem kationischen Monomer oder quaternärem Ammonium, wie [2-(methacryloyloxy) ethyl] Trimethylammoniumchlorid oder -sulfat, [2-(acryloyloxy) ethyl] Trimethylammoniumchlorid oder -sulfat, [3-(acrylamido) propyl] Trimethylammoniumchlorid oder -sulfat, Dimethyldiallylammoniumchloride oder -sulfat, [3-(methacrylamido) propyl] Trimethylammoniumchlorid oder -sulfat, oder Gemischen derselben.
e) gegebenenfalls mindestens einem vernetzenden Monomer,ausgewählt aus der Gruppe bestehend aus Ethyleneglycolcimethacrylat, Trimethylolpropanetriacrylat, Allylacrylat, den Allylmaleaten, Methylenbisacrylamid, Methylenbismethacrylamid, Tetrallyloxyethan, Triallylcyanurat, Allylether, die aus Polyolen, wie Pentaerythrit, Sorbitol oder Saccharose hergestellt wurden

die Summe der Bestandteile a), b), c), d) und e) 100 % ergibt,
und mit einer Grenzviskosität von weniger als oder gleich 100 ml/g, bestimmt gemäß dem Verfahren, das als Grenzviskositätsverfahren bekannt ist.

**14.** Die Verwendung eines schwach ionischen und wasserlöslichen Copolymers als Mahlhilfsmittel gemäß Anspruch 13 ist **dadurch gekennzeichnet, dass** das besagte Copolymer nach Gewicht aus Folgendem besteht:

a) von 2 % bis 95 %, bevorzugt von 3 % bis 25 %, und besonders bevorzugt von 4 % bis 15 %, aus mindestens einem ethylenisch ungesättigten anionischen Monomer mit einer Monocarboxylfunktion, ausgewählt aus den ethylenisch ungesättigten Monomeren mit einer Monocarboxylfunktion, wie Acryl- oder Methacrylsäure oder Hemiestern von Diaziden wie C1 bis C4 Monoestern aus Malein- oder Itaconsäure, oder Gemischen derselben, oder mit einer Dicarboxylfunktion, ausgewählt aus den ethylenisch ungesättigten Monomeren mit einer Dicarboxylfunktion, wie Croton-, Isocroton-, Zimt-, Itacon-, Maleinsäure, oder Anhydriden von Carbonsäuren, wie Maleinsäureanhydrid oder mit einer Sulfonfunktion, ausgewählt aus den ethylenisch ungesättigten Monomeren mit einer Sulfonfunktion, wie Acrylamidomethylpropansulfonsäure, Natriummethallylsulfonat, Vinylsulfonsäure und Styrolsulfonsäure oder mit einer phosphorischen Funktion, ausgewählt aus den ethylenisch ungesättigten Monomeren mit einer phosphorischen Funktion, wie Vinylphosphorsäure, Ethylenglycolmethacrylatphosphat, Propylenglycolmethacrylatphosphat, Ethyleneglycolacrylatphosphat, Propylenglycolacrylatphosphat und ihre Ethoxylate oder mit einer phosphonischen Funktion, ausgewählt aus den ethylenisch ungesättigten Monomeren mit einer phosphonischen Funktion, wie Vinylphosphonsäure, oder Gemischen derselben,
b) Von 97,9 % bis 4,9 %, bevorzugt von 95 % bis 65 %, und besonders bevorzugt von 92 % bis 78 %, aus mindestens einem nicht-ionischen, ethylenisch ungesättigten Monomer der Formel (I):

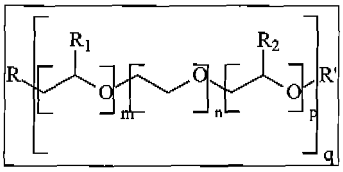

worin

- m und p für eine Anzahl von Alkylenoxideinheiten stehen, die kleiner oder gleich 150 ist
- n für eine Anzahl von Ethylenoxideinheiten steht, die kleiner oder gleich 150 ist
- q für eine ganze Zahl steht, die mindestens gleich 1 ist und derart, dass $5 \leq (m+n+p)q$ und bevorzugt für eine ganze Zahl steht, derart, dass $0 \leq 15 \leq (m+n+p)q \leq 120$,
- R1 für Wasserstoff oder den Methyl- oder Ethylrest steht
- R2 für Wasserstoff oder den Methyl- oder Ethylrest steht
- R für einen Rest steht, der eine polymerisierbare ungesättigte Funktion enthält, der zur Vinylgruppe und der Gruppe der Acryl-, Methacryl-, Malein-, Itacon-, Croton-, Vinylphthalester sowie der ungesättigten Urethane, wie Acrylurethan, Methacrylurethan, α-α'-Dimethyl-m-isopropenylbenzylurethan und Allylurethan, sowie zur Gruppe der Allyl- oder Vinylester gehört, egal ob, substituiert oder nicht, oder zur Gruppe der ethylenisch ungesättigten Amide oder Imide,
- R' für Wasserstoff oder einen Kohlenwasserstoffrest mit 1 bis 40 Kohlenstoffatomen steht, und bevorzugt für einen Kohlenwasserstoffrest steht, der 1 bis 12 Kohlenstoffatome hat und besonders bevorzugt für einen Kohlenwasserstoffrest, der 1 bis 4 Kohlenstoffatome hat,

oder einem Gemisch mehrerer Monomere der Formel (I),
c) von 0,1 % bis 50 %, bevorzugt von 0,2 % bis 10 %, und besonders bevorzugt von 0,3 % bis 5 %, aus mindestens einem Organefluor- oder Organosilylmonomer, bevorzugt ausgewählt aus den Molekülen in Formel (IIa) oder (IIb) oder (IIc) oder Gemischen derselben besteht:
mit Formel (IIa)

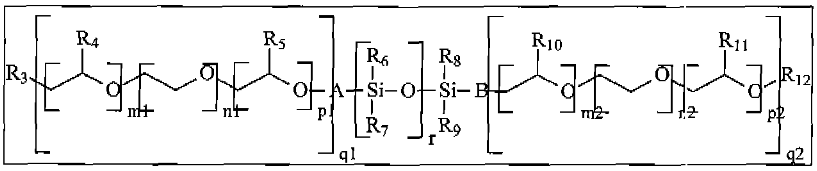

worin

- m1, p1, m2 und p2 für eine Anzahl von Alkylenoxideinheiten kleiner als oder gleich 150 stehen
- n1 und n2 für eine Anzahl von Alkylenoxideinheiten kleiner als oder gleich 150 stehen
- q1 und q2 für eine ganze Zahl, die mindestens gleich 1 ist und derart, dass $0 \leq ((m1+n1+p1)q1 \leq 150$ und $0 \leq (m2+n2+p2)q2 \leq 150$ stehen,
- r für eine Zahl steht, derart, dass $1 \leq r \leq 200$
- $R_3$ für einen Rest steht, der eine polymerisierbare ungesättigte Funktion enthält, der zur Vinylgruppe und der Gruppe der Acryl-, Methacryl-, Malein-, Itacon-, Croton-, Vinylphthalester sowie der ungesättigten Urethane, wie Acrylurethan, Methacrylurethan, α-α'-Dimethyl-m-isopropenylbenzylurethan und Allylurethan, sowie zur Gruppe der Allyl- oder Vinylester gehört, egal ob, substituiert oder nicht, oder zur Gruppe der ethylenischen, ungesättigten Amide oder Imide,
- $R_4$, $R_5$, $R_{10}$und $R_{11}$ für Wasserstoff oder den Methyl- oder Ethylrest stehen
- $R_6$, $R_7$, $R_8$ und $R_9$ für gerade oder verzweigte Alkyl-, Aryl, Alkylaryl -oder Arylalkylgruppen mit 1 bis 20 Kohlenstoffatomen, oder ein Gemisch derselben stehen
- $R_{12}$ für einen Kohlenwasserstoffrest mit 1 bis 40 Kohlenstoffatomen steht
- A und B Gruppen sind, die vorhanden sein können, in dem Fallstehen sie für einen Kohlenwasserstoffrestmit 1 bis 4 Kohlenstoffatomen,

mit Formel (IIb)

R-A-Si(OB)3

worin

- R für einen Rest steht, der eine polymerisierbare ungesättigte Funktion enthält, der zur Vinylgruppe und der Gruppe der Acryl-, Methacryl-, Malein-, Itacon-, Croton-, Vinylphthalester sowie der ungesättigten Urethane, wie Acrylurethan, Methacrylurethan, α-α'-Dimethyl-m-isopropenylbenzylurethan und Allylurethan, sowie zur Gruppe der Allyl- oder Vinylester gehört, egal ob, substituiert oder nicht, oder zur Gruppe der ethylenischungesättigten Amide oder Imide,
- A eine Gruppe ist, die vorhanden sein kann, in dem Fallsteht sie für einen Kohlenwasserstoffrestmit 1 bis 4 Kohlenstoffatomen,
- B für einen Kohlenwasserstoffrest mit 1 bis 40 Kohlenstoffatomen steht mit Formel (IIc)

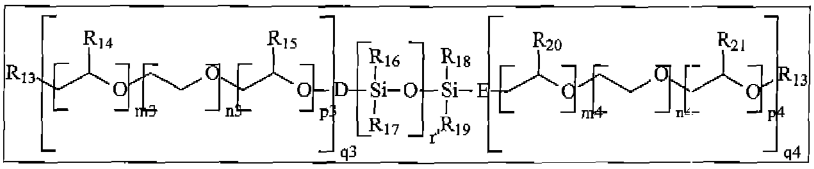

worin

- m3, p3, m4 und p4 für eine Anzahl von Alkylenoxideinheiten kleiner als oder gleich 150 stehen
- n3 und n4 für eine Anzahl von Alkylenoxideinheiten kleiner als oder gleich 150 stehen
- q3 und q4 für eine ganze Zahl, die mindestens gleich 1 ist und derart, dass 0 ≤ ((m3+n3+p3)q3 ≤ 150 und 0 ≤ (m4+n4+p4)q4 ≤ 150 stehen,
- r für eine Zahl steht, derart, dass 1 ≤ r' ≤ 200
- $R_{13}$ für einen Rest steht, der eine polymerisierbare ungesättigte Funktion enthält, der zur Vinylgruppe und der Gruppe der Acryl-, Methacryl-, Malein-, Itacon-, Croton-, Vinylphthalester sowie der ungesättigten Urethane, wie Acrylurethan, Methacrylurethan, α-α'-Dimethyl-m-isopropenylbenzylurethan und Allylurethan, sowie zur Gruppe der Allyl- oder Vinylester gehört, egal ob, substituiert oder nicht, oder zur Gruppe der ethylenischen, ungesättigten Amide oder Imide,
- $R_{14}$, $R_{15}$, $R_{20}$und $R_{21}$ für Wasserstoff oder den Methyl- oder Ethylrest stehen
- $R_{16}$, $R_{17}$, $R_{18}$ und $R_{19}$ für gerade oder verzweigte Alkyl-, Aryl, Alkylaryl -oder Arylalkylgruppen mit 1 bis 20 Kohlenstoffatomen, oder ein Gemisch derselben stehen
- D und E Gruppen sind, die vorhanden sein können, in dem Fallstehen sie für einen Kohlenwasserstoffrestmit 1 bis 4 Kohlenstoffatomen,

d) von 0 % bis 50%, bevorzugt von 0% bis 10%, und besonders bevorzugt von 0% bis 5 % aus mindestens einem Monomer der Arten Acrylamid, Methacrylamid oder ihren Derivaten oder Gemischen derselben wie N-[3-(dimethylamino) propyl] Acrylamid oder N-[3-(dimethylamino) propyl] Methacrylamid, und Gemischen derselben, oder mindestens einem nicht-wasserlöslichen Monomer, wie Alkylacrylaten oder Methacrylaten, oder Gemischen derselben, ungesättigten Estern, wie N-[2-(dimethylamino) ethyl] Methacrylat oder N-[2-(dimethylamino) ethyl] Acrylat, Vinylen, wie Vinylacetat, Vinylpyrrolidon, Styrol, Alphamethylstyrol und ihren Derivaten oder Gemischen derselben, oder mindestens einem kationischen Monomer oder quaternärem Ammonium wie [2-(methacryloyloxy) ethyl] Trimethylammoniumchlorid oder -sulfat, [2-(acryloyloxy) ethyl] Trimethylammoniumchlorid oder -sulfat, [3-(acrylamido) propyl] Trimethylammoniumchlorid oder -sulfat, Dimethyldiallylammoniumchloride oder -sulfat, [3-(methacrylamido) propyl] Trimethylammoniumchlorid oder -sulfat, oder Gemischen derselben.
e) von 0 % bis %, und bevorzugt von 0 % bis 3 %, aus mindestens einem vernetzenden Monomer, ausgewählt aus der Gruppe bestehend aus Ethyleneglycoldimethacrylat, Trimethylolpropanetriacrylat, Allylacrylat, den Allylmaleaten, Methylenbisacrylamid, Methylenbismethacrylamid, Tetrallyloxyethan, Triallylcyanurat, Allylether, die aus Polyolen, wie Pentaerythrit, Sorbitol oder Saccharose hergestellt wurden

die Summe der Bestandteile a), b), c), d) und e) 100 % ergibt,
und mit einer Grenzviskosität von weniger als oder gleich 100 ml/g, bestimmt gemäß dem Verfahren, das als

Grenzviskositätsverfahren bekannt ist.

**15.** Die Verwendung eines schwach ionischen und wasserlöslichen Copolymers gemäß Anspruch 13 oder 14, **dadurch gekennzeichnet, dass** das besagte Copolymer in Säureform vorliegt und möglicherweise destilliert, kann auch durch einen oder mehrere Neutralisierungsmittel mit einer monovalenten Neutralisierungsfunktion oder einer polyvalenten Neutralisierungsfunktion vollständig neutralisiert oder teilweise neutralisiert sein, wie, für die monovalente Funktion, aus den Gruppen bestehend aus den alkalinen Kationen, insbesondere Natrium, Kalium, Lithium, Ammonium oder die primären, sekundären oder tertiären aliphatischen und/oder zyklische Amine, wie Stearylamin, die Ethanolamine (Mono-, Di-, Triethanolamine), Mono- und Diethylamin, Cyclohexylamin, Methylcyclohexylamin, Aminomethylpropanol, Morpholin ausgewählt oder, für die polyvalente Funktion, aus den Gruppen bestehend aus bivalenten Erdalkalikationen, insbesondere Magnesium und Kalzium oder Zink, und aus den trivalenten Kationen, einschließlich insbesondere Aluminium, oder aus bestimmten Kationen höherer Wertigkeit ausgewählt.

**16.** Die Verwendung eines schwach ionischen und wasserlöslichen Copolymers gemäß Anspruch 13 oder 14, **dadurch gekennzeichnet, dass** das besagte Copolymer, das aus einer Copolymerisationsreaktion hervorgeht, vor oder nach der vollständigen oder teilweisen Neutralisierungsreaktion behandelt und in verschiedene Phasen aufgeteilt werden kann, gemäß statischer oder dynamischer Verfahren, mit einem oder mehreren polaren Suspensionsmitteln, die zu der Gruppe gehören, die aus Wasser, Methanol, Ethanol, Propanol, Isopropanol, Butanole, Aceton, Tetrahydrofuran oder Gemischen derselben besteht.

**17.** Ein Mahlhilfsmittel für Mineralstoffe in wässriger Suspension, **dadurch gekennzeichnet, dass** das besagte Mittel ein Copolymer ist, das aus Folgendem besteht:

a) mindestens einem ungesättigten ethylenisch anionischen Monomer mit einer Monocarboxylfunktion, ausgewählt aus den ethylenisch ungesättigten Monomeren mit einer Monocarboxylfunktion, wie Acryl- oder Methacrylsäure, oder Hemiestern von Diaziden wie C1 bis C4 Monoester von Malein- oder Itaconsäure, oder Gemischen derselben oder mit einer Dicarboxylfunktion, ausgewählt aus den ethylenisch ungesättigten Monomeren mit einer Dicarboxylfunktion, wie Croton-, Isocroton-, Zimt-, Itacon-, Maleinsäure, oder Anhydriden von Carbonsäuren, wie Maleinsäureanhydrid oder mit einer Sulfonfunktion, ausgewählt aus der ethylenisch ungesättigten Monomeren mit einer Sulfonfunktion, wie Acrylamidomethylpropansulfonsäure, Natriummethallylsulfonat, Vinylsulfonsäure und Styrolsulfonsäure oder mit einer phosphorischen Funktion, ausgewählt aus den ethylenisch ungesättigten Monomeren mit einer phosphorischen Funktion, wie Vinylphosphorsäure, Ethylenglycolmethacrylatphosphat, Propylenglycolmethacrylatphosphat, Ethyleneglycolacrylatphosphat, Propylenglycolacrylatphosphat und ihren Ethoxylaten, oder mit einer phosphonischen Funktion, ausgewählt aus den ethylenisch ungesättigten Monomeren mit einer phosphonischen Funktion, wie Vinylphosphonsäure, oder Gemischen derselben,

b) mindestens einem nicht-ionischen, ethylenisch ungesättigten Monomer der Formel (I):

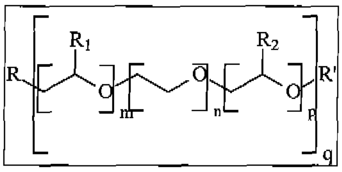

worin

- m und p für eine Anzahl von Alkylenoxideinheiten stehen, die kleiner oder gleich 150 ist
- n für eine Anzahl von Ethylenoxideinheiten steht, die kleiner oder gleich 150 ist
- qfür eine ganze Zahl steht, die mindestens gleich 1 ist und derart, dass $5 \leq (m+n+p)q \leq 150$, und bevorzugt für eine ganze Zahl, derart, dass $15 \leq (m+n+p)q \leq 120$,
- $R_1$für Wasserstoff oder den Methyl- oder Ethylrest steht
- $R_2$für Wasserstoff oder den Methyl- oder Ethylrest steht
- R für einen Rest steht, der eine polymerisierbare ungesättigte Funktion enthält, der zur Vinylgruppe und der Gruppe der Acryl-, Methacryl-, Malein-, Itacon-, Croton-, Vinylphthalester sowie der ungesättigten Urethane, wie Acrylurethan, Methacrylurethan, α-α'-Dimethyl-m-isopropenylbenzylurethan und Allylurethan, sowie zur Gruppe der Allyl- oder Vinylester gehört, egal ob, substituiert oder nicht, oder zur Gruppe der ethylenisch ungesättigten Amide oder Imide,

- R' für Wasserstoff oder einen Kohlenwasserstoffrest mit 1 bis 40 Kohlenstoffatomen steht, und bevorzugt für einen Kohlenwasserstoffrest steht, der 1 bis 12 Kohlenstoffatome hat und besonders bevorzugt für einen Kohlenwasserstoffrest, der 1 bis 4 Kohlenstoffatome hat,

oder einem Gemisch mehrerer Monomere der Formel (I),
c) mindestens einem Organofluor- oder Organosilylmonomer, bevorzugt ausgewählt aus den Molekülen in Formel (IIa) oder (IIb) oder (IIc), oder Gemischen derselben:
mit Formel (IIa)

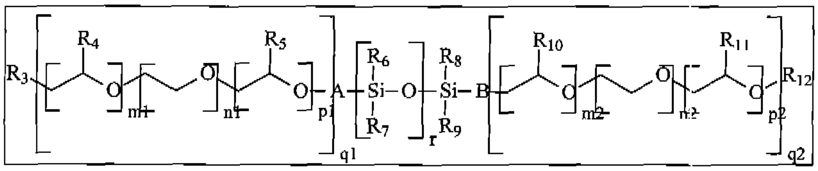

worin

- m1, p1, m2 und p2 für eine Anzahl von Alkylenoxideinheiten kleiner als oder gleich 150 stehen
- n1 und n2 für eine Anzahl von Alkylenoxideinheiten kleiner als oder gleich 150 stehen
- q1 und q2 für eine ganze Zahl, die mindestens gleich 1 ist und derart, dass $0 \leq ((m1+n1+p1)q1 \leq 150$ und $0 \leq (m2+n2+p2)q2 \leq 150$ stehen,
- r für eine Zahl steht, derart, dass $1 \leq r \leq 200$
- $R_3$für einen Rest steht, der eine polymerisierbare ungesättigte Funktion enthält, der zur Vinylgruppe und der Gruppe der Acryl-, Methacryl-, Malein-, Itacon-, Croton-, Vinylphthalester sowie der ungesättigten Urethane, wie Acrylurethan, Methacrylurethan, α-α'-Dimethyl-m-isopropenylbenzylurethan und Allylurethan, sowie zur Gruppe der Allyl- oder Vinylester gehört, egal ob, substituiert oder nicht, oder zur Gruppe der ethylenischen, ungesättigten Amide oder Imide,
- $R_4$, $R_5$, $R_{10}$ und $R_{11}$ für Wasserstoff oder den Methyl- oder Ethylrest stehen
- $R_6$, $R_7$, $R_8$ und $R_9$ für gerade oder verzweigte Alkyl-, Aryl, Alkylaryl -oder Arylalkylgruppen mit 1 bis 20 Kohlenstoffatomen, oder ein Gemisch derselben stehen
- $R_{12}$für einen Kohlenwasserstoffrest mit 1 bis 40 Kohlenstoffatomen steht
- A und B Gruppen sind, die vorhanden sein können, in dem Fallstehen sie für einen Kohlenwasserstoffrestmit 1 bis 4 Kohlenstoffatomen,

mit Formel (IIb)

R - A - Si (OB)3

worin

- R für einen Rest steht, der eine polymerisierbare ungesättigte Funktion enthält, der zur Vinylgruppe und der Gruppe der Acryl-, Methacryl-, Malein-, Itacon-, Croton-, Vinylphthalester sowie der ungesättigten Urethane, wie Acrylurethan, Methacrylurethan, α-α'-Dimethyl-m-isopropenylbenzylurethan und Allylurethan, sowie zur Gruppe der Allyl- oder Vinylester gehört, egal ob, substituiert oder nicht, oder zur Gruppe der ethylenisch ungesättigten Amide oder Imide,
- A eine Gruppe ist, die vorhanden sein kann, in dem Fallstehr sie für einen Kohlenwasserstoffrestmit 1 bis 4 Kohlenstoffatomen,
- B für einen Kohlenwasserstoffrest mit 1 bis 40 Kohlenstoffatomen steht

mit Formel (IIc)

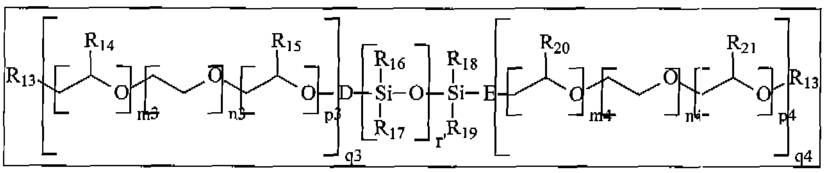

worin

- m3, p3, m4 und p4 für eine Anzahl von Alkylenoxideinheiten kleiner als oder gleich 150 stehen
- n3 und n4 für eine Anzahl von Alkylenoxideinheiten kleiner als oder gleich 150 stehen
- q3 und q4 für eine ganze Zahl, die mindestens gleich 1 ist und derart, dass $0 \leq ((m3+n3+p3)q3 \leq 150$ und $0 \leq (m4+n4+p4)q4 \leq 150$ stehen,
- r für eine Zahl steht, derart, dass $1 \leq r' \leq 200$
- $R_{13}$für einen Rest steht, der eine polymerisierbare ungesättigte Funktion enthält, der zur Vinylgruppe und der Gruppe der Acryl-, Methacryl-, Malein-, Itacon-, Croton-, Vinylphthalester sowie der ungesättigten Urethane, wie Acrylurethan, Methacrylurethan, $\alpha$-$\alpha$'-Dimethyl-m-isopropenylbenzylurethan und Allylurethan, sowie zur Gruppe der Allyl- oder Vinylester gehört, egal ob, substituiert oder nicht, oder zur Gruppe der ethylenischen, ungesättigten Amide oder Imide,
- $R_{14}$, $R_{15}$, $R_{20}$und $R_{21}$ für Wasserstoff oder den Methyl- oder Ethylrest stehen
- $R_{16}$, $R_{17}$, $R_{18}$ und $R_{19}$ für gerade oder verzweigte Alkyl-, Aryl, Alkylaryl -oder Arylalkylgruppen mit 1 bis 20 Kohlenstoffatomen, oder ein Gemisch derselben stehen
- D und E Gruppen sind, die vorhanden sein können, in dem Fallstehen sie für einen Kohlenwasserstoffrestmit 1 bis 4 Kohlenstoffatomen,

d) gegebenenfalls mindestens einem Monomer der Arten Acrylamid, Methacrylamid oder ihren Derivaten, oder Gemischen derselber, wie N-[3-(dimethylamino) propyl] Acrylamid oder N-[3-(dimethylamino) propyl] Methacrylamid, und Gemischen derselben, oder mindestens einem nicht-wasserlöslichen Monomer, wie Alkylacrylaten oder Methacrylaten, oder Gemischen derselben, ungesättigten Estern wie N-[2-(dimethylamino) ethyl] Methacrylat oder N-[2-(dimethylamino) ethyl] Acrylat oder Gemischen derselben, Vinylen, wie Vinylacetat, Vinylpyrrolidon, Styrol, Alphamethylstyrol und ihren Derivaten, oder Gemische derselben, oder mindestens einem kationischen Monomer oder quaternären Ammonium, wie [2-(methacryloyloxy) ethyl] Trimethylammoniumchlorid oder -sulfat, [2-(acryloyloxy) ethyl] Trimethylammoniumchlorid oder -sulfat, [3-(acrylamido) propyl] Trimethylammoniumchlorid oder -sulfat, Dimethyldiallylammoniumchloride oder -sulfat, [3-(methacrylamido) propyl] Trimethylammoniumchlorid oder

- sulfat, oder Gemischen derselben.

e) gegebenenfalls mindestens einem vernetzenden Monomer,ausgewählt aus der Gruppe bestehend aus Ethyleneglycoldimethacrylat, Trimethylolpropanetriacrylat, Allylacrylat, den Allylmaleaten, Methylenbisacrylamid, Methylenbismethacrylamid, Tetrallyloxyethan, Triallylcyanurat, Allylether, die aus Polyolen, wie Pentaerythrit, Sorbitol oder Saccharose hergestellt wurden

die Summe der Bestandteile a), b), c), d) und e) 100 % ergibt,
und mit einer Grenzviskosität von weniger als oder gleich 100 ml/g, bestimmt gemäß dem Verfahren, das als Grenzviskositätsverfahren bekannt ist.

**18.** Ein Mahlhilfsmittel für Mineralstoffe in wässriger Suspension, gemäß Anspruch 17, **dadurch gekennzeichnet, dass** das besagte Mittel ein Copolymer ist, das nach Gewicht aus Folgendem besteht:

a) von 2 % bis 95 %, bevorzugt von 3 % bis 25 %, undbesonders bevorzugt von 4
% bis 15 %, aus mindestens einem ethylenisch ungesättigten anionischen Monomer mit einer Monocarboxylfunktion, ausgewählt aus den ethylenisch ungesättigten Monomeren mit einer Monocarboxylfunktion, wie Acryl- oder Methacrylsäure, oder Hemiestern von Diaziden, wie C1 bis C4 Monoestern aus Malein- oder Itaconsäure, oder Gemischen derselben, oder mit einer Dicarboxylfunktion, ausgewählt aus den ethylenisch ungesättigten Monomeren mit einer Dicarboxylfunktion, wie Croton-, Isocroton-, Zimt-, Itacon-, Maleinsäure, oder Anhydriden von Carbonsäuren, wie Maleinsäureanhydrid oder mit einer Sulfonfunktion, ausgewählt aus den ethylenisch ungesättigten Monomeren mit einer Sulfonfunktion, wie Acrylamidomethylpropansulfonsäure, Natriummethallylsulfonat, Vinylsulfonsäure und Styrolsulfonsäure oder mit einer phosphorischen Funktion, ausgewählt aus den ethylenisch ungesättigten Monomeren mit einer phosphorischen Funktion, wie Vinylphosphorsäure, Ethylenglycolmethacrylatphosphat, Propylenglycolmethacrylatphosphat, Ethyleneglycolacrylatphosphat, Propylenglycolacrylatphosphat und ihre Ethoxylate oder mit einer phosphonischen Funktion, ausgewählt aus den ethylenisch ungesättigten Monomeren mit einer phosphonischen Funktion, wie Vinylphosphonsäure, oder Gemische derselben,
b) Von 97,9 % bis 4,9 %, bevorzugt von 95 % bis 65 %, und besonders bevorzugt von 92 % bis 78 %, aus mindestens einem nicht-ionischen ethylenisch ungesättigten Monomer der Formel (I):

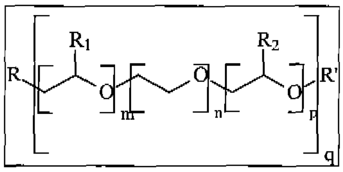

worin

- m und p für eine Anzahl von Alkylenoxideinheiten stehen, die kleiner oder gleich 150 ist
- n für eine Anzahl von Ethylenoxideinheiten steht, die kleiner oder gleich 150 ist
- qfür eine ganze Zahl steht, die mindestens gleich 1 ist und derart, dass $5 \leq (m+n+p)q \leq 150$ und bevorzugt für eine ganze Zahl, derart, dass $15 \leq (m+n+p)q \leq 120$,
- $R_1$für Wasserstoff oder den Methyl- oder Ethylrest steht
- $R_2$für Wasserstoff oder den Methyl- oder Ethylrest steht
- R für einen Rest steht, der eine polymerisierbare ungesättigte Funktion enthält, der zur Vinylgruppe und der Gruppe der Acryl-, Methacryl-, Malein-, Itacon-, Croton-, Vinylphthalester sowie der ungesättigten Urethane, wie Acrylurethan, Methacrylurethan, α-α'-Dimethyl-m-isopropenylbenzylurethan und Allylurethan, sowie zur Gruppe der Allyl- oder Vinylester gehört, egal ob, substituiert oder nicht, oder zur Gruppe der ethylenisch ungesättigten Amide oder Imide,
- R' für Wasserstoff oder einen Kohlenwasserstoffrestmit 1 bis 40 Kohlenstoffatomen steht, und bevorzugt für einen Kohlenwasserstoffrest steht, der 1 bis 12 Kohlenstoffatome hat und besonders bevorzugt für einen Kohlenwasserstoffrest, der 1 bis 4 Kohlenstoffatome hat,

oder einem Gemisch mehrerer Monomere der Formel (I),

c) von 0,1 % bis 50 %, bevorzugt von 0,2 % bis 10 %, und besonders bevorzugt von 0,3 % bis 5 %, aus mindestens einem Organofluor- oder Organosilylmonomer, bevorzugt ausgewählt aus den Molek,len in Formel (IIa) oder (IIb) oder (IIc) oder Gemische derselben besteht:
mit Formel (IIa)

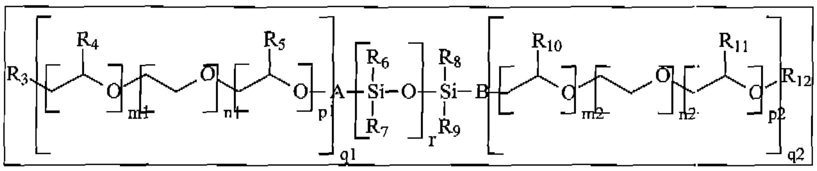

worin

- m1, p1, m2 und p2 für eine Anzahl von Alkylenoxideinheiten kleiner als oder gleich 150 stehen
- n1 und n2 für eine Anzahl von Alkylenoxideinheiten kleiner als oder gleich 150 stehen
- q1 und q2 für eine ganze Zahl, die mindestens gleich 1 ist und derart, dass $0 \leq ((m1+n1+p1)q1 \leq 150$ und $0 \leq (m2+n2+p2)q2 \leq 150$ stehen,
- r für eine Zahl steht, derart, dass $1 \leq r \leq 200$
- $R_3$für einen Rest steht, der eine polymerisierbare ungesättigte Funktion enthält, der zur Vinylgruppe und der Gruppe der Acryl-, Methacryl-, Malein-, Itacon-, Croton-, Vinylphthalester sowie der ungesättigten Urethane, wie Acrylurethan, Methacrylurethan, α-α'-Dimethyl-m-isopropenylbenzylurethan und Allylurethan, sowie zur Gruppe der Allyl- oder Vinylester gehört, egal ob, substituiert oder nicht, oder zur Gruppe der ethylenischen, ungesättigten Amide oder Imide,
- $R_4$, $R_5$, $R_{10}$und $R_{11}$ für Wasserstoff oder den Methyl- oder Ethylrest stehen
- $R_6$, $R_7$, $R_8$ und $R_9$ für gerade oder verzweigte Alkyl-, Aryl, Alkylaryl -oder Arylalkylgruppen mit 1 bis 20 Kohlenstoffatomen, oder ein Gemisch derselben stehen
- $R_{12}$für einen Kohlenwasserstoffrest mit 1 bis 40 Kohlenstoffatomen steht
- A und B Gruppen sind, die vorhanden sein können, in dem Fallstehen sie für einen Kohlenwasserstoffrestmit 1 bis 4 Kohlenstoffatomen,

mit Formel (IIb)

R-A-Si(OB)3

worin

- R für einen Rest steht, der eine polymerisierbare ungesättigte Funktion enthält, der zur Vinylgruppe und der Gruppe der Acryl-, Methacryl-, Malein-, Itacon-, Croton-, Vinylphthalester sowie der ungesättigten Urethane, wie Acrylurethan, Methacrylurethan, α-α'-Dimethyl-m-isopropenylbenzylurethan und Allylurethan, sowie zur Gruppe der Allyl- oder Vinylester gehört, egal ob, substituiert oder nicht, oder zur Gruppe der ethylenisch ungesättigten Amide oder Imide,
- A eine Gruppe ist, die vorhanden sein kann, in dem Fallsteht sie für einen Kohlenwasserstoffrestmit 1 bis 4 Kohlenstoffatomen,
- B für einen Kohlenwasserstoffrest mit 1 bis 40 Kohlenstoffatomen steht

mit Formel (IIc)

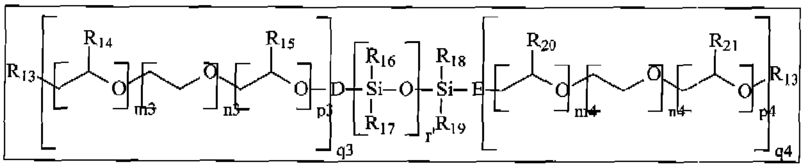

worin

- m3, p3, m4 und p4 für eine Anzahl von Alkylenoxideinheiten kleiner als oder gleich 150 stehen
- n3 und n4 für eine Anzahl von Alkylenoxideinheiten kleiner als oder gleich 150 stehen
- q3 und q4 für eine ganze Zahl, die mindestens gleich 1 ist und derart, dass 0 ≤ ((m3+n3+p3)q3 ≤ 150 und 0 ≤ (m4+n4+p4)q4 ≤ 150 stehen,
- r für eine Zahl steht, derart, dass 1 ≤ r' ≤ 200
- $R_{13}$für einen Rest steht, der eine polymerisierbare ungesättigte Funktion enthält, der zur Vinylgruppe und der Gruppe der Acryl-, Methacryl-, Malein-, Itacon-, Croton-, Vinylphthalester sowie der ungesättigten Urethane, wie Acrylurethan, Methacrylurethan, α-α'-Dimethyl-m-isopropenylbenzylurethan und Allylurethan, sowie zur Gruppe der Allyl- oder Vinylester gehört, egal ob, substituiert oder nicht, oder zur Gruppe der ethylenischen, ungesättigten Amide oder Imide,
- $R_{14}$, $R_{15}$, $R_{20}$und $R_{21}$ für Wasserstoff oder den Methyl- oder Ethylrest stehen
- $R_{16}$, $R_{17}$, $R_{18}$ und $R_{19}$ für gerade oder verzweigte Alkyl-, Aryl, Alkylaryl -oder Arylalkylgruppen mit 1 bis 20 Kohlenstoffatomen, oder ein Gemisch derselben stehen
- D und E Gruppen sind, die vorhanden sein können, in dem Fallstehen sie für einen Kohlenwasserstoffrestmit 1 bis 4 Kohlenstoffatomen

d) von 0 % bis 50%, bevorzugt von 0% bis 10%, und besonders bevorzugt von 0% bis 5 % aus mindestens einem Monomer der Arten Acrylamid, Methacrylamid oder ihren Derivaten oder Gemischen derselben, wie N-[3-(dimethylamino) propyl] Acrylamid oder N-[3-(dimethylamino) propyl] Methacrylamid, und Gemischen derselben, oder mindestens einem nicht-wasserlöslichen Monomer, wie Alkylacrylaten oder Methacrylaten, oder Gemischen derselben, ungesättigten Estern wie N-[2-(dimethylamino) ethyl] Methacrylat oder N-[2-(dimethylamino) ethyl] Acrylat, oder Gemischen derselben, Vinylen, wie Vinylacetat, Vinylpyrrolidon, Styrol, Alphamethylstyrol und ihren Derivaten,
oder Gemischen derselben, oder mindestens einem kationischen Monomer oder quaternären Ammonium wie [2-(methacryloyloxy) ethyl] Trimethylammoniumchlorid oder -sulfat, [2-(acryloylcxy) ethyl] Trimethylammoniumchlorid oder -sulfat, [3-(acrylamido) propyl] Trimethylammoniumchlorid oder -sulfat, Dimethyldiallylammoniumchloride oder -sulfat, [3-(methacrylamido) propyl] Trimethylammoniumchlorid oder -sulfat, oder Gemischen derselben.
e) von 0 % bis %, und bevorzugt von 0 % bis 3 %, aus mindestens einem vernetzenden Monomer, ausgewählt aus der Gruppe bestehend aus Ethyleneglycoldimethacrylat, Trimethylolpropanetriacrylat, Allylacrylat, den Allylmaleaten, Methylenbisacrylamid, Methylenbismethacrylamid, Tetrallyloxyethan, Triallylcyanurat, Allylether, die aus Polyolen, wie Pentaerythrit, Sorbitol oder Saccharose hergestellt wurden

die Summe der Bestandteile a), b), c), d) und e) 100 % ergibt,

und mit einer Grenzviskosität von weniger als oder gleich 100 ml/g, bestimmt gemäß dem Verfahren, das als Grenzviskositätsverfahren bekannt ist.

**19.** Ein Mahlhilfsmittel für Mineralstoffe in wässriger Suspension gemäß Anspruch 17 oder 18, **dadurch gekennzeichnet, dass** das besagte Copolymer in seiner Säureform vorliegt, vollständig neutralisiert oder teilweise neutralisiert durch einen oder mehrere Neutralisierungsmittel mit einer monovalenten Neutralisierungsfunktion oder einer polyvalenten Neutralisierungsfunktion, wie, für die monovalente Funktion, aus den Gruppen bestehend aus den alkalinen Kationen, insbesondere Natrium, Kalium, Lithium, Ammonium oder die primären, sekundären oder tertiären aliphatischen und/oder zyklische Amine wie Stearylamin, die Ethanolamine (Mono-, Di-, Triethanolamine), Mono- und Diethylamin, Cyclohexylamin, Methylcyclohexylamin, Aminomethylpropanol, Morpholin ausgewählt oder, für die polyvalente Funktion, aus den Gruppen bestehend aus bivalenten Erdalkalikationen, insbesondere Magnesium und Kalzium oder Zink, und aus den trivalenten Kationen, einschließlich insbesondere Aluminium, oder aus bestimmten Kationen höherer Wertigkeit ausgewählt .

**20.** Ein Mahlhilfsmittel für Mineralstoffe in wässriger Suspension gemäß Anspruch 19, **dadurch gekennzeichnet, dass** das besagte Copolymer, das aus einer Copolymerisationsreaktion hervorgeht, vor oder nach der vollständigen oder teilweisen Neutralisierungsreaktion, behandelt und in verschiedene Phasen aufgeteilt werden kann, unter Zuhilfenahme statischer oder dynamischer Verfahren, mit einem oder mehreren polaren Suspensionsmitteln, die zu der Gruppe gehören, die aus Wasser, Methanol, Ethanol, Propanol, Isopropanol, Butanole, Aceton, Tetrahydrofuran oder Gemischen derselben besteht.

**21.** Ein Verfahren für das Mahlen von Mineralstoffen in wässriger Suspension bestehend aus dem Mahlen einer wässrigen Suspension aus den besagten mineralischen Materialien in sehr feine Teilchen, **dadurch gekennzeichnet, dass** das Copolymer, aus einem der Anspr,che 16 bis 20 als ein Mahlhilfsmittel vor und/oder während des Mahlvorgangs, von 0,05 % bis 10 % (Trockenmasse), mit Bezug zum Trockengewicht des Mineralstoffs verwendet wird und dass mindestens ein anderes Dispergiermittel oder Mahlhilfsmittel vor und/oder während des Mahlvorgangs verwendet wird.

**22.** Ein Mahlverfahren in wässriger Suspension aus Mineralstoffen gemäß Anspruch 21, **dadurch gekennzeichnet, dass** das besagte andere Dispergiermittel oder Mahlhilfsmittel aus den Dispergiermitteln oder Mahlhilfsmitteln, wie Homopolymeren oder Copolymeren der Acrylsäure in ihren Säureformen ausgewählt ist, oder durch ein oder mehrere Neutralisierungsmittel vollständig oder teilweise neutralisiert ist, oder
aus den Dispergiermitteln oder Mahlhilfsmitteln wie den $H3O+$ Ionendonatoren ausgewählt ist, bevorzugt aus den Phosphorsäuren und/oder ihren Salzen mit ein- und/ oder bivalenten Basen, wie Natriumkarbonat und Kalziumoxid.

**23.** Ein Mahlverfahren in wässriger Suspension aus Mineralstoffen gemäß Anspruch 22, **dadurch gekennzeichnet, dass** 0,05 % bis 1,0 % (Trockenmasse) der Mineralstoffe in Bezug auf die Trockenmasse aus besagtem anderen Dispergens oder Mahlhilfsmittel verwendet werden.

**24.** Ein Mahlverfahren in wässriger Suspension gemäß einem der Anspruche 21 bis 23, **dadurch gekennzeichnet, dass** die Temperatur im Verlauf des Mahlvorgangs und für alle Varianten des Mahlverfahrens gemäß der Erfindung zwischen 15°C und 150°C liegt, bevorzugt zwischen 50°C und 105°C und besonders bevorzugt zwischen 60°C und 98°C.

**25.** Ein Mahlverfahren in wässriger Suspension gemäß einem der Anspruche 21 bis 24, **dadurch gekennzeichnet, dass** für Mineralstoffe, die Karbonat enthalten, der pH-Wert in Verlauf der Mahlvorgangs zwischen 6 und 13 liegt, bevorzugt zwischen 7,5 und 12 und besonders bevorzugt zwischen 8 und 10.

**26.** Ein Mahlverfahren in wässriger Suspension gemäß einem der Ansprüche 21 bis 24, **dadurch gekennzeichnet, dass** für Mineralstoffe, die kein Karbonat enthalten, der pH-Wert in Verlauf der Mahlvorgangs zwischen 6 und 13 liegt, bevorzugt zwischen 7,5 und 12 und besonders bevorzugt zwischen 8 und 10.

**27.** Die Verwendung der wässrigen Suspension mineralischer Stoffe gemäß einem der Ansprüche 1 bis 12 in den Bereichen Papier, Farben und Kunststoffe.

**28.** Die Verwendung der wässrigen Suspension mineralischer Stoffe gemäß einem der Ansprüche 1 bis 12 vor und nach dem Trocknen bzw. erneuten Dispergierung nach dem Trocknen in den Bereichen Papier und Farben und nach dem Trocknen auf dem Gebiet der Kunststoffe.

29. Die Verwendung der wässrigen Suspension mineralischer Stoffe gemäß einem der Ansprüche 1 bis 12 in einer Trockenmethode nach dem Mahlen.

30. Die Verwendung der wässrigen Suspension mineralischer Stoffe gemäß einem der Ansprüche 27 bis 29 in der Papierindustrie und insbesondere die Verwendung zur Beschichtung von Papier und/oder für die Oberflächenbehandlung des Papiers.

31. Die Verwendung der wässrigen Suspension mineralischer Stoffe gemäß einem der Ansprüche 27 bis 29 in der Papierindustrie und insbesondere die Verwendung als direkter Fullstoff bei der Herstellung der Papier-, der Papp- oder analoger Bögen oder als indirekter Fullstoff während der Herstellung der Papier-, der Papp- oder analoger Bögen, bei der Umsetzung des Recyclens von gestrichenen Ausschusspapieren

32. Papier- oder Pappbögen, die die wässrige Suspension mineralischer Stoffe gemäß einem der Ansprüche 1 bis 12, enthalten.

33. Die Verwendung der wässrigen Suspension mineralischer Stoffe gemäß einem der Ansprüche 27 bis 29 auf dem Gebiet der Kunststoffe, wie Polyolefinen niedriger Dichte (LLDPE) und hoher Dichte (HMW-HDPE) oder atmungsaktiven Membranen oder Polyvinylchloriden (PVC), und insbesondere auf dem Gebiet der Polyvinylchloride, wie Hart und Weich-PVC.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- FR 2488814
- FR 2603042
- EP 0100947 A
- EP 0100948 A
- EP 0129329 A
- EP 0542643 A
- EP 0542644 A
- FR 2810261


### Littérature non-brevet citée dans la description


- **Vollmert.** Outlines of macromolecular chemistry. Vollmert Verlag, 1985, vol. III